(19) Europäisches Patentamt
European Patent Office
Office européen des brevets

(11) EP 4 065 341 B1

(12) # EUROPÄISCHE PATENTSCHRIFT

(45) Veröffentlichungstag und Bekanntmachung des Hinweises auf die Patenterteilung:
**29.11.2023 Patentblatt 2023/48**

(21) Anmeldenummer: **21700016.5**

(22) Anmeldetag: **11.01.2021**

(51) Internationale Patentklassifikation (IPC):
***B29C 64/112*** *(2017.01)* ***B33Y 10/00*** *(2015.01)*
***B33Y 80/00*** *(2015.01)* ***B29C 64/106*** *(2017.01)*
***B29C 64/124*** *(2017.01)* ***B29D 11/00*** *(2006.01)*
***C09D 11/101*** *(2014.01)*

(52) Gemeinsame Patentklassifikation (CPC):
**B29C 64/112; B29D 11/00009; B33Y 10/00; C09D 11/101;** B29D 11/00865; B33Y 70/00

(86) Internationale Anmeldenummer:
**PCT/EP2021/050394**

(87) Internationale Veröffentlichungsnummer:
**WO 2021/140248 (15.07.2021 Gazette 2021/28)**

(54) **INKJET-VERFAHREN ZUR HERSTELLUNG EINES BRILLENGLASES**

INKJET METHOD FOR PRODUCING A SPECTACLE LENS

PROCÉDÉ À JET D’ENCRE POUR FABRIQUER UN VERRE DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.01.2020 EP 20151152**

(43) Veröffentlichungstag der Anmeldung:
**05.10.2022 Patentblatt 2022/40**

(73) Patentinhaber: **Carl Zeiss Vision International GmbH**
**73430 Aalen (DE)**

(72) Erfinder:
- **WEIPPERT, Hans-Joachim**
  **73431 Aalen (DE)**
- **KRIEG, Matthias**
  **89522 Heidenheim (DE)**
- **PÜTZ, Jörg**
  **73431 Aalen (DE)**

(74) Vertreter: **Carl Zeiss AG - Patentabteilung**
**Carl-Zeiss-Straße 22**
**73447 Oberkochen (DE)**

(56) Entgegenhaltungen:
**EP-A1- 2 093 269**
**CN-A- 107 641 200**
**US-A1- 2016 167 323**
**US-A1- 2018 354 249**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 065 341 B1

## Beschreibung

Die vorliegende Erfindung betrifft ein Inkjet-Verfahren zur Herstellung eines Brillenglases gemäß Anspruch 1.

Die Entwicklung kostengünstiger 3D-Druck-Systeme hat in den vergangenen Jahren zu einem Boom im Bereich der generativen Fertigung (englisch: Additive Manufacturing, AM) geführt. Mittlerweile lässt sich eine Vielzahl an Materialien für unterschiedlichste Anwendungen vom Designmuster bis hin zum Funktionsteil durch 3D-Druck gestalten.

Das Potential des 3D-Drucks von Optiken ergibt sich vor allem im Falle von individuellen Optiken und Optiken, die in kleinerer Stückzahl bzw. Losgröße gefertigt werden. Dies trifft insbesondere für Brillengläser zu, deren optische Korrektionswirkung für jeden Träger individuell ausgelegt wird. Andere Anwendungsbeispiele umfassen einfache bildgebende Optiken und lichtleitende Komponenten, die in ihrer Auslegung deutlich weniger anspruchsvoll sind.

Für Kunststoffe haben sich direkte Druckverfahren wie das Schmelzschichten (englisch: Fused Deposition Melting, FDM) sowie das selektive Laserschmelzen (englisch: Selective Laser Melting, SLM) etabliert, die thermoplastische Kunststoffe als Filament bzw. als Pulver verwenden. Daneben existieren zahlreiche Abwandlungen von diesen Verfahren, z.B. das System Freeformer der Firma Arburg GmbH + Co KG. Prozessbedingt gibt es bei diesen Verfahren ein erhöhtes Risiko von Lufteinschlüssen und/oder Inhomogenitäten sowie thermische Spannungen, so dass sie zur Fertigung von optischen Komponenten, insbesondere Brillengläsern, nicht oder nur bedingt in Frage kommen. Ein größeres Potential für optische Komponenten bieten reaktive Systeme, die als Monomer-Formulierung eingesetzt und dann erst in einem nachfolgenden Prozess unter Vernetzung polymerisiert werden. Neben der klassischen Stereolithographie (englisch: Stereolithography, SLA) und speziellen Belichtungsverfahren wie dem DLP (englisch: digital light processing), spielt hier vor allem das Inkjet-Verfahren (Multi Jet Modeling, MJM) eine Rolle. Bei den Inkjet-Systemen kommen meist sogenannte Drop-on-demand-Verfahren (DoD-Verfahren) auf der Basis der Piezo-Technologie zum Einsatz, bei der separate Tropfen bzw. Volumenelemente über einen Piezo-Aktuator mit Frequenzen im kHz-Bereich mit Hilfe einer Kapillare erzeugt werden. Für die Fertigung von Optikkomponenten bieten solche Reaktivsysteme aufgrund der chemischen Formulierungsbreite deutlich mehr Möglichkeiten hinsichtlich der Materialauslegung und Prozessgestaltung als die eingangs beschriebenen thermoplastischen Verfahren. Zur Erhöhung der Prozessgeschwindigkeit kommen in der Regel Multidüsen-Arrays sowie UV-härtende Systeme zum Einsatz, bei denen das Material nach dem Aufbringen einer Materiallage unter Belichtung ausgehärtet wird.

Beim Inkjet-Verfahren wird das Material zur Fertigung von optischen Komponenten in Form von kleinen Volumenelementen, welche jeweils oft auch mit dem aus der 3D-Bilddarstellung entlehnten Begriff "Voxel" bezeichnet werden, aufgebracht und bei einigen Varianten mit Hilfe einer Rakel zu einer dünnen Schicht verstrichen. Da diese meist als Volumenelement fest werden oder aushärten, besteht hierbei die Gefahr, dass es zur Grenzflächenbildung vor der Aufbringung des nächsten Volumenelements und zu anisotropen Eigenschaften der optischen Komponente kommt. Aus verschiedenen Gründen besitzen die Oberfläche eines ausgehärteten Volumenelements und das Innere eines Volumenelements unterschiedliche Materialeigenschaften, wodurch dann zu einem nachfolgenden Volumenelement eine Grenzfläche erzeugt wird, die dann wiederum fest in die optische Komponente eingebettet wird. Dieses Risiko besteht vor allem bei UV-härtenden Systemen, da deren Härtung in der Regel von der Oberfläche, von oben und/oder von unten, her erfolgt.

Für optische Komponenten ist es im Allgemeinen notwendig, ein homogenes Material im Sinne der optischen Eigenschaften zu erhalten. So sollten keine unerwünschten Brechungsindex-Variationen oder keine unerwünschten Grenzflächen im Volumen einer optischen Komponente enthalten sein, da es hierdurch zu Veränderungen im Strahlengang kommen kann. Dies kann sich als Verminderung der Abbildungsleistung, beispielsweise einer verminderten Linienauflösung, als anisotrope Lichtleitung oder als sichtbare Streuung äußern. Ebenso sind auch Einschlüsse, z.B. Luft, und andere Kontaminationen unbedingt zu vermeiden.

Durch die übliche Applikation der Volumenelemente im Inkjet-Verfahren kommt es zudem zu regelmäßen und/oder unregelmäßigen Strukturen in dem gedruckten Material in derselben Größenordnung wie die Größe der Volumenelemente, d.h. von etwa 5 $\mu$m bis 20 $\mu$m in der z-Richtung, und etwa 20 $\mu$m bis 200 $\mu$m lateral in x/y-Richtung. Je nach Auftrag bzw. Rasterung kann es zudem zu regelmäßigen Strukturen oder sogar weitläufigen Orientierungen kommen. Bei einigen der kommerziellen Verfahren, bei denen das neu hinzugefügte Material, beispielsweise neu hinzugefügte Volumenelemente, mit Hilfe einer Rakel oder einer Rolle zu Schichten verstrichen wird (EP1674243A2, EP1847377A2), kann ein deutlicher Lagenaufbau beobachtet werden und es können optische Orientierungen und/oder Vorzugsrichtungen, z.B. eine abweichende Transparenz parallel zur Lagenstruktur und orthogonal dazu, auftreten. Solche Effekte können zwar durch eine intelligente Positionierung der Volumenelemente verringert werden, lassen sich jedoch nur schwer vollständig eliminieren.

Ein weiterer Aspekt, der sich aus der Aufbringung diskreter Volumenelemente ergibt, ist eine unebene Oberfläche mit einer Oberflächentopographie in der Größenordnung der z-Höhe der Volumenelemente und häufig regelmäßige Strukturen. Dieses Phänomen lässt sich beispielsweise dadurch mindern, dass am Ende des Druckprozesses in definierter Weise die entstandenen Lücken gezielt mit kleineren Tropfen gefüllt werden (EP2846983A1) oder ein vollständiger, ausreichend dicker Flüssigkeitsfilm appliziert wird, der dann durch Verlaufen unter Ausnutzung der Oberflächenspannung eine glatte, nach außen hin homogene Oberfläche ergibt. Eine möglicherweise vorhandene Struktur im Volumen einer optischen Komponente wird hierdurch jedoch nicht eliminiert.

US 2016/0167323 A1 offenbart ein additives Herstellungsverfahren einer ophthalmischen Linse. Die für eine ophthalmische Linse erforderliche Homogenität soll während der Herstellung durch die Erhöhung der Viskosität der einzelnen Voxel und deren anschließende Diffusion ineinander gewährleistet werden. Die Erhöhung der Viskosität der einzelnen Voxel soll hierbei bewirken, dass diese an dem für sie vorgesehenen Ort verbleiben und ihre ausgewählte Geometrie beibehalten. Nach Diffusion der einzelnen Voxel ineinander soll eine homogene ophthalmische Linse entstehen. Die Erhöhung der Viskosität kann beispielsweise durch Photopolymerisation oder thermische Polymerisation einer flüssigen Zusammensetzung, welche wenigstens ein Monomer und/oder Oligomer umfassend wenigstens eine Epoxid-, Thioepoxid-, Epoxysilan-, (Meth)acrylat-, Vinyl-, Urethan-, Thiourethan-, Isocyanat-, Mercapto- oder Alkoholgruppe, und wenigstens einen Initiator enthält, erfolgen. Alternativ kann die Erhöhung der Viskosität nach der Voxelbildung durch Verdampfung einer flüssigen Zusammensetzung, welche wenigstens ein Monomer und/oder Oligomer umfassend wenigstens eine Epoxid-, Thioepoxid-, (Meth)acrylsäure oder (Meth)acrylatgruppe, wenigstens einen Initiator und ein Lösungsmittel enthält, erfolgen.

US 2004/0008319 A1 offenbart optische Elemente, welche einen kontinuierlichen Film aus aneinander angrenzenden Polymerpixeln umfassen. Die einzelnen Polymerpixel sollen eine bestimmte optische Eigenschaft, beispielsweise einen bestimmten Brechungsindex, aufweisen. Mit Hilfe eines Mikrojet-Verfahrens werden die einzelnen Polymerpixel an eine vorab festgelegte Stelle auf einem Substrat, beispielsweise einem Linsenrohling oder einem fertigen Brillenglas, aufgebracht. Zwei benachbarte Polymerpixel können sich hierbei zu einem einzelnen Pixel mischen. Um Streueffekte zu vermeiden, soll die mittlere Größe der Polymerpixel unter 200 $\mu$m liegen.

US 2005/0046957 A1 offenbart wie US 2004/0008319 A1 optische Elemente. Die Polymerzusammensetzungen, welche mit Hilfe des Mikrojet-Verfahrens als Polymerpixel auf eine vorab festgelegte Stelle auf einem Substrat aufgebracht werden, umfassen ein erstes En-Monomer und ein erstes Thiol-Monomer, welche zusammen einen Brechungsindex von 1,55 oder mehr aufweisen. Des Weiteren umfasst die Polymerzusammensetzung ein zweites En-Monomer und ein zweites Thiol-Monomer, welche zusammen einen Brechungsindex von 1,55 oder weniger aufweisen. Das Verhältnis der Polymerzusammensetzung mit dem höheren Brechungsindex zu der Polymerzusammensetzung mit dem niedrigeren Brechungsindex kann in einem Verhältnis von 0:100 bis 100:0 variiert werden.

US 2018/354249 A1 offenbart ein Verfahren für den Transfer eines Materials von einer Oberfläche auf eine andere Oberfläche. Das zu transferierende Material umfasst wenigstens teilweise eine UV härtbare Inkjet-Zusammensetzung, welche eine Thiol-Acrylat-Zusammensetzung, eine Thiol-En-Acrylat-Zusammensetzung oder eine Mischung hiervon umfasst. US 2018/354249 A1 beschäftigt sich nicht mit der Herstellung von Brillengläsern.

EP 2 093 269 A1 offenbart eine Verbindung, welche ihre Basizität unter Bestrahlung mit Licht entfaltet oder verstärkt. EP 2 093 269 A1 beschäftigt sich ebenfalls nicht mit der Herstellung von Brillengläsern.

Aufgabe der vorliegenden Erfindung war es, ein Verfahren für die Herstellung eines Brillenglases zur Verfügung zu stellen, welches die Herstellung eines Brillenglases mit den damit verbundenen Anforderungen an die optische Qualität eines Brillenglases, beispielsweise eines Brillenglases mit guter Abbildungsleistung, ermöglicht. Insbesondere soll das gleiche Verfahren die Herstellung eines Brillenglases mit einem einheitlichen Brechungsindex oder einem definierten Brechungsindexgradienten ermöglichen. Des Weiteren war es Aufgabe der Erfindung, ein für die Herstellung eines Brillenglases geeignetes Fluid zur Verfügung zu stellen.

Diese Aufgabe wurde gelöst durch die Bereitstellung eines Verfahrens gemäß Anspruch 1.

Bei der Herstellung eines Brillenglases ist es unabhängig von dessen Herstellungsverfahren unbedingt zu vermeiden, dass sich Strukturen, Grenzflächen, nicht beabsichtigte Variationen im Brechungsindex, nicht beabsichtigte Variationen in der Materialzusammensetzung, Einschlüsse und/oder Kontaminationen im Volumen und/oder auf einer Oberfläche des Brillenglases ausbilden. Das Tragen eines Brillenglases aus einem optisch nicht homogenen Material wird von einem Brillenträger in der Regel als störend oder unangenehm empfunden oder kann zu Unverträglichkeiten führen. Ein Brillenglas aus einem optisch nicht homogenen Material beeinträchtigt des Weiteren die optische Abbildungsleistung. Dies ist insbesondere dann der Fall, wenn sich das optisch nicht homogene Material im Fern-Durchblickpunkt und/oder im Nah-Durchblickpunkt eines Brillenglases befindet. Der Fern-Durchblickpunkt ist gemäß DIN EN ISO 13666:2013-10, Absatz 5.16, die angenommene Lage des Durchblickpunktes auf einem Brillenglas für das Sehen in die Ferne unter bestimmten Bedingungen, der Nah-Durchblickpunkt ist gemäß DIN EN ISO 13666:2013-10, Absatz 5.17, die angenommene Lage des Durchblickpunkts auf einem Brillenglas für das Sehen in die Nähe unter bestimmten Bedingungen.

Unter einem optisch homogenen Material im Sinne eines Brillenglases, nachfolgend "optisch homogenes Material" genannt, ist ein Material zu verstehen, welches bei visueller Beurteilung, insbesondere in Transmission oder in Reflexion, keine nicht beabsichtigten Variationen der Materialzusammensetzung oder des Brechungsindex, keine Grenzflächen, Fehlstellen und/oder Strukturen im Volumen, wie z.B. Schlieren, und/oder keine Grenzflächen, Fehlstellen und/oder Strukturen auf der Oberfläche eines Brillenglases umfasst. Unter einem optisch homogenen Material ist weiterhin ein Material zu verstehen, welches bei visueller Beurteilung vorzugsweise keine Streuung von Licht und/oder

vorzugsweise keine Abbildungsfehler aufweist. Bei der Streuung von Licht wird zwischen der Kleinwinkelstreuung und der Großwinkelstreuung unterschieden. Der hauptsächlich vorwärts gestreute Anteil des Lichts aufgrund von Streuung an kleinen Partikeln, an Variationen der Materialzusammensetzung oder des Brechungsindex, an Grenzflächen, an Fehlstellen und/oder an Strukturen auf einer der Oberflächen oder im Volumen des Brillenglases wird als Kleinwinkelstreuung bezeichnet. Bei der Kleinwinkelstreuung (Bildschärfe) wird das Licht innerhalb eines engen Kegels mit hoher Konzentration gestreut und die Bildschärfe in einem Winkelbereich kleiner 2,5° gemessen. Die Kleinwinkelstreuung wird bevorzugt gemäß der inzwischen zurückgezogenen DIN EN 167:1995, Absatz 4.2, in einem Radius aus einem Bereich von 1 mm bis 3 mm um den geometrischen Mittelpunkt des Brillenglases gemessen. Eine Kleinwinkelstreuung von bevorzugt $\leq$ 0,16 cd/m$^2$/lx, besonders bevorzugt $\leq$ 0,09 cd/m$^2$/lx und ganz besonders bevorzugt $\leq$ 0,05 cd/m$^2$/lxgilt im Rahmen dieser Erfindung als keine Streuung. Bei der Großwinkelstreuung wird Licht in alle Richtungen gleichmäßig gestreut. Die Großwinkelstreuung (Haze, Trübung) ist der Anteil des Lichts in Prozent, der im Mittel um mehr als 2,5° vom einfallenden Lichtstrahl abweicht. Die diffuse Streuung von Licht an Variationen der Materialzusammensetzung oder des Brechungsindex, an Grenzflächen, an Fehlstellen und/oder an Strukturen auf einer der Oberflächen oder im Volumen des Brillenglases wird bevorzugt mit Hilfe einer Ulbrichtkugel gemessen. Die Großwinkelstreuung wird bevorzugt mit dem Gerät haze-gard plus der Firma Byk Gardner ohne Kompensation in einem Radius aus einem Bereich von 15 mm bis 20 mm um den geometrischen Mittelpunkt des Brillenglases gemessen. Eine Großwinkelstreuung von bevorzugt $\leq$ 1,01, besonders bevorzugt von $\leq$ 0,98 und ganz besonders bevorzugt von $\leq$ 0,54 gilt im Rahmen dieser Erfindung als keine Streuung. Ein optisch homogenes Material beeinträchtigt die optische Abbildungsleistung nicht oder in einem vom menschlichen Auge nicht wahrnehmbaren Umfang. Die Abbildungsleistung eines Brillenglases lässt sich zum Beispiel über die Modulationstransferfunktion (englisch: Modulation Transfer Function, MTF) beschreiben und bestimmen.

Die objektive Beurteilung des optisch homogenen Materials erfolgt bevorzugt analog dem in WO 2005/017482 A1, besonders bevorzugt analog dem in WO 2005/017482 A1, Anspruch 1, für das Sichtbarmachen von Signierzeichen beschriebenen Verfahren. Hierzu wird bevorzugt ein Beleuchtungslichtstrahl auf das Brillenglas gerichtet, der das Brillenglas durchläuft, nach dem Durchlaufen des Brillenglases an einem als Retroreflektor ausgebildeten Reflektor reflektiert wird, und schließlich als Beobachtungs-Lichtstrahl einer Kamera zugeleitet wird. Variationen im Brechungsindex Fehlstellen, Grenzflächen, Strukturen im Volumen und/oder auf der Oberfläche des Brillenglases führen in der Regel zu einer Ablenkung des Strahlengangs, wodurch das reflektierte Licht nicht mehr die Retroreflexbedingung erfüllt. Variationen in der Materialzusammensetzung oder der Materialeigenschaften können auf diese Weise beispielsweise als Schlieren oder Schatten sichtbar gemacht werden, während Fehlstellen, Grenzflächen, Strukturen im Volumen und/oder auf der Oberfläche des Brillenglases als hellere oder dunklere Strukturen auftreten können.

Ein optisch homogenes Material weist somit eben keine Strukturen, Grenzflächen, nicht beabsichtigte Variationen im Brechungsindex, nicht beabsichtigte Variationen in der Materialzusammensetzung, Einschlüsse und/oder Kontaminationen im Volumen des Materials und/oder auf dessen Oberfläche auf. Zu den Oberflächen eines Brillenglases gehören die Vorderfläche oder objektseitige Fläche, welche gemäß DIN EN ISO 13666:2013-10, Absatz 5.8, die Fläche eines Brillenglases ist, die bestimmungsgemäß in der Brille vom Auge abgewandt liegt, die Rückfläche oder augenseitige Fläche, welche gemäß DIN EN ISO 13666:2013-10, Absatz 5.9, die Fläche eines Brillenglases ist, die bestimmungsgemäß in der Brille dem Auge zugewandt liegt und die zwischen der Vorderfläche und Rückfläche liegende Randfläche oder die Facette. Die Vorderfläche, die Rückfläche und die Randfläche oder die Facette eines Brillenglases, welche jeweils eine Grenzfläche zu Luft oder zu einer jeweils daran angrenzenden Beschichtung darstellen können, sind keine Grenzflächen im Sinne dieser Erfindung. Bei einer Ausführungsform kann es sich bei dem Brillenglas um eine Datenbrille handeln. In diesem Fall kann die Randfläche oder die Facette zumindest teilweise beispielsweise auch als Einkoppelfläche ausgebildet sein und gegebenenfalls eine optische Wirkung aufweisen. Diese stellt dann hier eine Grenzfläche dar.

Unter einer Grenzfläche im Sinne der Erfindung ist die sich zwischen wenigstens zwei benachbart aufgebrachten und/oder aneinander angrenzenden Volumenelementen ausbildende Fläche zu verstehen, die beispielsweise infolge des Herstellungsprozesses Abweichungen in der Materialzusammensetzung und/oder den Materialeigenschaften gegenüber wenigstens einem der angrenzenden Volumenelemente aufweist. Unter einer Grenzfläche ist auch die sich zwischen wenigstens zwei benachbart aufgebrachten und/oder aneinander angrenzenden Volumenverbunden ausbildende Fläche zu verstehen, die beispielsweise infolge des Herstellungsprozesses Abweichungen in der Materialzusammensetzung und/oder den Materialeigenschaften gegenüber wenigstens einem der angrenzenden Volumenverbunde aufweist. Unter einer Grenzfläche ist weiterhin die sich zwischen wenigstens einem Volumenelement und wenigstens einem Volumenverbund ausbildende Fläche zu verstehen, die beispielsweise infolge des Herstellungsprozesses Abweichungen in der Materialzusammensetzung und/oder den Materialeigenschaften gegenüber wenigstens einem Volumenelement und/oder gegenüber wenigstens einem Volumenverbund aufweist. Die jeweiligen Abweichungen in der Materialzusammensetzung und/oder den Materialeigenschaften können sich beispielsweise in einem unterschiedlichen Brechungsindex, einer unterschiedlichen Dispersion oder in unterschiedlichen Streu- und/oder Absorptionseigenschaften des Brillenglases äußern. In Folge derartiger Grenzflächen kann es somit im Volumen eines Brillenglases zu wenigstens einer unerwünschten optischen Eigenschaft kommen. Bei dem vorstehend genannten Volumenverbund kann

es sich alternativ um einen homogenen Volumenverbund handeln, bei welchem sich durch die abgeschlossene Reaktion innerhalb dieses homogenen Volumenverbunds zwischen diesem und wenigstens einem benachbart aufgebrachten und/oder angrenzenden Volumenelement und/oder Volumenverbund und/oder homogenen Volumenverbund eine Grenzfläche ausbilden kann. Bei dem Volumenverbund kann es sich alternativ weiterhin auch um einen finalen Volumenverbund handeln, zwischen welchem sich durch Nicht-Übertragung der Reaktivität eine Grenzfläche zu wenigstens einem benachbart aufgebrachten und/oder angrenzenden Volumenelement und/oder Volumenverbund und/oder homogenen Volumenverbund ausbilden kann.

Unter einer Struktur im Sinne der Erfindung ist eine Anordnung von aneinanderhängenden Volumenelementen und/oder Volumenverbunden und/oder homogenen Volumenverbunden und/oder finalen Volumenverbunden und den sich jeweils dazwischen ausgebildeten Grenzflächen zu verstehen. Bei einer Struktur kann es sich um eine regelmäßige Struktur oder um eine unregelmäßige Struktur, jeweils an und/oder auf einer der Oberflächen und/oder im Volumen eines Brillenglases handeln. Unter einer Struktur ist weiterhin eine übergeordnete Ordnungseinheit oder eine übergeordnete Ordnung zu verstehen, welche durch Überlagerung identischer oder voneinander verschiedener Strukturen entsteht. Durch Überlagerung identischer oder voneinander verschiedener regelmäßiger Strukturen können beispielsweise Moiré-Strukturen an und/oder auf einer der Oberflächen eines Brillenglases und/oder im Volumen eines Brillenglases ausgebildet werden. Übergeordnete Strukturen an und/oder auf einer der Oberflächen eines Brillenglases und/oder im Volumen eines Brillenglases können beispielsweise auch aus der lagenweisen Aufbringung der Volumenelemente resultieren. Welligkeiten oder Strukturen im Zusammenhang mit dem Orangenschaleneffekt sind weitere Beispiele von Strukturen, welche sich an und/oder auf einer der Oberflächen eines Brillenglases ausbilden können.

Für die additive Herstellung eines Brillenglases mittels eines Inkjet-Verfahrens, bei welchem das zu verdruckende Fluid in Form von Volumenelementen auf ein zu bedruckendes Substrat aufgebracht wird, sind durch Volumenelemente bedingte Grenzflächen und/oder Strukturen im Volumen des Brillenglases zu vermeiden. Als eine Möglichkeit hierfür ist eine Verringerung der Größe der Volumenelemente denkbar, so dass selbst bei der Ausbildung von durch Volumenelemente bedingten Grenzflächen und/oder Strukturen im Volumen des Brillenglases diese nicht zu störenden optischen Eigenschaften, wie z.B. zu Streuung, führen und/oder unterhalb des Auflösungsvermögens des menschlichen Auges liegen und somit von einem Brillenträger gar nicht erst wahrgenommen werden. Jedoch gibt es hierbei zwei Limitierungen, die druckbare Größe der Volumenelemente und die daraus resultierende Druckrate. Bedingt durch die Art der Erzeugung der Volumenelemente, d.h. beispielsweise mittels Piezoaktuatoren über eine Kapillare, stoßen die Größe und damit das Volumen der Volumenelemente an physikalische Grenzen. Die kleinsten Größen von Volumenelementen industriell nutzbarer Inkjet-Druckköpfe liegen derzeit bei etwa 1 pL, was einem Durchmesser der Volumenelemente von 12,4 $\mu$m bzw. einer Kantenlänge von 10 $\mu$m entspricht. Bei einer Größe der Volumenelemente von 1 pL und einer Frequenz von typischerweise 10 kHz lässt sich mit einer einzelnen Düse ein Materialvolumen von $10^{-5}$ $cm^3/s$ verdrucken, d.h. für ein typisches Brillenglas mit einem Volumen von etwa 5 $cm^3$ werden $5 \times 10^5$ s bzw. 833 min benötigt. Mit Hilfe eines üblichen Arrays mit 256 Düsen verringert sich zwar die reine Druckzeit auf 3 bis 4 min, jedoch muss auch die Zeit für die Bewegung des Druckkopfes bzw. des Substrates, die zwischenzeitliche Härtung, beispielsweise die zwischenzeitliche UV-Härtung, mitberücksichtigt werden. Der Inkjet-Druck eines Brillenglases benötigt unter Laborbedingungen daher typischerweise etwa 1 h.

Die wirkungsvolle Vermeidung optischer Einflüsse durch Grenzflächen und/oder Strukturen im Volumen eines Brillenglases ist bei refraktiven Effekten erst unterhalb 1 $\mu$m zu erwarten, bei diffraktiven und dispersen Effekten hingegen erst deutlich unterhalb 100 nm. Für eine solche Verringerung der Strukturgrößen um den Faktor 10 bis 100 müsste die Größe der Volumenelemente im Inkjet-Verfahren auf etwa 1 fL bzw. 1 aL verkleinert werden. Dies lässt sich mit den aktuell kommerziell zur Verfügung stehenden Inkjet-Druckköpfen jedoch nicht realisieren, zudem würden die Druckzeiten um denselben Faktor $10^3$ bzw. $10^6$ anwachsen, identische Druckkopfgeometrie und identische Düsenanzahl vorausgesetzt. Die physikalische Limitierung ist prinzipieller Natur und ergibt sich wesentlich aus akustischen und fluiddynamischen Parametern, die der Bildung der Tropfen bzw. der Volumenelemente zugrunde liegen, insbesondere der Schallausbreitungsgeschwindigkeit, der Rheologie und der Oberflächenspannung der im Inkjet-Verfahren zu verdruckenden Fluide.

Der Ansatz einer Verkleinerung der Größe der Volumenelemente in Druckverfahren zur Vermeidung von Grenzflächen und/oder Strukturen im Volumen eines Brillenglases ist daher aus den oben genannten Gründen nicht zielführend und zudem begrenzt durch physikalische Gegebenheiten. Andererseits hätte eine Vergrößerung der Volumenelemente zwar gegebenenfalls die Vorteile, dass sowohl die Applikationsgeschwindigkeit als auch die Viskosität der Volumenelemente erhöht werden könnte. Allerdings hätte eine Vergrößerung der Volumenelemente den Nachteil, dass die Auflösung in dem gedruckten Gegenstand deutlich verringert werden würde, was sich bei der Herstellung bestimmter Brillengläser einschränkend auswirken kann. Eine Vergrößerung der Volumenelemente hat beispielsweise die Einschränkung, dass ein mittels Inkjet-Verfahren herzustellendes Brillenglas, bei dem jedes Volumenelement an einer bestimmten Position eine bestimmte Eigenschaft aufweisen soll, nicht mit dem für dieses Brillenglas berechneten und/oder mit der für dieses Brillenglas vorab festgelegten Eigenschaft in der gewünschten Auflösung herzustellen ist. Jedes Volumenelement mit einer bestimmten Eigenschaft an einer bestimmten Position zu platzieren ist eine Voraussetzung für den Druck von Brillengläsern mit ortsabhängiger Brechungsindexverteilung. Je kleiner hierbei die Größe des Volumenelements ist, desto höher ist dann wiederum die Auflösung und desto steilere Gradienten lassen sich zum Beispiel so realisieren. Beispielsweise ist zur Erzielung eines Brechungsindexgradienten von $\Delta n = 10^{-3}$ / mm ein Volumenelement in der Größenordnung von 10 $\mu$m Durchmesser erforderlich, wenn man von zwei zu mischenden Fluiden mit einem maximalen Brechungsindexunterschied ausgeht. Der Durchmesser des Volumenelements ist hierbei dessen Durchmesser während des Flugs, vor dem Auftreffen auf das Substrat. Zu den vorab festgelegten ortsabhängigen Eigenschaften eines Brillenglases kann beispielsweise der Brechungsindex, die Zusammensetzung des aufzubringenden Fluids und/oder des Materials des Brillenglases gehören. Da, wie vorstehend erörtert, eine zunehmende Verkleinerung der Größe der Volumenelemente an ihre physikalischen, technischen und wirtschaftlichen Grenzen stößt und eine zunehmende Vergrößerung der Größe der Volumenelemente mit einer für ein Brillenglas unerwünschten Verringerung der Auflösung verbunden ist, wird erfindungsgemäß vorgeschlagen, die mittels eines Inkjet-Verfahrens auf ein zu bedruckendes Substrat oder ein wieder zu entfernendes Stützmaterial aufgebrachten Volumenelemente zunächst vollständig in einen Volumenverbund, weiter in einen homogenen Volumenverbund und anschließend in einen finalen Volumenverbund zu überführen. Ein Volumenverbund umfasst wenigstens zwei aneinander angrenzende und/oder benachbart aufgebrachte Volumenelemente. Ein Volumenverbund umfasst auch wenigstens zwei aneinander angrenzende und/oder benachbart aufgebrachte Volumenverbunde. Ein Volumenverbund umfasst des Weiteren wenigstens ein Volumenelement und/oder wenigstens einen angrenzenden und/oder benachbart aufgebrachten Volumenverbund. Ein Volumenverbund entsteht durch das Zusammenfließen, die Verbindung, die Benetzung und/oder den Kontakt aneinander angrenzender und/oder benachbart aufgebrachter Volumenelemente. Ein Volumenverbund entsteht auch durch das Zusammenfließen, die Verbindung, die Benetzung und/oder den Kontakt wenigstens zweier aneinander angrenzender und/oder benachbart aufgebrachter Volumenverbunde. Ein Volumenverbund entsteht weiterhin durch das Zusammenfließen, die Verbindung, die Benetzung und/oder den Kontakt wenigstens eines Volumenelements und wenigstens eines angrenzenden und/oder benachbart aufgebrachten Volumenverbunds. In einem wenigstens zwei Volumenelemente umfassenden Volumenverbund hat die Reaktion innerhalb des wenigstens einen Volumenelements und/oder zwischen den wenigstens zwei aneinander angrenzenden und/oder benachbart aufgebrachten Volumenelementen noch nicht begonnen. In einem wenigstens zwei Volumenverbunde umfassenden Volumenverbund hat auch die Reaktion innerhalb wenigstens eines Volumenverbunds und/oder zwischen wenigstens zwei aneinander angrenzenden und/oder benachbart aufgebrachten Volumenverbunden noch nicht begonnen. In einem wenigstens ein Volumenelement und wenigstens einen Volumenverbund umfassenden Volumenverbund hat weiterhin die Reaktion innerhalb wenigstens eines Volumenelements und/oder zwischen dem wenigstens einen Volumenelement und dem wenigstens einem Volumenverbund und/oder innerhalb des wenigstens einen Volumenverbunds noch nicht begonnen.

Ein homogener Volumenverbund umfasst wenigstens einen Volumenverbund, in welchem die Reaktion innerhalb wenigstens eines Volumenelements und/oder zwischen wenigstens zwei aneinander angrenzenden und/oder benachbart aufgebrachten Volumenelementen nicht vollständig abgeschlossen ist. Ein homogener Volumenverbund umfasst auch einen Volumenverbund, in welchem die Reaktion innerhalb wenigstens eines Volumenverbunds und/oder zwischen wenigstens zwei aneinander angrenzenden und/oder benachbart aufgebrachten Volumenverbunden nicht vollständig abgeschlossen ist. Ein homogener Volumenverbund umfasst weiterhin einen Volumenverbund, in welchem die Reaktion innerhalb wenigstens eines Volumenelements und zwischen dem wenigstens einen Volumenelement und wenigstens einem angrenzenden und/oder benachbart aufgebrachten Volumenverbund und innerhalb dieses wenigstens einen Volumenverbunds jeweils nicht vollständig abgeschlossen ist. In einem homogenen, wenigstens zwei Volumenelemente umfassenden Volumenverbund wurde des Weiteren die Reaktivität noch nicht zwischen wenigstens zwei aneinander angrenzenden und/oder benachbart aufgebrachten Volumenelementen übertragen. In einem homogenen, wenigstens zwei Volumenverbunde umfassenden Volumenverbund wurde die Reaktivität auch noch nicht innerhalb des wenigstens einen Volumenverbunds und/oder zwischen wenigstens zwei aneinander angrenzenden und/oder benachbart aufgebrachten Volumenverbunden übertragen. In einem homogenen, wenigstens ein Volumenelement und wenigstens einen Volumenverbund umfassenden Volumenverbund wurde die Reaktivität weiterhin noch nicht innerhalb wenigstens eines Volumenverbunds und zwischen dem wenigstens einen Volumenverbund und dem wenigstens einen Volumenelement übertragen. Auch wurde in einem homogenen, wenigstens ein Volumenelement und wenigstens einen Volumenverbund umfassenden Volumenverbund die Reaktivität noch nicht innerhalb des wenigstens einen Volumenelements übertragen. In einem homogenen, wenigstens ein Volumenelement und wenigstens einen Volumenverbund umfassenden Volumenverbund wurde die Reaktivität noch nicht von dem wenigstens einen Volumenelement auf den wenigstens Volumenverbund übertragen.

Ein finaler Volumenverbund umfasst wenigstens einen homogenen Volumenverbund, in welchem die Reaktion innerhalb wenigstens eines Volumenelements und zwischen wenigstens zwei aneinander angrenzenden und/oder benachbart aufgebrachten Volumenelementen vollständig abgeschlossen ist. Ein finaler Volumenverbund umfasst auch einen homogenen Volumenverbund, in welchem die Reaktion innerhalb wenigstens eines homogenen Volumenverbunds und zwischen wenigstens zwei aneinander angrenzenden und/oder benachbart aufgebrachten homogenen Volumenverbunden vollständig abgeschlossen ist. Ein finaler Volumenverbund umfasst weiterhin einen homogenen Volumenverbund, in welchem die Reaktion innerhalb wenigstens eines Volumenelements und zwischen wenigstens einem Volumenelement und wenigstens einem angrenzenden und/oder benachbart aufgebrachten homogenen Volumenverbund und innerhalb des wenigstens einen homogenen Volumenverbunds jeweils vollständig abgeschlossen ist. In einem finalen Volumenverbund, welcher aus einem wenigstens zwei Volumenelemente umfassenden homogenen Volumenverbund entsteht, wurde die Reaktivität von wenigstens einem Volumenelement auf wenigstens ein angrenzendes und/oder benachbart aufgebrachtes Volumenelement übertragen. In einem finalen Volumenverbund, welcher aus einem wenigstens zwei homogene Volumenverbunde umfassenden homogenen Volumenverbund entsteht, wurde die Reaktivität auch von wenigstens einem homogenen Volumenverbund auf wenigstens einen angrenzenden und/oder benachbart aufgebrachten homogenen Volumenverbund übertragen. In einem finalen Volumenverbund wurde die Reaktivität weiterhin von wenigstens einem Volumenelement auf wenigstens einen angrenzenden und/oder benachbart aufgebrachten homogenen Volumenverbund übertragen. In einem finalen Volumenverbund wurde die Reaktivität weiterhin von wenigstens einem homogenen Volumenverbund auf wenigstens ein angrenzendes und/oder benachbart aufgebrachtes Volumenelement übertragen. Entsteht ein finaler Volumenverbund aus wenigstens zwei aneinander angrenzenden und/oder benachbart aufgebrachten homogenen Volumenverbunden, ist die Reaktion innerhalb dieser wenigstens zwei homogenen Volumenverbunde und zwischen diesen wenigstens zwei homogenen Volumenverbunden jeweils vollständig abgeschlossen. Des Weiteren wurde die Reaktivität von dem wenigstens einen homogenen Volumenverbund auf den angrenzenden und/oder benachbart aufgebrachten wenigstens zweiten homogenen Volumenverbund übertragen. Entsteht ein finaler Volumenverbund aus wenigstens einem homogenen Volumenverbund und wenigstens einem angrenzenden und/oder benachbart aufgebrachten Volumenelement, ist die Reaktion innerhalb des wenigstens einen homogenen Volumenverbunds, innerhalb des wenigstens einen Volumenelements und zwischen dem wenigstens einen homogenen Volumenverbund und dem angrenzenden und/oder benachbart aufgebrachten Volumenelement jeweils vollständig abgeschlossen. Die Reaktivität wurde entweder von dem wenigstens einen homogenen Volumenverbund auf das wenigstens eine angrenzende und/oder benachbart aufgebrachte Volumenelement oder von dem wenigstens einen Volumenelement auf den wenigstens einen angrenzenden und/oder benachbart aufgebrachten homogenen Volumenverbund übertragen.

In den vorstehenden Ausführungen zu "Volumenverbund", "homogener Volumenverbund" und "finaler Volumenverbund" können die genannten Alternativen einzeln oder in Kombination jeweils zur Ausbildung eines Volumenverbunds, eines homogenen Volumenverbunds oder eines finalen Volumenverbunds führen.

Unter benachbart aufgebrachten Volumenelementen sind Volumenelemente zu verstehen, welche in x/y-Richtung nebeneinander und in z-Richtung übereinander aufgebracht werden. Benachbart aufgebrachte Volumenelemente können in z-Richtung direkt übereinander oder in x/y-Richtung versetzt vorliegen. Unter benachbart aufgebrachten Volumenelementen sind auch Volumenelemente zu verstehen, welche unabhängig von einer x/y-Richtung oder unabhängig von einer z-Richtung in einer beliebigen Richtung benachbart aufgebracht werden. Die Volumenelemente können regelmäßig oder statistisch verteilt benachbart aufgebracht werden. Die Volumenelemente können auch innerhalb einer Lage von benachbart aufgebrachten Volumenelementen regelmäßig oder statistisch verteilt benachbart aufgebracht werden. Die Volumenelemente können weiterhin derart benachbart aufgebracht werden, dass sie regelmäßig oder statistisch verteilt, aber dennoch benachbart zwischen zwei Lagen von benachbart aufgebrachten Volumenelementen vorliegen. Benachbart aufgebrachte Volumenelemente können ohne Zwischenraum direkt aneinander angrenzen, müssen dies aber nicht.

Unter aneinander angrenzenden oder angrenzenden Volumenelementen sind Volumenelemente zu verstehen, welche benachbart aufgebracht werden. Benachbart aufgebrachte Volumenelemente können hierbei in jeder beliebigen Richtung aneinander angrenzen und/oder zusammenfließen. Unter aneinander angrenzenden Volumenelementen sind weiterhin Volumenelemente zu verstehen, welche in x/y-Richtung teilweise überlappend aufgebracht werden. In z-Richtung können aneinander angrenzende Volumenelemente direkt übereinander oder in x/y-Richtung versetzt aufgebracht werden. Direkt übereinander oder in x/y-Richtung versetzt aufgebrachte Volumenelemente können in jeder beliebigen Richtung mit wenigstens einem weiteren Volumenelement zusammenfließen, sich in jeder beliebigen Richtung mit wenigstens einem weiteren Volumenelement verbinden und/oder in Kontakt treten. Aneinander angrenzende Volumenelemente weisen nach dem Zusammenfließen, der Verbindung, und/oder dem Kontakt keinen Zwischenraum zwischen den Volumenelementen auf. Abhängig von der Größe der Volumenelemente und dem Druckraster wird der Kontaktwinkel des wenigstens einen Volumenelements auf der nicht ausgehärteten oder der teilweise ausgehärteten Oberfläche vorzugsweise so eingestellt, dass die aneinander angrenzenden und/oder benachbart aufgebrachten Volumenelemente sich überlappen und es zu einer Koaleszenz kommt. Hierfür wird die Oberflächenspannung des wenigstens einen Volumenelements bevorzugt hinreichend klein gewählt, mit typischen Werten im Bereich von bevorzugt $<30$ mN/m, weiter bevorzugt aus einem Bereich von 20 mN/m bis 25 mN/m.

Vorstehende Definitionen für benachbart aufgebrachte Volumenelemente und für aneinander angrenzende oder angrenzende Volumenelemente sind analog auf benachbart aufgebrachte und aneinander angrenzende oder angrenzende Volumenverbunde und/oder homogene Volumenverbunde und/oder finale Volumenverbunde anzuwenden. Weiterhin sind vorstehende Definitionen auch dann anzuwenden, wenn ein Volumenelement und ein Volumenverbund und/oder ein homogener Volumenverbund und/oder ein finaler Volumenverbund bzw. ein Volumenverbund und ein homogener Volumenverbund und/oder ein finaler Volumenverbund benachbart aufgebracht oder aneinander angrenzend oder angrenzend sind.

Unter einer Lage ist eine Anordnung aneinander angrenzender und/oder benachbart aufgebrachter Volumenelemente zu verstehen, welche sich planparallel zur bedruckenden Oberfläche befindet. Die Volumenelemente können hierbei die zu bedruckende Oberfläche vollständig oder nur partiell belegen.

Ein Volumenelement oder ein Volumenverbund oder ein homogener Volumenverbund oder ein finaler Volumenverbund ist vollständig ausgehärtet im Sinne der eingesetzten oder möglichen Polymerisationsreaktion, wenn es auch bei längerer Reaktionszeit und/oder bei fortgesetzter Aktivierung zu keiner weiteren Polymerisationsreaktion kommt. Dies bedeutet nicht zwangsläufig, dass es hierbei zu einer 100 %igen Umsetzung der an der Polymerisationsreaktion beteiligten reaktiven Gruppen kommen muss.

Eine Reaktion wird als nicht vollständig abgeschlossen betrachtet, wenn die Reaktion, beispielsweise eine Polymerisationsreaktion, bei längerer Reaktionszeit und/oder bei fortgesetzter Aktivierung und/oder bei Wiederaufnahme der Reaktionsbedingungen fortschreitet.

Bei einer planen zu bedruckenden Oberfläche, beispielsweise einem planen Substrat bzw. bei einer plan aufgebrachten Lage von Volumenelementen, ist die x-Richtung orthogonal zur Druckrichtung parallel zur bedruckenden Oberfläche definiert. Die y-Richtung ist hier als Druckrichtung definiert. Die y-Richtung ist also diejenige Richtung, in welcher wenigstens ein Druckkopf bzw. eine Druckkopfanordnung bewegt wird. Zur Erhöhung der Druckauflösung oder des Druckbereichs kann es zudem notwendig sein, den Druckkopf bzw. die Druckkopfanordnung orthogonal zur Druckrichtung zu versetzen. Die z-Richtung ist bei einer planen zu bedruckenden Oberfläche als die Richtung definiert, die orthogonal zur x- und y-Richtung liegt. Mit plan ist in Zusammenhang mit der zu bedruckenden Oberfläche gemeint, dass diese Oberfläche keine Krümmung im makroskopischen Bereich aufweist. Bei einer gekrümmten zu bedruckenden Oberfläche, beispielsweise einem konvexen oder konkaven Substrat oder wenigstens einer, auf einem konvexen oder konkaven Substrat, aufgebrachten Lage von Volumenelementen, ist die x-Richtung auch hier orthogonal zur Druckrichtung der zur bedruckenden Oberfläche und parallel zur Düsenplatte des Druckkopfs definiert. Die y-Richtung ist auch hier als Druckrichtung definiert, für welche vorstehende, zur planen Oberfläche gemachte Ausführungen ebenfalls zutreffen. Die z-Richtung ist bei einer gekrümmten Oberfläche als diejenige Richtung definiert, welche orthogonal zu der durch die x,y-Richtung aufgespannten Ebene steht. Vorstehende Definitionen für die x-, y- und z-Richtung bei einer planen oder einer gekrümmten Oberfläche schließen nicht aus, dass das zu bedruckende Substrat in x-Richtung und/oder in y-Richtung zusätzlich oder alternativ zur Bewegung wenigstens eines Druckkopfes bzw. einer Druckkopfanordnung bewegt wird. Auch ist die Bewegung nicht rein auf die x- oder y-Richtung beschränkt, sondern kann auch aus einer Überlagerung der beiden Richtungen, z.B. diagonal oder durch Drehung, bestehen. Die Bewegung kann darüber hinaus auch die z-Richtung mit einbeziehen.

Die Überführung der aufgebrachten Volumenelemente in einen Volumenverbund, weiter in einen homogenen Volumenverbund und anschließend in einen finalen Volumenverbund verhindert, dass zwischen benachbart aufgebrachten und/oder zwischen aneinander angrenzenden Volumenelementen durch Volumenelemente bedingte Grenzflächen und/oder Strukturen im Volumen eines Brillenglases entstehen. Diese Grenzflächen und/oder Strukturen wiederum können zu unerwünschten optischen Effekten führen. Die Überführung der aufgebrachten Volumenelemente in einen Volumenverbund, weiter in einen homogenen Volumenverbund und anschließend in einen finalen Volumenverbund erfolgt hierbei bevorzugt nicht nur lateral in x/y-Richtung, sondern auch in z-Richtung. Die y-Richtung beschreibt hierbei im Inkjet-Verfahren die Druckrichtung (englisch: printing direction), während die x-Richtung die sogenannte Versatz-Richtung (englisch: stepping direction) bezeichnet, in der der Druckkopf bzw. das Substrat bzw. das Stützmaterial seitlich versetzt wird. Die z-Richtung definiert die hierzu orthogonale Richtung, in der der Höhenaufbau erfolgt. Die Überführung der aufgebrachten Volumenelemente in einen Volumenverbund, weiter in einen homogenen Volumenverbund und anschließend in einen finalen Volumenverbund kann beispielsweise zunächst lateral zwischen in x/y-Richtung benachbart aufgebrachten und/oder aneinander angrenzenden Volumenelementen unter Ausbildung eines Volumenverbunds, vorzugsweise unter Ausbildung eines flächigen Volumenverbunds, erfolgen. Anschließend kann der so in x/y-Richtung entstandene Volumenverbund durch in z-Richtung aufgebrachte Volumenelemente erweitert, weiter in einen homogenen Volumenverbund und anschließend in einen finalen Volumenverbund überführt werden. Unterstützt werden kann die Ausbildung eines Volumenverbunds und/oder eines homogenen Volumenverbunds beispielsweise durch die kinetische Energie sowie die räumliche und zeitliche Anordnung der jeweils in z-Richtung auftreffenden Volumenelemente. Die Erweiterung eines in x/y-Richtung entstandenen Volumenverbunds V oder eines in x/y-Richtung entstandenen homogenen Volumenverbunds $V_h$ kann hierbei folgende Varianten umfassen:

a) die Integration von in z-Richtung aufgebrachten Volumenelementen in einen in x/y-Richtung vorhandenen Volumenverbund V oder in einen in x/y-Richtung vorhandenen homogenen Volumenverbund $V_h$ oder

b) die laterale Überführung in x/y-Richtung von in z-Richtung auf einen bereits in x/y-Richtung vorhandenen Volumenverbund V oder auf einen bereits in x/y-Richtung vorhandenen homogenen Volumenverbund $V_h$ aufgebrachten

Volumenelementen in einen weiteren Volumenverbund V1 oder in einen weiteren homogenen Volumenverbund $V_h1$ und dessen anschließende Integration in einen bereits in x/y-Richtung vorhandenen Volumenverbund V oder in einen bereits in x/y-Richtung vorhandenen homogenen Volumenverbund $V_h$ oder

c) die Integration von in z-Richtung aufgebrachten Volumenelementen in einen in x/y-Richtung vorhandenen Volumenverbund V oder in einen in x/y-Richtung vorhandenen Volumenverbund $V_h$ und die gleichzeitige Überführung von in z-Richtung aufgebrachten Volumenelementen in einen Volumenverbund V1 oder in einen homogenen Volumenverbund $V_h1$.

Der jeweils erhaltene Volumenverbund V wird in einen homogenen Volumenverbund $V_h$ und anschließend in einen finalen Volumenverbund überführt.

Der jeweils erhaltene homogene Volumenverbund $V_h$ wird anschließend in einen finalen Volumenverbund überführt.

Bevorzugt erfolgt die Erweiterung eines in x/y-Richtung entstandenen Volumenverbunds V oder eines in x/y-Richtung entstandenen homogenen Volumenverbunds $V_h$ durch die Integration von in z-Richtung aufgebrachten Volumenelementen in den in x/y-Richtung bereits vorhandenen Volumenverbund V oder in den in x/y-Richtung bereits vorhandenen homogenen Volumenverbund $V_h$. In vorstehend genannten Fällen a) bis c) ist auch eine gleichzeitige Anwesenheit eines Volumenverbunds V und eines homogenen Volumenverbunds $V_h$ möglich.

Alternativ kann die Überführung der aufgebrachten Volumenelemente in einen Volumenverbund, weiter in einen homogenen Volumenverbund und anschließend in einen finalen Volumenverbund zunächst in z-Richtung zwischen benachbart aufgebrachten und/oder aneinander angrenzenden Volumenelementen erfolgen. Unterstützt werden kann auch diese Ausbildung eines Volumenverbunds und/oder eines homogenen Volumenverbunds beispielsweise durch die kinetische Energie sowie die räumliche und zeitliche Anordnung der jeweils in z-Richtung auftreffenden Volumenelemente. Anschließend kann der so in z-Richtung entstandene Volumenverbund durch in x/y-Richtung aufgebrachte Volumenelemente erweitert, weiter in einen homogenen Volumenverbund und anschließend in einen finalen Volumenverbund überführt werden. Die Erweiterung eines in z-Richtung entstandenen Volumenverbunds V oder eines in z-Richtung entstandenen homogenen Volumenverbunds $V_h$ kann hierbei folgende Varianten umfassen:

a) die Integration von in x,y-Richtung aufgebrachten Volumenelementen in einen in z-Richtung vorhandenen Volumenverbund V oder in einen in z-Richtung vorhandenen homogenen Volumenverbund $V_h$ oder

b) die Überführung in z-Richtung von in x,y-Richtung auf einen bereits in z-Richtung vorhandenen Volumenverbund V oder auf einen bereits in z-Richtung vorhandenen homogenen Volumenverbund $V_h$ aufgebrachten Volumenelementen in einen weiteren Volumenverbund V1 oder in einen weiteren homogenen Volumenverbund $V_h1$ und dessen anschließende Integration in einen bereits in z-Richtung vorhandenen Volumenverbund V oder in einen bereits in z-Richtung vorhandenen homogenen Volumenverbund $V_h$ oder

c) die Integration von in x,y-Richtung aufgebrachten Volumenelementen in einen in z-Richtung vorhandenen Volumenverbund V oder in einen in z-Richtung vorhandenen Volumenverbund $V_h$ und die gleichzeitige Überführung von in x,y-Richtung aufgebrachten Volumenelementen in einen Volumenverbund V1 oder in einen homogenen Volumenverbund $V_h1$.

Auch bei dieser Ausführungsform wird der jeweils erhaltene Volumenverbund V in einen homogenen Volumenverbund $V_h$ und anschließend in einen finalen Volumenverbund überführt.

Der jeweils erhaltene homogene Volumenverbund $V_h$ wird in einem finalen Volumenverbund überführt. Bevorzugt erfolgt bei dieser Ausführungsform die Erweiterung eines in z-Richtung entstandenen Volumenverbunds V oder eines in z-Richtung entstandenen homogenen Volumenverbunds $V_h$ durch die Integration von in x,y-Richtung aufgebrachten Volumenelementen in den in z-Richtung bereits vorhandenen Volumenverbund V oder in den in z-Richtung bereits vorhandenen homogenen Volumenverbund $V_h$.

Auch in vorstehend genannten alternativen Fällen a) bis c) ist eine gleichzeitige Anwesenheit eines Volumenverbunds V und eines homogenen Volumenverbunds $V_h$ möglich.

Weiterhin alternativ kann die Überführung der aneinander angrenzenden und/oder benachbart aufgebrachten Volumenelemente in einen Volumenverbund und anschließend in einen homogenen Volumenverbund gleichzeitig in x/y-Richtung und in z-Richtung erfolgen.

Weiterhin alternativ kann die Überführung der aneinander angrenzenden und/oder benachbart aufgebrachten Volumenelemente in einen Volumenverbund und anschließend in einen homogenen Volumenverbund in jede beliebige Richtung erfolgen. In jede beliebige Richtung bedeutet hierbei, dass die Überführung der aufgebrachten Volumenelemente in einen Volumenverbund und anschließend in einen homogenen Volumenverbund unabhängig von einer x/y-Richtung und unabhängig von einer z-Richtung erfolgt. Bevorzugt sind die beliebigen Richtungen gleichverteilt und weisen keine Vorzugsrichtung auf. Weiterhin bevorzugt erfolgt die Überführung der aufgebrachten Volumenelemente in einen Volumenverbund und anschließend in einen homogenen Volumenverbund in jede beliebige Richtung gleichzeitig. Ausgehend von einem einzelnen Volumenelement kann dieses in jeder beliebigen Richtung mit einem benachbart aufgebrachten und/oder angrenzenden Volumenelement in einen Volumenverbund und anschließend in einen homogenen Volumenverbund überführt werden. Der homogene Volumenverbund wird dann jeweils in einen finalen Volumenverbund überführt.

Anstelle der vorstehend beschriebenen Überführung von Volumenelementen in einen Volumenverbund, weiter in einen homogenen Volumenverbund und anschließend in einen finalen Volumenverbund können auch wenigstens ein Volumenverbund und wenigstens ein weiterer Volumenverbund zu einem homogenen Volumenverbund und anschließend zu einem finalen Volumenverbund zusammengeführt werden. Diese Zusammenführung von Volumenverbunden erfolgt hierbei bevorzugt nicht nur lateral in x/y-Richtung, sondern auch in z-Richtung. Werden hierfür vereinfacht beispielsweise zwei Volumenverbunde V2 und V3 betrachtet, welche in x/y-Richtung nebeneinander aneinander angrenzend angeordnet sind, können diese beiden Volumenverbunde V2 und V3 zunächst über die Grenzfläche zwischen den beiden Volumenverbunden V2 und V3 in z-Richtung in einen Volumenverbund, weiter in einen homogenen Volumenverbund und anschließend in einen finalen Volumenverbund überführt werden. Sind diese beiden Volumenverbunde V2 und V3 in z-Richtung übereinander aneinander angrenzend angeordnet, können diese beiden Volumenverbunde V2 und V3 zunächst über die Grenzfläche zwischen den beiden Volumenverbunden V2 und V3 in x/y-Richtung in einen Volumenverbund, weiter in einen homogenen Volumenverbund und anschließend in einen finalen Volumenverbund überführt werden. Sind diese beiden Volumenverbunde V2 und V3 in x/y-Richtung nebeneinander aneinander angrenzend und in z-Richtung vollständig oder zumindest teilweise übereinander aneinander angrenzend angeordnet, können diese beiden Volumenverbunde V2 und V3 über die Grenzflächen zwischen den beiden Volumenelementen in x/y-Richtung und in z-Richtung in einen Volumenverbund, weiter in einen homogenen Volumenverbund und anschließend in einen finalen Volumenverbund überführt werden. Alternativ kann die Überführung wenigstens eines Volumenverbunds und wenigstens eines weiteren Volumenverbunds in einen homogenen Volumenverbund und anschließend in einen finalen Volumenverbund unabhängig von der x/y-Richtung und/oder unabhängig von der z-Richtung in jeder beliebigen Richtung erfolgen. Die beliebigen Richtungen sind hierbei bevorzugt gleichverteilt und weisen keine Vorzugsrichtung auf. Der aus den beiden Volumenverbunden V2 und V3 entstandene Volumenverbund oder homogene Volumenverbund kann nun wiederum jeweils durch wenigstens ein Volumenelement und/oder wenigstens einen Volumenverbund und/oder wenigstens einen homogenen Volumenverbund erweitert werden. Diese Erweiterung dieses Volumenverbunds oder dieses homogenen Volumenverbunds kann in x/y-Richtung und/oder in z-Richtung erfolgen. Alternativ kann diese Erweiterung dieses Volumenverbunds oder dieses homogenen Volumenverbunds in jede beliebige Richtung erfolgen. Die beliebigen Richtungen sind auch hierbei bevorzugt gleichverteilt und weisen keine Vorzugsrichtung auf. Diese Erweiterung dieses Volumenverbunds oder dieses homogenen Volumenverbunds durch wenigstens ein Volumenelement und/oder wenigstens einen Volumenverbund und/oder wenigstens einen homogenen Volumenverbund kann gleichzeitig oder nacheinander erfolgen.

Erfindungsgemäß entsteht ein homogener Volumenverbund bevorzugt, wenn die Reaktion innerhalb wenigstens eines Volumenelements und zwischen benachbart aufgebrachten und/oder zwischen aneinander angrenzenden Volumenelementen nicht vollständig abgeschlossen ist. Hierfür werden beispielsweise vereinfacht nur zwei aneinander angrenzende und/oder benachbart auf beispielsweise ein Substrat aufgebrachte Volumenelemente betrachtet, welche beispielsweise mittels einer Polymerisationsreaktion, auch an ihrer Grenzfläche, miteinander reagieren können. Ist die Polymerisationsreaktion insgesamt so vollständig abgeschlossen, wie dies für die entsprechende Polymerisationsreaktion möglich ist, ist die Oberfläche dieses, aus diesen zwei aneinander angrenzenden und/oder benachbart aufgebrachten Volumenelementen entstandenen homogenen Volumenverbunds ausgehärtet. Wird nun beispielsweise wenigstens ein weiteres Volumenelement auf diese ausgehärtete Oberfläche aufgebracht, findet, vereinfacht gesagt, keine oder nur eine deutlich verminderte Polymerisationsreaktion zwischen der ausgehärteten Oberfläche und dem wenigstens einen weiteren Volumenelement statt. An der ausgehärteten Oberfläche bildet sich somit eine Grenzfläche mit beispielsweise abweichenden Materialeigenschaften aus.

Erfindungsgemäß entsteht ein homogener Volumenverbund bevorzugt auch, wenn die Reaktion innerhalb wenigstens eines Volumenverbunds und die Reaktion zwischen diesem wenigstens einen Volumenverbund und wenigstens einem Volumenelement sowie die Reaktion innerhalb des wenigstens einen Volumenelements jeweils nicht vollständig abgeschlossen ist. Hierfür werden beispielsweise ein Volumenverbund und ein weiteres Volumenelement betrachtet, welche beispielsweise mittels einer Polymerisationsreaktion, auch an ihrer Grenzfläche, miteinander reagieren können. Ist die Polymerisationsreaktion innerhalb des Volumenverbunds so vollständig abgeschlossen, wie dies für die entsprechende Polymerisationsreaktion möglich ist, wird ein homogener Volumenverbund erhalten, dessen Oberfläche ausgehärtet ist. An dieser ausgehärteten Oberfläche findet, vereinfacht gesagt, keine weitere oder nur eine deutlich verminderte Polymerisationsreaktion zwischen dem homogenen Volumenverbund und einem weiteren Volumenelement statt, unabhängig davon, ob die Reaktion innerhalb des weiteren Volumenelements so vollständig abgeschlossen, wie dies für die entsprechende Polymerisationsreaktion möglich ist oder nicht. Stattdessen bildet sich an dieser ausgehärteten Oberfläche zwischen dem homogenen Volumenverbund und dem weiteren Volumenelement eine unerwünschte Grenzfläche mit beispielsweise abweichenden Materialeigenschaften aus.

Erfindungsgemäß entsteht ein homogener Volumenverbund bevorzugt auch, wenn die Reaktion innerhalb aneinander angrenzender und/oder benachbart aufgebrachter Volumenverbunde und zwischen aneinander angrenzenden und/oder benachbart aufgebrachten Volumenverbunden, beispielsweise innerhalb eines Volumenverbunds A und innerhalb eines Volumenverbunds B und zwischen dem Volumenverbund A und dem Volumenverbund B jeweils nicht vollständig abgeschlossen ist. Hierfür wird beispielsweise vereinfacht ein Volumenverbund A und ein Volumenverbund B betrachtet, welche beispielsweise mittels einer Polymerisationsreaktion miteinander reagieren können. Ist die Polymerisationsreaktion innerhalb des Volumenverbunds A so vollständig abgeschlossen, wie dies für die jeweilige Polymerisationsreaktion möglich ist, wird ein homogener Volumenverbund A erhalten, dessen Oberfläche ausgehärtet ist. An dieser ausgehärteten Oberfläche findet, vereinfacht gesagt, keine weitere oder nur eine deutlich verminderte Polymerisationsreaktion zwischen dem homogenen Volumenverbund A und dem Volumenverbund B statt, unabhängig davon, ob die Polymerisationsreaktion innerhalb des Volumenverbunds B abgeschlossen ist oder nicht. Stattdessen bildet sich an dieser ausgehärteten Oberfläche zwischen dem homogenen Volumenverbund A und dem Volumenverbund B eine unerwünschte Grenzfläche mit beispielsweise abweichenden Materialeigenschaften aus.

Kommt es im Volumen eines Volumenelements, eines Volumenverbunds, eines homogenen Volumenverbunds oder eines finalen Volumenverbunds jeweils zu diversen Grenzflächen, können sich neben diesen unerwünschten Grenzflächen auch unerwünschte Strukturen oder Bereiche mit abweichenden Materialeigenschaften ausbilden und das Volumenelement, der Volumenverbund, der homogene Volumenverbund oder der finale Volumenverbund ist jeweils optisch nicht homogen.

Ein finaler Volumenverbund entsteht erfindungsgemäß, wenn keine Grenzflächen zwischen benachbart aufgebrachten und/oder zwischen aneinander angrenzenden Volumenelementen ausgebildet werden. Ein finaler Volumenverbund entsteht erfindungsgemäß auch, wenn keine Grenzflächen zwischen einem bereits vorhandenen Volumenverbund und wenigstens einem weiteren Volumenelement oder zwischen einem bereits vorhandenen homogenen Volumenverbund und wenigstens einem weiteren Volumenelement ausgebildet werden. Ein finaler Volumenverbund entsteht erfindungsgemäß weiterhin, wenn keine Grenzflächen zwischen wenigstens einem bereits vorhandenen Volumenverbund und wenigstens einem weiteren Volumenverbund oder zwischen wenigstens einem bereits vorhandenen homogenen Volumenverbund und wenigstens einem weiteren Volumenverbund oder zwischen wenigstens einem bereits vorhandenen homogenen Volumenverbund und wenigstens einem weiteren homogenen Volumenverbund ausgebildet werden. Wenn sich keine Grenzflächen ausbilden, kommt es zu keinen abrupten Änderungen der Materialeigenschaften.

Erfindungsgemäß entsteht ein finaler Volumenverbund bevorzugt, wenn die Reaktivität zwischen benachbart aufgebrachten und/oder zwischen aneinander angrenzenden Volumenelementen übertragen wird. Die Reaktivität kann zwischen in x/y-Richtung und/oder zwischen in z-Richtung benachbart aufgebrachten und/oder aneinander angrenzenden Volumenelementen übertragen werden. Die Reaktivität kann alternativ zwischen in jeder beliebigen Richtung benachbart aufgebrachten und/oder aneinander angrenzenden Volumenelementen übertragen werden. Jede beliebige Richtung meint hierbei gleichverteilt in Bezug auf die Richtung und ohne Vorzugsrichtung. Bevorzugt erfolgt die Übertragung der Reaktivität in z-Richtung. Übertragung der Reaktivität bedeutet, dass eine Reaktion, welche innerhalb eines Volumenelements begonnen hat, in einem benachbart aufgebrachten und/oder in einem angrenzenden Volumenelement fortgesetzt wird. Übertragung der Reaktivität bedeutet auch, dass eine Reaktion, welche innerhalb eines Volumenelements begonnen hat, zwischen benachbart aufgebrachten und/oder zwischen aneinander angrenzenden Volumenelementen fortgesetzt wird. Übertragung der Reaktivität bedeutet weiterhin, dass eine Reaktion, welche innerhalb eines Volumenelements begonnen hat, bevorzugt innerhalb dieses einen Volumenelements nicht vollständig abgeschlossen ist bevor die Reaktion i) in einem benachbart aufgebrachten und/oder in einem angrenzenden Volumenelement und/oder ii) zwischen benachbart aufgebrachten und/oder aneinander angrenzenden Volumenelementen fortgesetzt wird. Die Reaktion beginnt innerhalb eines Volumenelements bevorzugt durch wenigstens eine Aktivierung der Reaktivität des eingesetzten Fluids. Die Reaktion kann in einem benachbart aufgebrachten und/oder in einem angrenzenden Volumenelement ohne weitere Aktivierung oder nach erneuter Aktivierung fortgesetzt werden. Bevorzugt wird die Reaktion in einem benachbart aufgebrachten und/oder in einem angrenzenden Volumenelement nach erneuter Aktivierung fortgesetzt. Die Reaktivität wird bevorzugt so lange von einem Volumenelement auf ein benachbart aufgebrachtes und/oder auf ein angrenzendes Volumenelement übertragen, so lange ein homogener Volumenverbund noch Volumenelemente umfasst, auf welche die Reaktivität noch nicht übertragen wurde oder so lange noch wenigstens ein weiteres Volumenelement hinzugefügt wird. Gegebenenfalls ist hierfür eine erneute Aktivierung der Reaktion notwendig. Weiterhin kann ein homogener Volumenverbund, welcher nicht mehr erweitert werden soll, einer abschließenden Aktivierung unterzogen werden und nach vollständiger Aushärtung zu einem finalen Volumenverbund werden. Wird hierfür vereinfacht beispielsweise ein auf ein Substrat aufgebrachtes Volumenelement 1 betrachtet, so wird die Reaktion, beispielsweise eine Polymerisationsreaktion, innerhalb dieses Volumenelements 1, durch Aktivierung ausgelöst. Wird nun benachbart zu diesem einen Volumenelement 1 ein weiteres Volumenelement 2 aufgebracht, so überträgt sich die Reaktivität von diesem einen Volumenelement 1 auf das weitere Volumenelement 2. Die in Volumenelement 1 begonnene Reaktion wird zum einen innerhalb des Volumenelements 2 fortgesetzt, zum anderen findet die Reaktion auch zwischen dem Volumenelement 1 und dem Volumenelement 2 statt. Für die Fortsetzung der Reaktion innerhalb des Volumenelements

2 kann wenigstens eine erneute Aktivierung erforderlich sein. Auf diese Weise wird, insbesondere durch die Reaktion zwischen dem Volumenelement 1 und dem Volumenelement 2, unterbunden, dass sich eine Grenzfläche zwischen zwei aneinander angrenzenden und/oder benachbart aufgebrachten Volumenelementen ausbildet.

Erfindungsgemäß entsteht ein finaler Volumenverbund bevorzugt auch, wenn die Reaktivität zwischen benachbart aufgebrachten und/oder zwischen aneinander angrenzenden homogenen Volumenverbunden übertragen wird. Die Reaktivität kann zwischen in x/y-Richtung und/oder zwischen in z-Richtung benachbart aufgebrachten und/oder aneinander angrenzenden homogenen Volumenverbunden übertragen werden. Die Reaktivität kann alternativ zwischen in jeder beliebigen Richtung benachbart aufgebrachten und/oder aneinander angrenzenden homogenen Volumenverbunden übertragen werden. In jeder beliebigen Richtung sind gleichverteilte beliebige Richtungen ohne jegliche Vorzugsrichtung. Die Reaktivität wird bevorzugt in z-Richtung zwischen benachbart aufgebrachten und/oder zwischen aneinander angrenzenden homogenen Volumenverbunden übertragen. Wird hierfür vereinfacht beispielsweise ein homogener Volumenverbund 1 betrachtet, so wird die Reaktion, beispielsweise eine Polymerisationsreaktion, innerhalb dieses homogenen Volumenverbunds 1 vorzugsweise durch Aktivierung ausgelöst. Wird die Reaktivität dieses homogenen Volumenverbunds 1 auf einen benachbart aufgebrachten und/oder an diesen homogenen Volumenverbund 1 angrenzenden homogenen Volumenverbund 2 übertragen, wird die Reaktion zum einen in diesem weiteren homogenen Volumenverbund 2 fortgesetzt und zum anderen findet die Reaktion zwischen dem homogenen Volumenverbund 1 und dem homogenen Volumenverbund 2 statt. Die Reaktivität innerhalb des homogenen Volumenverbunds 1 und innerhalb des homogenen Volumenverbunds 2 kann jeweils einmal oder mehrmals aktiviert werden. Die Übertragung der Reaktivität zwischen wenigstens zwei homogenen Volumenverbunden umfasst bevorzugt auch eine Übertragung der Reaktivität innerhalb wenigstens eines homogenen Volumenverbundes, beispielsweise zwischen in einem homogenen Volumenverbund vorhandenen Volumenelementen. Die Übertragung der Reaktivität zwischen wenigstens zwei homogenen Volumenverbunden verhindert, dass sich weder innerhalb eines homogenen Volumenverbunds noch zwischen wenigstens zwei homogenen Volumenverbunden jeweils eine Grenzfläche ausbildet. Erfindungsgemäß entsteht ein finaler Volumenverbund bevorzugt weiterhin, wenn die Reaktivität zwischen wenigstens einem homogenen Volumenverbund und einem Volumenverbund übertragen wird. Die Reaktivität kann zwischen wenigstens einem homogenen Volumenverbund und wenigstens einem benachbart aufgebrachten und/oder aneinander angrenzenden Volumenverbund in x/y-Richtung und/oder in z-Richtung übertragen werden. Die Reaktivität kann alternativ zwischen wenigstens einem homogenen Volumenverbund und wenigstens einem benachbart aufgebrachten und/oder aneinander angrenzenden Volumenverbund in jeder beliebigen Richtung übertragen werden. Mit "in jeder beliebigen Richtung" sind hierbei gleichverteilte beliebige Richtungen ohne jegliche Vorzugsrichtung gemeint. Die Reaktivität wird bevorzugt in z-Richtung zwischen wenigstens einem homogenen Volumenverbund und wenigstens einem benachbart aufgebrachten und/oder angrenzenden Volumenverbund übertragen. Wird hierfür vereinfacht beispielsweise ein homogener Volumenverbund 1 betrachtet, so wird die Reaktion, beispielsweise eine Polymerisationsreaktion, innerhalb dieses homogenen Volumenverbunds 1 vorzugsweise durch Aktivierung ausgelöst. Wird die Reaktivität dieses homogenen Volumenverbunds 1 auf einen benachbart aufgebrachten und/oder an diesen homogenen Volumenverbund 1 angrenzenden Volumenverbund 2 übertragen, beginnt die Reaktion zum einen in diesem weiteren Volumenverbund 2 unter Ausbildung eines homogenen Volumenverbunds 2' und zum anderen findet die Reaktion zwischen dem homogenen Volumenverbund 1 und dem nun entstandenen homogenen Volumenverbund 2 statt. Die Reaktivität innerhalb des homogenen Volumenverbunds 1 und innerhalb des Volumenverbunds 2, welcher durch den Beginn der Reaktion in einen homogenen Volumenverbund 2' überführt wurde, kann jeweils wenigstens einmal oder mehrmals aktiviert werden. Die Übertragung der Reaktivität zwischen wenigstens einem homogenen Volumenverbund und wenigstens einem benachbart aufgebrachten und/oder angrenzenden Volumenverbund sowie dessen Überführung in einen homogenen Volumenverbund umfasst bevorzugt auch eine Übertragung der Reaktivität innerhalb des wenigstens eines homogenen Volumenverbundes, beispielsweise zwischen in einem homogenen Volumenverbund vorhandenen Volumenelementen. Die Übertragung der Reaktivität zwischen wenigstens einem homogenen Volumenverbund und wenigstens einem Volumenverbund verhindert, dass sich weder innerhalb des wenigstens einen homogenen Volumenverbunds noch zwischen dem wenigstens einen homogenen Volumenverbund und dem wenigstens einen Volumenverbund noch innerhalb des wenigstens einen Volumenverbunds jeweils eine Grenzfläche ausbildet. Erfindungsgemäß entsteht ein finaler Volumenverbund bevorzugt weiterhin, wenn die Reaktivität zwischen wenigstens einem Volumenelement und wenigstens einem homogenen Volumenverbund übertragen wird. Die Reaktivität kann zwischen wenigstens einem Volumenelement und wenigstens einem, in x/y-Richtung und/oder zwischen in z-Richtung benachbart aufgebrachten und/oder angrenzenden, homogenen Volumenverbund übertragen werden. Die Reaktivität kann alternativ zwischen wenigstens einem Volumenelement und wenigstens einem, in jeder beliebigen Richtung benachbart aufgebrachten und/oder angrenzenden, homogenen Volumenverbund übertragen werden. In jeder beliebigen Richtung meint hierbei gleichverteilte beliebige Richtungen, ohne jegliche Vorzugsrichtung. Bevorzugt wird die Reaktivität zwischen wenigstens einem Volumenelement und wenigstens einem homogenen Volumenverbund in z-Richtung übertragen. Die Übertragung der Reaktivität kann hierbei von dem wenigstens einen Volumenelement auf den wenigstens einen homogenen Volumenverbund oder umgekehrt vom dem wenigstens einen homogenen Volumenverbund auf das wenigstens eine Volumenelement erfolgen. Hierfür wird vereinfacht beispielsweise ein homogener Volumenverbund betrachtet, dessen Reaktivität auf ein daran angrenzendes und/oder benachbart aufgebrachtes Volumenelement übertragen wird. Die Reaktion innerhalb des homogenen Volumenverbunds, beispielsweise eine Polymerisationsreaktion, wird vorzugsweise durch wenigstens eine Aktivierung ausgelöst. Wird die Reaktivität dieses homogenen Volumenverbunds auf ein daran angrenzendes Volumenelement übertragen, wird die Reaktion zum einen innerhalb des angrenzenden Volumenelements fortgesetzt, zum anderen findet auch eine Reaktion zwischen dem homogenen Volumenverbund und dem Volumenelement statt. Die Reaktivität innerhalb des Volumenelements kann nach der Übertragung erneut wenigstens einmal aktiviert werden, die Reaktivität innerhalb des homogenen Volumenverbunds kann wenigstens einmal oder mehrmals aktiviert werden. Wenigstens eine Aktivierung innerhalb des wenigstens einen homogenen Volumenverbunds bewirkt bevorzugt auch eine Übertragung der Reaktivität zwischen den Volumenelementen eines homogenen Volumenverbunds. Die Übertragung der Reaktivität von wenigstens einem homogenen Volumenverbund auf wenigstens ein Volumenelement oder umgekehrt verhindert, dass sich innerhalb des wenigstens einen homogenen Volumenverbunds oder zwischen dem wenigstens einen Volumenverbund und dem wenigstens einen Volumenelement eine Grenzfläche ausbildet.

Erfindungsgemäß entsteht ein finaler Volumenverbund bevorzugt weiterhin, wenn die Reaktivität zwischen wenigstens einem Volumenelement und wenigstens einem Volumenverbund übertragen wird. Die Reaktivität kann zwischen wenigstens einem Volumenelement und wenigstens einem, in x/y-Richtung und/oder zwischen in z-Richtung benachbart aufgebrachten und/oder angrenzenden, Volumenverbund übertragen werden. Die Reaktivität kann alternativ zwischen wenigstens einem Volumenelement und wenigstens einem, in jeder beliebigen Richtung benachbart aufgebrachten und/oder aneinander angrenzenden, Volumenverbund übertragen werden. In jeder beliebigen Richtung meint hierbei gleichverteilte beliebige Richtungen, ohne jegliche Vorzugsrichtung. Bevorzugt wird die Reaktivität zwischen wenigstens einem Volumenelement und wenigstens einem Volumenverbund in z-Richtung übertragen. Die Übertragung der Reaktivität erfolgt hierbei bevorzugt von dem wenigstens einen Volumenelement auf den wenigstens einen Volumenverbund. Hierfür wird vereinfacht beispielsweise ein Volumenelement betrachtet, dessen Reaktivität auf einen daran angrenzenden Volumenverbund übertragen wird. Die Reaktion innerhalb des Volumenelements, beispielsweise eine Polymerisationsreaktion, wird vorzugsweise durch wenigstens eine Aktivierung ausgelöst. Wird die Reaktivität dieses Volumenelements auf einen daran angrenzenden Volumenverbund übertragen, beginnt die Reaktion zum einen innerhalb des angrenzenden Volumenverbunds und es entsteht ein homogener Volumenverbund, zum anderen findet auch eine Reaktion zwischen dem Volumenelement und dem neu entstandenen homogenen Volumenverbund statt. Die Reaktivität innerhalb des Volumenelements kann nach der Übertragung erneut wenigstens einmal aktiviert werden, die Reaktivität innerhalb des neu entstandenen homogenen Volumenverbunds kann wenigstens einmal oder mehrmals aktiviert werden. Die Übertragung der Reaktivität von wenigstens einem Volumenelement auf wenigstens einen Volumenverbund und dessen Überführung in einen homogenen Volumenverbund verhindert, dass sich innerhalb des wenigstens einen Volumenverbunds oder zwischen dem wenigstens einen Volumenverbund und dem wenigstens einen Volumenelement jeweils eine Grenzfläche ausbildet.

Erfindungsgemäß entsteht ein finaler Volumenverbund besonders bevorzugt, wenn die Reaktion innerhalb eines Volumenelements nicht vollständig abgeschlossen ist, die Reaktion zwischen benachbart aufgebrachten und/oder zwischen aneinander angrenzenden Volumenelementen zunächst nicht vollständig abgeschlossen ist, die Reaktivität zwischen benachbart aufgebrachten und/oder zwischen aneinander angrenzenden Volumenelementen übertragen und die Reaktion nach Übertragung der Reaktivität vollständig abgeschlossen wird. Die Reaktivität kann zwischen benachbart aufgebrachten und/oder zwischen aneinander angrenzenden Volumenelementen in x/y-Richtung, in z-Richtung und/oder in jeder beliebigen Richtung übertragen werden. Jede beliebige Richtung ist hierbei bevorzugt gleichverteilt und weist keine Vorzugsrichtung auf. Die Reaktivität wird bevorzugt in z-Richtung übertragen. Für die Entstehung eines finalen Volumenverbunds werden vereinfacht beispielsweise zwei aneinander angrenzende und benachbart auf beispielsweise ein Substrat aufgebrachte Volumenelemente betrachtet, welche beispielsweise mittels einer Reaktion, beispielsweise mittels einer Polymerisationsreaktion, miteinander reagieren können. Zur Entstehung eines diese beiden Volumenelemente umfassenden finalen Volumenverbunds ist es besonders bevorzugt erforderlich, dass die Reaktion innerhalb jedes Volumenelements und zwischen den beiden Volumenelementen jeweils zunächst nicht vollständig abgeschlossen ist. Des Weiteren ist es besonders bevorzugt, dass die Reaktivität zwischen diesen beiden Volumenelementen übertragen wird. Bevorzugt beginnt die Reaktion innerhalb eines Volumenelements, wird auf das andere Volumenelement übertragen und innerhalb des anderen Volumenelements fortgesetzt. Durch die Übertragung der Reaktivität von einem Volumenelement auf das andere Volumenelement wird die Reaktion weiterhin auch zwischen den beiden Volumenelementen fortgesetzt. Zwischen den beiden Volumenelementen umfasst bevorzugt auch die Reaktion an derjenigen wenigstens einen Grenzfläche, an welcher die beiden Volumenelemente benachbart aufgebracht und/oder aneinander angrenzend angeordnet sind. Die Reaktion kann auch in beiden Volumenelementen beginnen und zwischen den Volumenelementen übertragen werden. Bevorzugt beginnt die Reaktion innerhalb eines Volumenelements nach wenigstens einer für die jeweilige Reaktion geeigneten Aktivierung. Als wenigstens eine für die jeweilige Reaktion geeignete Aktivierung kann wenigstens eine identische Aktivierung wiederholt werden oder es können voneinander verschiedene Aktivierungen erfolgen. Bei den voneinander verschiedenen Aktivierungen kann es sich beispielsweise um eine Aktivierung mittels

aktinischer Strahlung, z.B. UV-Strahlung, und/oder um eine Aktivierung mittels thermischer Energie handeln. Nach Übertragung der Reaktivität zwischen den beiden Volumenelementen kann wenigstens eine erneute Aktivierung erforderlich sein. Nach vollständigem Abschluss der Reaktion, beispielsweise einer Polymerisationsreaktion, innerhalb und zwischen den wenigstens zwei Volumenelementen wird ein ausgehärteter finaler Volumenverbund erhalten. Die Hinzufügung beispielsweise wenigstens eines weiteren Volumenelements zu diesem finalen Volumenverbund würde nun eine Grenzfläche ausbilden.

Erfindungsgemäß entsteht ein finaler Volumenverbund besonders bevorzugt auch, wenn die Reaktion innerhalb wenigstens eines homogenen Volumenverbunds zunächst nicht vollständig abgeschlossen ist, die Reaktion zwischen benachbart aufgebrachten und/oder zwischen aneinander angrenzenden homogenen Volumenverbunden zunächst nicht vollständig abgeschlossen ist, die Reaktivität zwischen benachbart aufgebrachten und/oder zwischen aneinander angrenzenden homogenen Volumenverbunden übertragen und die Reaktion nach Übertragung der Reaktivität vollständig abgeschlossen wird. Die Reaktivität kann zwischen benachbart aufgebrachten und/oder zwischen aneinander angrenzenden homogenen Volumenverbunden in x/y-Richtung, in z-Richtung und/oder in jeder beliebigen Richtung übertragen werden. Bevorzugt ist jede beliebige Richtung hierbei gleichverteilt und weist keine Vorzugsrichtung auf. Bevorzugt erfolgt die Übertragung der Reaktivität in z-Richtung. Werden zur Entstehung eines finalen Volumenverbunds vereinfacht beispielsweise zwei homogene Volumenverbunde betrachtet, innerhalb denen und zwischen denen die Reaktion, beispielsweise eine Polymerisationsreaktion, zunächst jeweils nicht vollständig abgeschlossen ist, so ist es besonders bevorzugt, wenn die Reaktivität von dem einen homogenen Volumenverbund auf den anderen homogenen Volumenverbund übertragen wird. Beginnt die Reaktion innerhalb des einen homogenen Volumenverbunds, wird sie auf den anderen homogenen Volumenverbund übertragen und in diesem anderen homogenen Volumenverbund fortgesetzt. Durch die Übertragung der Reaktivität von dem einen homogenen Volumenverbund auf den anderen homogenen Volumenverbund wird die Reaktion zudem auch zwischen den beiden homogenen Volumenverbunden fortgesetzt. Zwischen den beiden homogenen Volumenverbunden umfasst bevorzugt auch die Reaktion an derjenigen wenigstens einen Grenzfläche, an welcher die beiden homogenen Volumenverbunde benachbart aufgebracht und/oder aneinander angrenzend angeordnet sind. Die Reaktion kann auch in beiden homogenen Volumenverbunden beginnen und zwischen den homogenen Volumenverbunden übertragen werden. Bevorzugt beginnt die Reaktion innerhalb wenigstens eines homogenen Volumenverbunds nach wenigstens einer für die jeweilige Reaktion geeigneten Aktivierung. Als wenigstens eine für die jeweilige Reaktion geeignete Aktivierung kann eine identische Aktivierung wiederholt werden oder es können voneinander verschiedene Aktivierungen erfolgen. Bei den voneinander verschiedenen Aktivierungen kann es sich beispielsweise um eine Aktivierung mittels aktinischer Strahlung, z.B. UV-Strahlung, und um eine Aktivierung mittels thermischer Energie handeln. Nach Übertragung der Reaktivität zwischen den homogenen Volumenverbunden kann wenigstens eine erneute Aktivierung erforderlich sein. Nach vollständigem Abschluss der Reaktion, beispielsweise einer Polymerisationsreaktion, innerhalb und zwischen den wenigstens zwei homogenen Volumenverbunden wird ein ausgehärteter finaler Volumenverbund erhalten. Die Hinzufügung beispielsweise wenigstens eines weiteren Volumenelements und/oder eines weiteren homogenen Volumenverbunds zu diesem finalen Volumenverbund würde nun eine Grenzfläche ausbilden.

Erfindungsgemäß entsteht ein finaler Volumenverbund besonders bevorzugt auch, wenn die Reaktion innerhalb wenigstens eines homogenen Volumenverbunds zunächst nicht vollständig abgeschlossen ist, die Reaktion zwischen wenigstens einem homogenen Volumenverbund und wenigstens einem benachbart aufgebrachten und/oder angrenzenden Volumenverbund zunächst nicht vollständig abgeschlossen ist, die Reaktivität zwischen dem homogenen Volumenverbund und dem benachbart aufgebrachten und/oder angrenzenden Volumenverbund übertragen und die Reaktion nach Übertragung der Reaktivität vollständig abgeschlossen wird. Die Reaktivität kann hierbei in x/y-Richtung, in z-Richtung und/oder in jeder beliebigen Richtung übertragen werden. Bevorzugt ist jede beliebige Richtung gleichverteilt und weist keine Vorzugsrichtung auf. Bevorzugt erfolgt die Übertragung der Reaktivität in z-Richtung. Werden zur Entstehung eines finalen Volumenverbunds vereinfacht beispielsweise ein homogener Volumenverbund und ein benachbart aufgebrachter und/oder angrenzender Volumenverbund betrachtet, innerhalb denen und zwischen denen die Reaktion, beispielsweise eine Polymerisationsreaktion, jeweils zunächst nicht vollständig abgeschlossen ist bzw. noch nicht begonnen hat, so ist es besonders bevorzugt, wenn die Reaktivität von dem homogenen Volumenverbund auf den Volumenverbund übertragen wird. Bevorzugt beginnt die Reaktion innerhalb des homogenen Volumenverbunds und ist innerhalb des homogenen Volumenverbunds noch nicht vollständig abgeschlossen. Die Reaktion wird dann von dort auf den Volumenverbund übertragen und in diesem Volumenverbund fortgesetzt. Durch die Übertragung der Reaktivität von dem homogenen Volumenverbund auf den Volumenverbund wird die Reaktion zudem auch zwischen dem homogenen Volumenverbund und dem Volumenverbund fortgesetzt. Zwischen dem homogenen Volumenverbund und dem Volumenverbund umfasst bevorzugt auch die Reaktion an derjenigen wenigstens einen Grenzfläche, an welcher der homogene Volumenverbund und der Volumenverbund benachbart aufgebracht und/oder angrenzend angeordnet sind. Bevorzugt beginnt die Reaktion innerhalb des wenigstens einen Volumenverbunds nach Übertragung der Reaktivität nach wenigstens einer für die jeweilige Reaktion geeigneten Aktivierung und überführt diesen Volumenverbund in einen homogenen Volumenverbund, in welchem die Reaktion noch nicht vollständig abgeschlossen ist. Als wenigstens

eine für die jeweilige Reaktion geeignete Aktivierung kann wenigstens eine identische Aktivierung wiederholt werden oder es können voneinander verschiedene Aktivierungen erfolgen. Bei den voneinander verschiedenen Aktivierungen kann es sich beispielsweise um eine Aktivierung mittels aktinischer Strahlung, z.B. UV-Strahlung, und um eine Aktivierung mittels thermischer Energie handeln. Nach Übertragung der Reaktivität zwischen dem homogenen Volumenverbund und dem Volumenverbund kann eine erneute Aktivierung erforderlich sein. Nach vollständigem Abschluss der Reaktion, beispielsweise einer Polymerisationsreaktion, innerhalb und zwischen dem wenigstens einen homogenen Volumenverbund und dem wenigstens einen Volumenverbund wird ein ausgehärteter finaler Volumenverbund erhalten. Durch die Hinzufügung beispielsweise wenigstens eines weiteren Volumenelements und/oder eines weiteren homogenen Volumenverbunds und/oder eines Volumenverbunds zu diesem finalen Volumenverbund würde nun eine Grenzfläche ausgebildet werden.

Erfindungsgemäß entsteht ein finaler Volumenverbund besonders bevorzugt weiterhin, wenn die Reaktion innerhalb eines Volumenelements zunächst nicht vollständig abgeschlossen ist, die Reaktion zwischen diesem einen Volumenelement und einem benachbart aufgebrachten und/oder an dieses eine Volumenelement angrenzenden Volumenverbund zunächst nicht vollständig abgeschlossen ist, die Reaktivität von diesem einen Volumenelement auf den benachbart aufgebrachten und/oder auf den angrenzenden Volumenverbund übertragen und die Reaktion nach Übertragung der Reaktivität vollständig abgeschlossen wird. Die Reaktivität kann von dem wenigstens einen Volumenelement auf den wenigstens einen Volumenverbund in x/y-Richtung, in z-Richtung und/oder in jede beliebige Richtung übertragen werden. Bevorzugt ist jede beliebige Richtung gleichverteilt und weist keine Vorzugsrichtung auf. Werden zur Entstehung eines finalen Volumenverbunds vereinfacht beispielsweise ein Volumenelement innerhalb desselben eine Reaktion, beispielsweise eine Polymerisationsreaktion, nicht vollständig abgeschlossen ist, und ein Volumenverbund, innerhalb desselben eine Reaktion, beispielsweise eine Polymerisationsreaktion noch nicht begonnen hat, betrachtet, so ist es besonders bevorzugt, wenn die Reaktivität von dem Volumenelement auf den Volumenverbund übertragen wird. Bevorzugt beginnt die Reaktion innerhalb des Volumenelements, wird auf den Volumenverbund übertragen und innerhalb des Volumenverbunds unter Überführung desselben in einem homogenen Volumenverbund fortgesetzt. Die Übertragung der Reaktivität umfasst weiterhin bevorzugt auch, dass die Reaktion an derjenigen Grenzfläche, welche dem Volumenelement und dem Volumenverbund bzw. dem dann entstandenen homogenen Volumenverbund gemeinsam ist, fortgesetzt wird. Bevorzugt beginnt die Reaktion innerhalb des Volumenelements nach einer für die jeweilige Reaktion geeigneten Aktivierung. Als wenigstens eine für die jeweilige Reaktion geeignete Aktivierung kann eine identische Aktivierung wiederholt werden oder es können voneinander verschiedene Aktivierungen erfolgen. Bei den voneinander verschiedenen Aktivierungen kann es sich beispielsweise um eine Aktivierung mittels aktinischer Strahlung, z.B. UV-Strahlung, und um eine Aktivierung mittels thermischer Energie handeln. Nach Übertragung der Reaktivität von dem Volumenelement auf den Volumenverbund kann eine erneute Aktivierung erforderlich sein. Nach vollständigem Abschluss der Reaktion, beispielsweise einer Polymerisationsreaktion, innerhalb und zwischen dem wenigstens einen Volumenelement und dem wenigstens einen Volumenverbund wird ein ausgehärteter finaler Volumenverbund erhalten. Durch die Hinzufügung beispielsweise wenigstens eines weiteren Volumenelements und/oder eines weiteren homogenen Volumenverbunds und/oder eines Volumenverbunds zu diesem finalen Volumenverbund würde nun eine Grenzfläche ausgebildet werden.

Erfindungsgemäß entsteht ein finaler Volumenverbund besonders bevorzugt weiterhin, wenn die Reaktion innerhalb wenigstens eines homogenen Volumenverbunds zunächst nicht vollständig abgeschlossen ist, die Reaktion zwischen diesem wenigstens einen homogenen Volumenverbund und wenigstens einem benachbart aufgebrachten und/oder angrenzenden wenigstens einen Volumenelement zunächst nicht vollständig abgeschlossen ist und die Reaktivität von diesem einen homogenen Volumenverbund auf das wenigstens eine benachbart aufgebrachte und/oder angrenzende Volumenelement übertragen und die Reaktion nach Übertragung der Reaktivität vollständig abgeschlossen wird. Die Reaktivität kann von dem wenigstens einen homogenen Volumenverbund auf das wenigstens eine Volumenelement in x/y-Richtung, in z-Richtung und/oder in jeder beliebigen Richtung übertragen werden. Bevorzugt ist jede beliebige Richtung gleichverteilt und weist keine Vorzugsrichtung auf. Die Übertragung der Reaktivität erfolgt bevorzugt in z-Richtung. Werden zur Entstehung eines finalen Volumenverbunds vereinfacht beispielsweise ein homogener Volumenverbund und ein Volumenelement, innerhalb und zwischen denen eine Reaktion, beispielsweise eine Polymerisationsreaktion, jeweils zunächst nicht vollständig abgeschlossen ist, betrachtet, so ist es ganz besonders bevorzugt, wenn die Reaktivität von dem homogenen Volumenverbund auf das Volumenelement übertragen wird. Bevorzugt beginnt die Reaktion innerhalb eines Volumenverbunds unter Überführung desselben in einem homogenen Volumenverbund, wird von letzterem auf das Volumenelement übertragen und innerhalb des Volumenelements fortgesetzt. Die Übertragung der Reaktivität umfasst weiterhin bevorzugt auch, dass die Reaktion an derjenigen Grenzfläche, welche dem homogenen Volumenverbund und dem Volumenelement gemeinsam ist, fortgesetzt wird. Bevorzugt beginnt die Reaktion innerhalb des Volumenverbunds nach einer für die jeweilige Reaktion geeigneten Aktivierung unter Überführung desselben in einem homogenen Volumenverbund. Als wenigstens eine für die jeweilige Reaktion geeignete Aktivierung kann eine identische Aktivierung wiederholt werden oder es können voneinander verschiedene Aktivierungen erfolgen. Bei den voneinander verschiedenen Aktivierungen kann es sich beispielsweise um eine Aktivierung mittels aktinischer

Strahlung, z.B. UV-Strahlung, und um eine Aktivierung mittels thermischer Energie handeln. Nach Übertragung der Reaktivität von dem homogenen Volumenverbund auf das Volumenelement kann eine erneute Aktivierung erforderlich sein. Nach vollständigem Abschluss der Reaktion, beispielsweise einer Polymerisationsreaktion, innerhalb und zwischen dem wenigstens einen homogenen Volumenverbund und dem wenigstens einen Volumenelement wird ein ausgehärteter finaler Volumenverbund erhalten. Durch die Hinzufügung beispielsweise wenigstens eines weiteren Volumenelements und/oder eines weiteren homogenen Volumenverbunds und/oder eines Volumenverbunds zu diesem finalen Volumenverbund würde nun eine Grenzfläche zu letzterem ausgebildet werden.

Erfindungsgemäß entsteht ein finaler Volumenverbund besonders bevorzugt weiterhin, wenn die Reaktion innerhalb wenigstens eines homogenen Volumenverbunds und innerhalb wenigstens eines Volumenelements jeweils zunächst nicht vollständig abgeschlossen ist, die Reaktion zwischen diesem wenigstens einen homogenen Volumenverbund und wenigstens einem benachbart aufgebrachten und/oder angrenzenden wenigstens einen Volumenelement zunächst nicht vollständig abgeschlossen ist und die Reaktivität zwischen diesem wenigstens einen homogenen Volumenverbund und dem wenigstens einen benachbart aufgebrachten und/oder angrenzenden Volumenelement übertragen und die Reaktion nach Übertragung der Reaktivität vollständig abgeschlossen wird. Die Reaktivität kann zwischen dem wenigstens einen homogenen Volumenverbund und dem wenigstens einen Volumenelement in x/y-Richtung, in z-Richtung und/oder in jede beliebige Richtung übertragen werden. Bevorzugt ist jede beliebige Richtung gleichverteilt und weist keine Vorzugsrichtung auf. Die Übertragung der Reaktivität erfolgt bevorzugt in z-Richtung. Werden zur Entstehung eines finalen Volumenverbunds vereinfacht beispielsweise ein homogener Volumenverbund und ein Volumenelement, innerhalb und zwischen denen eine Reaktion, beispielsweise eine Polymerisationsreaktion, jeweils zunächst nicht vollständig abgeschlossen ist, betrachtet, so ist es besonders bevorzugt, wenn die Reaktivität zwischen dem homogenen Volumenverbund und dem Volumenelement übertragen wird. Bevorzugt beginnt die Reaktion innerhalb des Volumenverbunds unter Überführung desselben in einem homogenen Volumenverbund, und innerhalb des Volumenelements und wird von dem homogenen Volumenverbund auf das Volumenelement sowie von dem Volumenelement auf den homogenen Volumenverbund übertragen und fortgesetzt. Die Übertragung der Reaktivität umfasst weiterhin bevorzugt auch, dass die Reaktion an derjenigen Grenzfläche, welche dem homogenen Volumenverbund und dem Volumenelement gemeinsam ist, fortgesetzt wird. Bevorzugt beginnt die Reaktion innerhalb des Volumenverbunds nach einer für die jeweilige Reaktion geeigneten Aktivierung unter Überführung desselben in einem homogenen Volumenverbund und innerhalb des Volumenelements ebenfalls nach einer für die jeweilige Reaktion geeigneten Aktivierung. Als wenigstens eine für die jeweilige Reaktion geeignete Aktivierung kann eine identische Aktivierung wiederholt werden oder es können voneinander verschiedene Aktivierungen erfolgen. Bei den voneinander verschiedenen Aktivierungen kann es sich beispielsweise um eine Aktivierung mittels aktinischer Strahlung, z.B. UV-Strahlung, Elektronenstrahlung oder sichtbares Licht, und um eine Aktivierung mittels thermischer Energie handeln. Nach Übertragung der Reaktivität zwischen dem homogenen Volumenverbund und dem Volumenelement kann eine erneute Aktivierung erforderlich sein. Nach vollständigem Abschluss der Reaktion, beispielsweise einer Polymerisationsreaktion, innerhalb und zwischen dem wenigstens einen homogenen Volumenverbund und dem wenigstens einen Volumenelement wird ein ausgehärteter finaler Volumenverbund erhalten. Durch die Hinzufügung beispielsweise wenigstens eines weiteren Volumenelements und/oder eines weiteren homogenen Volumenverbunds und/oder eines Volumenverbunds zu diesem finalen Volumenverbund würde nun eine Grenzfläche zu letzterem ausgebildet werden.

Alle vorstehend genannten Varianten zur Entstehung eines finalen Volumenverbunds haben gemeinsam, dass in einem finalen Volumenverbund eine Reaktion bevorzugt nicht mehr fortgesetzt, sondern vollständig abgeschlossen wird, und die Reaktivität bevorzugt nicht mehr übertragen wird.

Die Aktivierung der Reaktion, welche innerhalb wenigstens eines Volumenelements, innerhalb wenigstens eines Volumenverbunds unter Überführung desselben in einen homogenen Volumenverbund und/oder innerhalb wenigstens eines homogenen Volumenverbunds unter Überführung desselben in einen finalen Volumenverbund stattfindet, kann mittels aktinischer Strahlung, z.B. UV-Strahlung, und/oder mittels thermischer Energie erfolgen. Bevorzugt erfolgt die Aktivierung der Reaktion mittels UV-Strahlung. Die Aktivierung der Reaktion mittels aktinischer Strahlung, bevorzugt UV-Strahlung, kann wenigstens einmal erfolgen und gegebenenfalls wiederholt werden. Optional kann die Aktivierung der Reaktion wenigstens zweimal mittels unterschiedlicher Strahlung (z.B. unterschiedlicher Wellenlänge, Intensität oder Dosis) erfolgen.

Die Aktivierung der Reaktion, welche i) zwischen wenigstens zwei Volumenelementen, ii) zwischen wenigstens zwei homogenen Volumenverbunden, iii) zwischen wenigstens einem Volumenelement und wenigstens einem Volumenverbund und/oder wenigstens einem homogenen Volumenverbund und/oder iv) zwischen wenigstens einem homogenen Volumenverbund und wenigstens einem Volumenverbund stattfindet, kann mittels aktinischer Strahlung, z.B. UV-Strahlung, oder mittels thermischer Energie erfolgen. Bevorzugt erfolgt die Aktivierung der Reaktion auch in diesem Fall mittels UV-Strahlung. Die Aktivierung der Reaktion mittels aktinischer Strahlung, bevorzugt UV-Strahlung, kann auch in diesem Fall wenigstens einmal erfolgen und gegebenenfalls wiederholt werden. Optional kann die Aktivierung der Reaktion auch in diesem Fall wenigstens zweimal mittels unterschiedlicher UV-Strahlung erfolgen.

Die Aktivierung der Reaktion innerhalb und zwischen den Volumenelementen, Volumenverbunden und homogenen Volumenverbunden, wie vorstehend beschrieben, kann unabhängig voneinander, nacheinander oder gleichzeitig erfolgen. Bevorzugt erfolgt die Aktivierung der Reaktion gleichzeitig und verhindert so, dass sich Grenzflächen innerhalb und zwischen Volumenelementen, Volumenverbunden und homogenen Volumenverbunden ausbilden.

Die Überführung der aufgebrachten Volumenelemente in einen Volumenverbund, weiter in einen homogenen Volumenverbund und anschließend in einen finalen Volumenverbund ist umso wichtiger, je kleiner die aufgebrachten Volumenelemente sind. Je kleiner die Volumenelemente sind, desto stärker steigt der Volumenanteil der Grenzflächen und grenzflächennahen Bereiche an. Obwohl die Größe der Volumenelemente erfindungsgemäß vernachlässigbar ist, ist es bevorzugt, kleine Volumenelemente auf das zu bedruckende Substrat mittels eines Inkjet-Verfahrens aufzubringen. Unter kleinen Volumenelementen sind Volumenelemente mit einem Volumen von bevorzugt 1 pL bis 50 pL, besonders bevorzugt mit einem Volumen von 2 pL bis 30 pL zu verstehen. Der Vorteil kleiner Volumenelemente ist unter anderem, dass hiermit eine bessere Auflösung nutzbar ist, die beispielsweise eine berechnete ortsabhängige Brechungsindexverteilung und/oder steilere Gradienten ermöglicht.

Die Überführung der aufgebrachten Volumenelemente von einem Volumenverbund in einen homogenen Volumenverbund und anschließend in einen finalen Volumenverbund gelingt erfindungsgemäß durch eine gezielte Aktivierung der Reaktivität des erfindungsgemäß einzusetzenden Fluids. Eine gezielte Aktivierung der Reaktivität des erfindungsgemäß einzusetzenden Fluids wiederum ermöglicht eine bessere Reaktionskontrolle. Insbesondere kann der Zeitpunkt, zu dem die Reaktion, bevorzugt eine Polymerisation, des erfindungsgemäß einzusetzenden Fluids nach dessen Applikation beginnt, gezielt ausgelöst und gesteuert werden. Vor der Applikation des erfindungsgemäß einzusetzenden Fluids beginnt die Reaktion, bevorzugt eine Polymerisation, nicht oder nur sehr schwach ohne eine gezielte Aktivierung. Das erfindungsgemäß einzusetzende Fluid weist somit eine ausreichend lange Verarbeitungszeit auf, um in einem Inkjet-Verfahren eingesetzt werden zu können. Kommt das erfindungsgemäß einzusetzende Fluid in einem Inkjet-Verfahren zum Einsatz, härtet dieses nicht ungewollt vor der Applikation aus, d.h. Vorratsbehälter, Leitungen, Düsen eines Inkjet-Druckers, eines Inkjet-Druckkopfes bzw. einer Druckkopfanordung enthalten kein Fluid, bevorzugt kein polymerisiertes Fluid, welches entweder für eine Applikation unbrauchbar geworden ist und/oder zu einer Verstopfung der Leitungen und/oder der Düsen führt. Das erfindungsgemäß einzusetzende Fluid weist somit bevorzugt eine hohe Stabilität und ausreichend lange Verarbeitungszeit auf, um mittels eines Druckkopfes, vorzugsweise eines Piezo-Druckkopfes, auf ein Substrat und/oder eine Lage von Volumenelementen aufgebracht werden zu können. Bevorzugt liegt die Verarbeitungszeit des erfindungsgemäß einzusetzenden Fluids bei wenigstens 1 h, bevorzugt bei wenigstens 5 h und weiter bevorzugt bei wenigstens 10 h. Eine Langzeitstabilität ist erreicht, wenn das erfindungsgemäß einzusetzende Fluid über einen Zeitraum von wenigstens 4 Wochen bei der angestrebten Verarbeitungstemperatur im Inkjet-Verfahren keine nennenswerte Veränderung zeigt.

US 2016/0167323 A1, US 2004/0008319 A1 und US 2005/0046957 A1 offenbaren jeweils nicht die Überführung benachbart aufgebrachter und/oder aneinander angrenzender Volumenelemente in einen Volumenverbund, weiter in einen homogenen Volumenverbund und anschließend in einen finalen Volumenverbund, welche durch Reaktion zwischen ursprünglich vorhandenen Grenzflächen und die Übertragung der Reaktivität die Ausbildung von unerwünschten Grenzflächen in dem finalen Volumenverbund unterbindet. US 2016/0167323 A1, US 2004/0008319 A1 und US 2005/0046957 A1 offenbaren des Weiteren keines der erfindungsgemäß einzusetzenden Fluide.

Das erfindungsgemäß einzusetzende Fluid ermöglicht die Herstellung von Brillengläsern, welche, sofern es sich um Brillengläser mit einem einheitlichen Brechungsindex handelt, einen Brechungsindex aus einem Bereich von bevorzugt $n_D$ = 1,49 bis 1,76 aufweisen, weiter bevorzugt von $n_D$ = 1,50 bis 1,67, wobei der Brechungsindex für die Wellenlänge der Natrium-D-Linie angeben ist. Sofern es sich um Brillengläser mit berechneter ortsabhängiger Brechungsindexverteilung handelt, können Brechungsindices aus dem vorstehend genannten Bereich verwirklicht werden. Die Bestimmung des Brechungsindexes erfolgt bevorzugt anhand des gehärteten Fluids mittels eines Abbe-Refraktometers unter Zuhilfenahme einer geeigneten Lichtquelle und geeigneter Immersionsflüssigkeiten bei einer Temperatur von 21°C.

Das erfindungsgemäß einzusetzende Fluid ermöglicht des Weiteren die Herstellung von Brillengläsern, deren Abbezahl $v_d$ für einen Brechungsindex aus einem Bereich von $n_D$ = 1,49 bis 1,60 bevorzugt in einem Bereich von 40 bis 60 und für einen Brechungsindex aus einem Bereich von $n_D$ > 1,60 bis 1,76 bevorzugt in einem Bereich von 30 bis 45 liegt. Die Bestimmung der Abbezahl bzw. der Dispersion des Fluids erfolgt bevorzugt anhand des gehärteten Fluids mittels eines Abbe-Refraktometers unter Zuhilfenahme monochromatischer Lichtquellen und geeigneter Immersionsflüssigkeiten bei einer Temperatur von 21°C.

Das erfindungsgemäß einzusetzende Fluid ermöglicht des Weiteren die Herstellung von Brillengläsern, deren Dichte bevorzugt in einem Bereich von 0,90 g/cm$^3$ bis 1,50 g/cm$^3$ liegt. Die Bestimmung der Dichte des Polymers erfolgt bevorzugt über das Verdrängungsprinzip oder über Gaspyknometrie.

Das erfindungsgemäß einzusetzende Fluid ermöglicht des Weiteren die Herstellung von Brillengläsern, deren Erweichungspunkt bevorzugt bei $T_g$ >60°C, weiter bevorzugt bei $T_g$ >80°C, weiter bevorzugt bei $T_g$ >100°C, liegt. Der Erweichungspunkt $T_g$ wird bevorzugt anhand des gehärteten Materials mittels der dynamisch-mechanischen Analyse (DMA) bestimmt.

Das einzusetzende Fluid ermöglicht des Weiteren die Herstellung von Brillengläsern, welche nach Beschichtung wenigstens der Vorderfläche und/oder der Rückfläche bevorzugt eine hohe Schlagzähigkeit aufweisen, besonders bevorzugt die Anforderungen des Kugelfalltests gemäß 21CFR801.410 erfüllen, gemäß welchem das Brillenglas nach Aufprall einer 15,87 mm großen und 16,36 g schweren Stahlkugel aus einer Höhe von 1,27 m nicht vollständig zerstört werden darf.

Das erfindungsgemäß einzusetzende Fluid ermöglicht des Weiteren die Herstellung von Brillengläsern, welche bevorzugt möglichst farbneutral sind und bevorzugt einen geringen Gelbwert von G < 2.0 aufweisen. Bevorzugt zeigen diese Brillengläser auch keine alters- und/oder prozessbedingte Vergilbung über einen Zeitraum von zwei Jahren. Die Ermittlung des Gelbwerts erfolgt nach DIN 6167 und errechnet sich aus den Normfarbwerten X, Y, Z nach

$$G = \frac{a \cdot X - b \cdot Y}{Y} \cdot 100$$

, mit a = 1,301 und b = 1,149 (Normlichtart D65, Normalbeobachter 10°).

Das erfindungsgemäß einzusetzende Fluid ermöglicht des Weiteren die Herstellung von Brillengläsern mit einer Kleinwinkelstreuung von bevorzugt ≤ 0,16 $cd/m^2/lx$, besonders bevorzugt ≤ 0,09 $cd/m^2/lx$ und ganz besonders bevorzugt ≤ 0,05 $cd/m^2/lx$. Die Kleinwinkelstreuung wird bevorzugt gemäß der inzwischen zurückgezogenen DIN EN 167:1995, Absatz 4.2, in einem Radius aus einem Bereich von 1 mm bis 3 mm um den geometrischen Mittelpunkt des Brillenglases gemessen.

Das erfindungsgemäße Fluid ermöglicht auch die Herstellung von Brillengläsern mit einer Großwinkelstreuung von bevorzugt ≤ 1,01, besonders bevorzugt ≤ 0,98 und ganz besonders bevorzugt ≤ 0,54. Die Großwinkelstreuung wird bevorzugt mit dem Gerät haze-gard plus der Firma Byk Gardner ohne Kompensation in einem Radius aus einem Bereich von 15 mm bis 20 mm um den geometrischen Mittelpunkt des Brillenglases gemessen.

Unter optisch homogenen Brillengläsern werden Brillengläser verstanden, welche beispielsweise keine ungewollten Variationen oder abrupten Änderungen des Brechungsindex, der Materialeigenschaften oder der Dichte, keine Grenzflächen oder sonstige Strukturen im Volumen des Brillenglases, sowie keine Einschlüsse von beispielsweise Luft oder anderen Verunreinigungen aufweisen. Unter optisch homogenen Brillengläsern werden auch Brillengläser verstanden, in welchen die Abbildungsleistung nicht vermindert ist. Die Abbildungsleistung eines Brillenglases lässt sich beispielsweise über eine Messung der Modulationsübertragungsfunktion (MTF) bestimmen.

Das erfindungsgemäß einzusetzende Fluid ermöglicht somit die Herstellung von Brillengläsern, die im Hinblick auf den Brechungsindex, die Abbezahl, die Dichte, den Erweichungspunkt, die Schlagzähigkeit, die Farbneutralität und/oder die optische Homogenität konventionell gefertigten Brillengläser entsprechen. Das einzusetzende Fluid ermöglicht des Weiteren die Herstellung von Brillengläsern, die im Hinblick auf die Brechungsindexverteilung und/oder die Abbildungsleistung konventionell gefertigte Brillengläser übertreffen. Im Unterschied zu den konventionellen Verfahren zur Herstellung von fertigen Brillengläsern ist der Materialeinsatz bei dem erfindungsgemäßen Verfahren jedoch deutlich geringer, da mit letzterem das fertige Brillenglas mit fertiger Vorderfläche, d.h. mit fertiger objektseitiger Fläche, welche gemäß DIN EN ISO 13666:2013-10, Absatz 5.8 bestimmungsgemäß in der Brille vom Auge abgewandt liegt, und fertiger Rückfläche, d.h. fertiger augenseitiger Fläche, welche gemäß DIN EN ISO 13666:2013-10, Absatz 5.9 bestimmungsgemäß in der Brille dem Auge zugewandt liegt und gegebenenfalls sogar mit gewünschter Form erhalten werden kann, ohne dass ein Materialabtrag von Oberflächen und/oder eine Formrandung rohkantiger fertiger Brillengläser notwendig ist. Das einzusetzende Fluid ermöglicht des Weiteren die Herstellung von Brillengläsern mit berechneter ortsabhängiger Brechungsindexverteilung. Unter berechneter ortsabhängiger Brechungsindexverteilung ist hierbei zu verstehen, dass bei der Herstellung des Brillenglases jedes Volumenelement an der für dieses Volumenelement vorbestimmten Position auf der zu bedruckenden Oberfläche aufgebracht wird. Die zu bedruckende Oberfläche kann hierbei ein Substrat, ein weiteres Volumenelement, ein Volumenverbund und/oder ein homogener Volumenverbund sein. Die vorbestimmte Position, an welcher ein Volumenelement aufgebracht werden soll, ergibt sich hierbei aus der Berechnung der Oberflächentopographie der Vorderfläche und/oder der Rückfläche, aus der Einteilung nach der Brillenglasform gemäß DIN EN ISO 13666:2013-10, Absatz 8.2, aus der Einteilung nach dem Grad der Fertigstellung gemäß DIN EN ISO 13666:2013-10, Absatz 8.4 und/oder aus der Einteilung nach dem Brillenglastyp gemäß DIN EN ISO 13666:2013-10, Absatz 8.3 des jeweils herzustellenden Brillenglases. Die ortsabhängige Brechungsindexverteilung wird bevorzugt vorab mittels optischer Rechenprogramme, wie beispielsweise ZEMAX (Firma Zemax LLC), berechnet und optimiert. Für die Berechnung müssen bevorzugt die Position des Brillenglases vor dem dafür vorgesehenen Auge, die Pupillendistanz, die Vorneigung des Brillenglases, der Fassungsscheibenwinkel des Brillenglases sowie die Größe des Brillenglases bekannt sein. Darüber hinaus wird, insbesondere bei der Berechnung von Mehrstärken-Brillengläsern, Zweistärken-Brillengläsern, Dreistärken-Brillengläsern, Gleitsicht-Brillengläsern und degressiven Brillengläsern ein Objektabstandsmodell zugrunde gelegt, welches die Position von Objektpunkten im Blickfeld des Brillenträgers relativ zu dessen Augendrehpunkten beschreibt.

Das einzusetzende Fluid ermöglicht die Herstellung von Brillenglas-Halbfertigprodukten, d.h. von Linsenrohlingen mit nur einer optisch fertig bearbeiteten Fläche gemäß DIN EN ISO 13666:2013-10, Absatz 8.4.2, oder von fertigen Brillengläsern, d.h. von Brillengläsern mit zwei fertig bearbeiteten optischen Flächen vor oder nach der Randbearbeitung

gemäß DIN EN ISO 13666:2013-10, Absatz 8.4.6. Die Brillenglas-Halbfertigprodukte können als Einstärken-Brillenglas-Halbfertigprodukte, Mehrstärken-Brillenglas-Halbfertigprodukte oder Gleitsicht-Brillenglas-Halbfertigprodukte gemäß DIN EN ISO 13666:2013-10, Absätze 8.4.3, 8.4.4 und 8.4.5, hergestellt werden. Die fertigen Brillengläser können als Einstärken-Brillengläser, Mehrstärken-Brillengläser, Zweistärken-Brillengläser, Dreistärken-Brillengläser, Gleitsicht-Brillengläser oder degressive Brillengläser gemäß DIN EN ISO 13666:2013-10, Absätze 8.3.1, 8.3.2, 8.3.3, 8.3.4, 8.3.5 und 8.3.6 hergestellt werden. Bevorzugt wird das erfindungsgemäß einzusetzende Fluid zur Herstellung von fertigen Brillengläsern verwendet. Die fertigen Brillengläser können entweder bereits formgerandet hergestellt oder die rohkantigen fertigen Brillengläser können abschließend noch gemäß DIN EN ISO 13666:2013-10, Absatz 8.4.15, formgerandet werden.

Das erfindungsgemäß einzusetzende Fluid weist eine Viskosität bevorzugt aus einem Bereich von 5 mPas bis 20 mPas, weiter bevorzugt aus einem Bereich von 7 mPas bis 15 mPas und besonders bevorzugt aus einem Bereich von 8 mPas bis 11 mPas, jeweils bei der jeweiligen Drucktemperatur, auf. Die Viskosität des erfindungsgemäß einzusetzenden Fluids wird bevorzugt mit dem Rheometer C-VOR 150, Firma Malvern Instruments Ltd., in Platte-Kegel-Anordnung (1° Kegel) mit einer Scherrate von 1000 $s^{-1}$ bei der jeweiligen Drucktemperatur des Fluids gemessen. In vorstehend aufgeführtem Viskositätsbereich ist bei der jeweiligen Drucktemperatur, bevorzugt bei einer Drucktemperatur zwischen 30°C und 80°C, besonders bevorzugt bei einer Drucktemperatur zwischen 40°C und 50°C, eine stabile Ausbildung von Volumenelementen gewährleistet.

Das erfindungsgemäß einzusetzende Fluid weist eine statische Oberflächenspannung bevorzugt aus einem Bereich von 20 mN/m bis 40 mN/m und besonders bevorzugt aus einem Bereich von 25 mN/m bis 35 mN/m, jeweils bei der entsprechenden Drucktemperatur, auf.

Die Oberflächenspannung wird vorzugsweise bei einer Temperatur von 25°C oder der entsprechenden Drucktemperatur mit Hilfe eines Gerätes zur Tropfenkonturanalyse (Pendant-Drop-Methode), beispielsweise mit dem Gerät OCA 20 der Firma DataPhysics Instruments GmbH bestimmt. In vorstehend aufgeführtem Bereich der Oberflächenspannung ist bei der jeweiligen Drucktemperatur, vorzugsweise einer Drucktemperatur zwischen 40°C und 50°C, eine stabile Ausbildung von Volumenelementen gewährleistet.

Die Verdruckung des erfindungsgemäßen Fluids erfolgt vorzugsweise mit einem Druckkopf bzw. einer Druckkopfanordnung mit einer Auflösung von bevorzugt mindestens 300 $\times$ 300 dpi, weiter bevorzugt mindestens 600 $\times$ 600 dpi und besonders bevorzugt mindestens 1200 $\times$ 1200 dpi.

Ein Volumenelement, welches gemäß vorstehenden Ausführungen durch das Zusammenfließen, die Verbindung, die Benetzung und/oder den Kontakt mit wenigstens einem weiteren Volumenelement zunächst einen Volumenverbund ausbildet, welcher dann wiederum in einen homogenen Volumenverbund und abschließend in einen finalen Volumenverbund überführt wird, kann wenigstens eines der nachstehend genannten Fluide umfassen. Ein Volumenelement, welches der Erweiterung eines Volumenverbunds oder eines homogenen Volumenverbunds dient, kann ebenfalls wenigstens eines der nachstehenden Fluide umfassen.

Die in den nachstehenden Fluiden genannten Monomere werden als reaktive Komponenten eingesetzt und unterliegenden dann der jeweils einsetzenden Polymerisationsreaktion.

**I Nicht erfindungsgemäß einzusetzendes Fluid auf Basis von Hybridsystemen**

Unter einem Hybridsystem im Sinne der vorliegenden Erfindung ist eine Zusammensetzung zu verstehen, in der wenigstens zwei chemische Teilsysteme mit unterschiedlichen Härtungsreaktionen eingesetzt werden. Diese Teilsysteme können entweder als eigenständige Systeme unabhängig voneinander unter Polymerisation reagieren, oder aber auch teilweise untereinander reagieren, indem beispielsweise einzelne Komponenten als Reaktionspartner in beiden Härtungsreaktionen auftreten können. Die beteiligten Härtungsreaktionen können identisch oder sehr ähnlich verlaufen oder sich beispielsweise im Härtungsmechanismus, der Härtungsgeschwindigkeit oder dem Vernetzungsgrad unterscheiden.

I.1 Nicht erfindungsgemäß einzusetzendes Fluid auf Basis von Thiol-En-(Meth)acrylat-Hybridsystemen

Thiol-En-(Meth)acrylat-Hybridsysteme sind eine Kombination aus wenigstens einem Thiol-En-System und wenigstens einem (Meth)acrylat-System. Das wenigstens eine (Meth)acrylat-System ist bevorzugt UV- bzw. strahlenhärtbar. Das wenigstens eine Thiol-En-System umfasst wenigstens ein Thiol-Monomer und wenigstens ein En-Monomer. Das wenigstens eine Thiol-Monomer und das wenigstens eine En-Monomer liegen hierbei bevorzugt im stöchiometrischen Verhältnis oder mit einem leichten Überschuss an En-Monomer vor, bevorzugt in einem stöchiometrischen Verhältnis von wenigstens einem Thiol-Monomer zu wenigstens einem En-Monomer aus einem Bereich von 1:1,001 bis 1:1,10, weiter bevorzugt aus einem Bereich von 1:1,01 bis 1:1,05. Durch einen leichten Überschuss an En-Monomer wird ein Restanteil von Thiolgruppen im ausgehärteten Fluid vermieden. Bevorzugt wird als wenigstens ein Thiol-Monomer ein wenigstens difunktionales Thiol-Monomer eingesetzt. Als wenigstens ein Thiol-Monomer wird bevorzugt

wenigstens ein difunktionaler Mercaptoester und/oder wenigstens ein difunktionaler Mercaptothioether eingesetzt. Bevorzugt wird als En-Monomer ein monofunktionales En-Monomer oder ein wenigstens difunktionales En-Monomer eingesetzt. Als wenigstens ein En-Monomer wird bevorzugt wenigstens eine monofunktionale oder difunktionale Vinylverbindung, besonders bevorzugt wenigstens ein monofunktionaler oder difunktionaler Vinylether und/oder wenigstens eine monofunktionale oder difunktionale Allylverbindung eingesetzt.

Das wenigstens eine (Meth)acrylat-System umfasst wenigstens ein (Meth)acrylat-Monomer und/oder wenigstens ein Thio(meth)acrylat-Monomer. Als wenigstens ein (Meth)acrylat-Monomer kann wenigstens ein monofunktionales (Meth)acrylat-Monomer, wenigstens ein difunktionales (Meth)acrylat-Monomer, wenigstens ein trifunktionales (Meth)acrylat-Monomer, wenigstens ein tetrafunktionales (Meth)acrylat-Monomer, wenigstens ein pentafunktionales (Meth)acrylat-Monomer und/oder wenigstens ein hexafunktionales (Meth)acrylat-Monomer in dem wenigstens einen (Meth)acrylat-System vorliegen. Bevorzugt umfasst das wenigstens eine (Meth)acrylat-System wenigstens ein difunktionales (Meth)acrylat-Monomer, wenigstens ein trifunktionales (Meth)acrylat-Monomer, wenigstens ein tetrafunktionales (Meth)acrylat-Monomer, wenigstens ein pentafunktionales (Meth)acrylat-Monomer und/oder wenigstens ein hexafunktionales (Meth)acrylat-Monomer. Umfasst das wenigstens eine (Meth)acrylat-Monomer wenigstens zwei funktionale Gruppen erleichtert dies den Aufbau eines vernetzten Polymernetzwerks. Als wenigstens ein Thio(meth)acrylat-Monomer kann wenigstens ein monofunktionales Thio(meth)acrylat-Monomer, wenigstens ein difunktionales Thio(meth)acrylat-Monomer, wenigstens ein trifunktionales Thio(meth)acrylat-Monomer, wenigstens ein tetrafunktionales Thio(meth)acrylat-Monomer, wenigstens ein pentafunktionales Thio(meth)acrylat-Monomer und/oder wenigstens ein hexafunktionales Thio(meth)acrylat-Monomer in dem wenigstens einen (Meth)acrylat-System vorliegen. Bevorzugt umfasst das wenigstens eine (Meth)acrylat-System wenigstens ein difunktionales Thio(meth)acrylat-Monomer, wenigstens ein trifunktionales Thio(meth)acrylat-Monomer, wenigstens ein tetrafunktionales Thio(meth)acrylat-Monomer, wenigstens ein pentafunktionales Thio(meth)acrylat-Monomer und/oder wenigstens ein hexafunktionales Thio(meth)acrylat-Monomer. Umfasst das wenigstens eine Thio(meth)acrylat-Monomer wenigstens zwei funktionale Gruppen erleichtert auch dies den Aufbau eines eng vernetzten Polymernetzwerks. Umfasst das Thiol-En-(Meth)acrylat-Hybridsystem wenigstens zwei voneinander verschiedene Thiol-Monomere können diese in jedem beliebigen Gewichtsverhältnis zueinander vorliegen.

Umfasst das Thiol-En-(Meth)acrylat-Hybridsystem wenigstens zwei voneinander verschiedene En-Monomere können diese in jedem beliebigen Gewichtsverhältnis zueinander vorliegen.

Umfasst das Thiol-En-(Meth)acrylat-Hybridsystem wenigstens zwei voneinander verschiedene (Meth)acrylat-Monomere können diese in jedem beliebigen Gewichtsverhältnis zueinander vorliegen. In dem Thiol-En-(Meth)acrylat-Hybridsystem können als Thiol-Monomer beispielsweise Glycoldi-(3-mercaptopropionat), Trimethylolpropantri-(3-mercaptopropionat), Pentaerythritoltetra-(3-mercaptopropionat), Glycoldimercaptoacetat, Trimethylolpropantrimercaptoacetat, Pentaerythritoltetramercaptoacetat, Dimercaptodiethylsulfid, Bis-(2-mercaptoethyl)-ether, 4-Mercaptomethyl-3,6-dithia-1,8-octandithiol oder Mischungen hiervon eingesetzt werden.

In dem Thiol-En-(Meth)acrylat-Hybridsystem können als En-Monomer beispielsweise Vinylverbindungen wie 1,4-Butandioldivinylether, Diethylenglycoldivinylether, Triethylenglycoldivinylether, 1,4-Cyclohexandimethanoldivinylether, 1,2,4-Trivinylcyclohexan, Divinylbenzol oder Mischungen hiervon eingesetzt werden.

In dem Thiol-En-(Meth)acrylat-Hybridsystem können als En-Monomer beispielsweise Allylverbindungen wie Triallyl-s-triazintrion, Diallylether, Allylmethacrylat, Diallylsulfid, Diallyldisulfid, Triallylamin, Diallyltrifluoracetamid oder Mischungen hiervon eingesetzt werden.

In dem Thiol-En-(Meth)acrylat-Hybridsystem können als (Meth)acrylat-Monomer beispielsweise Methyl(meth)acrylat, Ethyl(meth)acrylat, Isobutyl(meth)acrylat, Tetrahydrofurfuryl(meth)acrylat, Isobornyl(meth)acrylat, 1,3-Butandioldi(meth)acrylat, 1,4-Butandioldi(meth)acrylat, 1,6-Hexandioldi(meth)acrylat, 1,9-Nonandioldi(meth)acrylat, 3-Methyl-1,5-pentandioldi(meth)acrylat, Ethylenglycoldi(meth)acrylat, Diethylenglycoldi(meth)acrylat, Neopentylglycoldi(meth)acrylat, Dipropylenglycoldi(meth)acrylat, Tripropylenglycoldi(meth)acrylat, Polyethylenglycol-[9EO]-di(metha)crylat, Polyethylenglycol-200-di(meth)acrylat, Polyethylenglycol-400-di(meth)acrylat, Tricyclodecandimethanoldi(meth)acrylat, Trimethylolpropantri(meth)acrylat, Trimethylolpropan-[3EO]-triacrylat, Trimethylolpropan-[3PO]-tri(meth)acrylat, Pentaerythritol-[5EO]-tetra(meth)acrylat, Tris-[2-((meth)acryloyloxy)-ethyl]-isocyanurat, Bis-(ethylthio(meth)acrylat)-sulfid, 2-(Perfluorbutyl)-ethyl(meth)acrylat oder Mischungen hiervon eingesetzt werden. In dem Thiol-En-(Meth)acrylat-Hybridsystem können als Thio(meth)acrylate beispielsweise (Meth)acryloylthioethan, Glycidylthio(meth)acrylate, 1,2-Bis[(meth)acryloylthio]ethan, 1,3-Bis[(meth)acryloylthio]propan, 1,2-Bis[2-(meth)acryloylthioethylthio]-3-[(meth)acryloylthio]propan,1,4-Bis[(meth)acryloylthio]butan, Bis[(2-(meth)acryloylthioethyl]ether, 1,4-bis(acryloylthiomethyl)benzol, 1,4-bis[(meth)acryloylthiomethyl]benzol, 1,4-bis[2-(meth)acryloylthioethylthiomethyl]benzol, Bis[(2-(meth)acryloylthioethyl)]sulfid, Bis(4-acryloylthiophenyl)sulfid, Bis(4-methacryloylthiophenyl)sulfid oder Mischungen hiervon eingesetzt werden.

Das Thiol-En-(Meth)acrylat-Hybridsystem umfasst das wenigstens eine Thiol-En-System in einem Anteil aus einem Bereich von bevorzugt 10 Gew.-% bis 70 Gew.-%, weiter bevorzugt 11 Gew.-% bis 60 Gew.-%, weiter bevorzugt 12 Gew.-% bis 53 Gew.-%, besonders bevorzugt 13 Gew.-% bis 46 Gew.-% und ganz besonders bevorzugt 14 Gew.-

% bis 33 Gew.-%, jeweils bezogen auf das Gesamtgewicht des Thiol-En-(Meth)acrylat-Hybridsystems. Liegt der Anteil des Thiol-En-Systems bei <10 Gew.-% oder bei >70 Gew.-%, jeweils bezogen auf das Gesamtgewicht des Thiol-En-(Meth)acrylat-Hybridsystems, findet keine ausreichende Reaktion des Thiol-En-Systems mit dem (Meth)acrylatsystem statt und es kann kein ausreichend stabiles Thiol-En-(Meth)acrylat-Hybridsystem ausgebildet werden.

Die Aushärtung des Thiol-En-(Meth)acrylat-Hybridsystems erfolgt bevorzugt durch UV-induzierte Polyaddition. Das Thiol-En-(Meth)acrylat-Hybridsystem kann im Unterschied zu kommerziell erhältlichen Druckfluids auf Basis von UV-härtenden (Meth)Acrylat-Monomeren an Luft polymerisiert werden, ohne dass es zu unerwünschten Inhibierungseffekten durch (Luft-)Sauerstoff an der Grenzfläche eines Volumenelements und/oder eines Volumenverbunds und/oder eines homogenen Volumenverbunds jeweils zu Luft kommt. Dies ist ausgesprochen vorteilhaft, da keine Inertgasatmosphäre bereitgestellt werden muss. Demgegenüber hat die Verwendung von UV-härtenden (Meth)acrylat-Monomeren in Druckfluids unter inerten Bedingungen den Nachteil, dass deren Reaktion sehr schnell verläuft. Während des Druckprozesses kann ein Druckfluid, welches UV-härtende (Meth)acrylat-Monomere umfasst, eine ungewollte unvollständige Härtung an der Grenzfläche zu Luft in Folge von Sauerstoffinhibierung der Radikalreaktion zeigen, wodurch ein nachfolgend aufgebrachtes Volumenelement nicht vollständig anbinden kann und im ungünstigsten Fall eine unvollständig gehärtete Schicht im Volumen eines herzustellenden Objekts einschließt. Die Sauerstoffinhibierung der Radikalreaktion lässt sich zwar durch aufwändiges Spülen mit Inertgas umgehen, was allerdings die Reaktionsgeschwindigkeit deutlich erhöht und damit die Prozesskontrolle erschwert. Eine Erhöhung der Reaktionsgeschwindigkeit kann wiederum zu einer schnelleren Härtung der einzeln aufgebrachten Volumenelemente führen, was wiederum die Ausbildung von Grenzflächen im Volumen eines Objekts begünstigt. In jedem Fall kommt es infolge der UV-Härtung zu einer veränderten Oberflächenschicht und auch zu unerwünschten Gradienten und/oder Inhomogenitäten im Volumen eines Objekts, da die Härtungsreaktion von der Oberfläche, von oben und/oder von unten, her erfolgt. Sowohl die Vernetzungsdichte als auch der Brechungsindex ändern sich lokal, was beides unbeabsichtigt nicht erwünscht ist. Des Weiteren weisen Objekte, welche aus einem (Meth)acrylat-Monomere umfassenden Druckfluid aufgebaut wurden, häufig einen sehr niedrigen Erweichungspunkt von $T_g$ <60°C und einen Brechungsindex von etwa $n_e$ = 1,49 bis 1,56 auf. Brechungsindizes von wenigstens 1,56 können beispielsweise bei Verwendung aromatischer (Meth)acrylat-Monomere, dann jedoch nur in Zusammenhang mit einer niedrigen Abbezahl, oder unter Verwendung von wenigstens einem schwefelhaltigen (Meth)acrylat, Thio(meth)acrylat und/oder Mercaptothioether erreicht werden.

Ein einzusetzendes Fluid auf Basis eines Thiol-En-(Meth)acrylat-Hybridsystems ermöglicht die Herstellung von Brillengläsern mit einem Brechungsindex $n_e$ von 1,49 bis 1,65. Thiol-En-Polymere können die mechanischen Eigenschaften von (Meth)acrylat-Polymeren in einem Thiol-En-(Meth)acrylat-Hybridsystem positiv beeinflussen, indem das spröde Netzwerk der (Meth)acrylat-Polymeren durch die Thiol-En-Polymere flexibler wird.

Drucktinten, welche UV-härtende (Meth)acrylat-Monomere umfassen, lassen sich aufgrund der niedrigen Viskosität derselben unterhalb von 50 mPas (25°C), meist gut mittels Inkjet-Verfahren verdrucken.

Das einzusetzende Fluid auf Basis eines Thiol-En-(Meth)acrylat-Hybridsystems weist bevorzugt bei der Drucktemperatur eine Viskosität von weniger als 50 mPas, weiter bevorzugt aus einem Bereich von 5 mPas bis 20 mPas, besonders bevorzugt aus einem Bereich von 7 mPas bis 12 mPas und ganz besonders bevorzugt aus einem Bereich von 8 mPas bis 9 mPas auf. Eine Viskosität aus vorstehend genannten Bereichen ist ein Kompromiss zwischen einer sehr guten Verarbeitbarkeit des Thiol-En-(Meth)acrylat-Hybridsystems mittels unterschiedlichen Druckköpfen oder Multidüsenarrays und der Immobilisierung eines Volumenelements. Je geringer die Viskosität des Fluids auf Basis eines Thiol-En-(Meth)acrylat-Hybridsystems innerhalb der vorstehend genannten Bereiche sein soll, desto bevorzugter umfasst das Thiol-En-System wenigstens einen niedrigviskosen Vinylether.

Bei Thiol-En-(Meth)acrylat-Hybridsystemen erfolgt bei der UV-Härtung die Polyaddition des Thiol-En-Anteils überwiegend parallel zur Polymerisation des (Meth)acrylat-Systems. Die Eigenschaften des entstandenen Copolymers sind eine Kombination aus Poly(meth)acrylat und Thiol-En-Polymer.

Die Aushärtung des Thiol-En-(Meth)acrylat-Hybridsystems erfolgt bevorzugt durch UV-Polymerisation bei Wellenlängen unterhalb 420 nm, bevorzugt mit LED-Strahlern. Als UV-Initiatoren eignen sich beispielsweise Hydroxyphenylketone, $\alpha$-Ketoester, Phenylphosphinoxide und/oder Thioxanthone. Ergänzend zur UV-Polymerisation kann eine thermische Nachhärtung sinnvoll sein, wenn der Polymerisationsgrad nach der UV-Bestrahlung nicht ausreichend ist. Als thermische Co-Initiatoren sind beispielsweise Dialkylperoxide (z.B. Di-tert.-amyl-peroxide), Peroxycarbonate (z.B. tert.-Butylperoxy-2-ethylhexyl-carbonat), Hydroperoxide (z.B. Cumolhydroperoxid), Peroxyester (z.B. tert.-Butyl-peroxybenzoat) geeignet. Die SADT-Temperatur (Grenze der thermischen Stabilität, englisch: self accelerating decomposition temperature) der thermischen Co-Initiatoren sollte >60°C betragen bzw. deutlich oberhalb der Drucktemperatur liegen.

Die Erhöhung der Verarbeitungszeit des Thiol-En-(Meth)acrylat-Hybrid-Systems kann durch Zusatz von sterisch gehinderten Phenolen wie z.B. 2,6-Di-tert.-butyl-4-methylphenol (BHT) in Mengen von 0,1 Gew.-% bis 5 Gew.-%, bezogen auf das Gesamtgewicht des Thiol-En-(Meth)acrylat-HybridSystems, erreicht werden.

Durch Zusatz von UV-Absorbern vom Typ Hydroxyphenylbenzotriazol ergibt sich eine Absorptionskante im Thiol-En-(Meth)acrylat-Hybrid-System in einem Bereich von 350 nm bis 400 nm, abhängig von der chemischen Struktur des UV-Absorbers und seiner Konzentration in dem jeweiligen Thiol-En-(Meth)acrylat-Hybrid-System.

Der Vorteil eines Thiol-En-(Meth)acrylat-Hybridsystems gegenüber einem (Meth)acrylat-System besteht dabei in der Möglichkeit, die Reaktivität über unterschiedliche Polymerisationsmechanismen teilweise oder vollständig zwischen Volumenelementen übertragen zu können. Ebenso lassen sich die mechanischen und thermischen Eigenschaften des gebildeten Polymers gezielter einstellen als bei einem (Meth)acrylat-System.

I.2 Nicht erfindungsgemäß einzusetzendes Fluid auf Basis von Epoxythiol-(Meth)acrylat-Hybridsystemen

Epoxythiol-(Meth)acrylat-Hybridsysteme sind eine Kombination aus wenigstens einem Epoxythiol-System und wenigstens einem (Meth)acrylat-System. Das wenigstens eine (Meth)acrylat-System ist bevorzugt UV-polymerisierbar. Das wenigstens eine Epoxythiol-System umfasst wenigstens ein Epoxid-Monomer und wenigstens ein Thiol-Monomer. Bevorzugt wird als wenigstens ein Epoxid-Monomer ein wenigstens difunktionales Epoxid-Monomer eingesetzt. Bevorzugt wird als wenigstens ein Thiol-Monomer ein wenigstens difunktionales Thiol-Monomer eingesetzt. Als wenigstens ein Epoxid-Monomer wird bevorzugt wenigstens ein Diglycidylether eingesetzt. Als wenigstens ein Thiol-Monomer wird bevorzugt wenigstens ein difunktionaler Mercaptoester und/oder wenigstens ein difunktionaler Mercaptothioether eingesetzt.

Das wenigstens eine (Meth)acrylat-System umfasst wenigstens ein (Meth)acrylat-Monomer und/oder wenigstens ein Thio(meth)acrylat-Monomer. Als wenigstens ein (Meth)acrylat-Monomer kann wenigstens ein monofunktionales (Meth)acrylat-Monomer, wenigstens ein difunktionales (Meth)acrylat-Monomer, wenigstens ein trifunktionales (Meth)acrylat-Monomer, wenigstens ein tetrafunktionales (Meth)acrylat-Monomer, wenigstens ein pentafunktionales (Meth)acrylat-Monomer und/oder wenigstens ein hexafunktionales (Meth)acrylat-Monomer in dem wenigstens einen (Meth)acrylat-System vorliegen. Bevorzugt umfasst das wenigstens eine (Meth)acrylat-System wenigstens ein difunktionales (Meth)acrylat-Monomer, wenigstens ein trifunktionales (Meth)acrylat-Monomer, wenigstens ein tetrafunktionales (Meth)acrylat-Monomer, wenigstens ein pentafunktionales (Meth)acrylat-Monomer und/oder wenigstens ein hexafunktionales (Meth)acrylat-Monomer. Umfasst das wenigstens eine (Meth)acrylat-Monomer jeweils wenigstens zwei funktionale Gruppen erleichtert dies den Aufbau eines eng vernetzten Polymernetzwerks. Als wenigstens ein Thio(meth)acrylat-Monomer kann wenigstens ein monofunktionales Thio(meth)acrylat-Monomer, wenigstens ein difunktionales Thio(meth)acrylat-Monomer, wenigstens ein trifunktionales Thio(meth)acrylat-Monomer, wenigstens ein tetrafunktionales Thio(meth)acrylat-Monomer, wenigstens ein pentafunktionales Thio(meth)acrylat-Monomer und/oder wenigstens ein hexafunktionales Thio(meth)acrylat-Monomer in dem wenigstens einen (Meth)acrylat-System vorliegen. Bevorzugt umfasst das wenigstens eine (Meth)acrylat-System wenigstens ein difunktionales Thio(meth)acrylat-Monomer, wenigstens ein trifunktionales Thio(meth)acrylat-Monomer, wenigstens ein tetrafunktionales Thio(meth)acrylat-Monomer, wenigstens ein pentafunktionales Thio(meth)acrylat-Monomer und/oder wenigstens ein hexafunktionales Thio(meth)acrylat-Monomer. Umfasst das wenigstens eine Thio(meth)acrylat-Monomer wenigstens zwei funktionale Gruppen erleichtert auch dies den Aufbau eines eng vernetzten Polymernetzwerks.

Umfasst das Epoxythiol-(Meth)acrylat-Hybridsystem wenigstens zwei voneinander verschiedene Epoxid-Monomere können diese in jedem beliebigen Gewichtsverhältnis zueinander vorliegen. Umfasst das Epoxythiol-(Meth)acrylat-Hybridsystem wenigstens zwei voneinander verschiedene Thiol-Monomere können diese in jedem beliebigen Gewichtsverhältnis zueinander vorliegen. Umfasst das Epoxythiol-(Meth)acrylat-Hybridsystem wenigstens zwei voneinander verschiedene (Meth)acrylat-Monomere können diesen in jedem beliebigen Gewichtsverhältnis zueinander vorliegen. In dem Epoxythiol-System ist das Verhältnis des wenigstens einen Epoxid-Monomers zu dem wenigstens einen Thiol-Monomer bevorzugt stöchiometrisch.

In dem Epoxythiol-(Meth)acrylat-Hybridsystem liegt der Anteil des Epoxythiol-Systems bevorzugt in einem Bereich von 15 Gew.-% bis 85 Gew.-%, weiter bevorzugt in einem Bereich von 20 Gew.-% bis 80 Gew.-%, besonders bevorzugt in einem Bereich von 25 Gew.-% bis 60 Gew.-% und ganz besonders bevorzugt in einem Bereich von 30 Gew.-% bis 50 Gew.-%, jeweils bezogen auf das Gesamtgewicht des Epoxythiol-(Meth)acrylat-Hybridsystems.

In dem Epoxythiol-(Meth)acrylat-Hybridsystem liegt der Anteil des (Meth)acrylat-Systems bevorzugt in einem Bereich von 5 Gew.-% bis 65 Gew.-%, weiter bevorzugt in einem Bereich von 10 Gew.-% bis 60 Gew.-%, besonders bevorzugt in einem Bereich von 15 Gew.-% bis 50 Gew.-% und ganz besonders bevorzugt in einem Bereich von 20 Gew.-% bis 40 Gew.-%, jeweils bezogen auf das Gesamtgewicht des Epoxythiol-(Meth)acrylat-Hybridsystems.

In dem Epoxythiol-(Meth)acrylat-Hybridsystem kann als wenigstens ein Epoxid-Monomer beispielsweise Ethylglycidylether, n-Butylglycidylether, 2-Ethylhexylglycidylether, C8-C10-Glycidylether (CAS Nr. 68609-96-1), C12-C14-Glycidylether (CAS Nr. 68609-97-2), Cresylglycidylether, p-tert-Butylphenylglycidylether, Nonylphenylglycidylether, Benzylglycidylether, Phenylglycidylether, Bisphenol-A-(2,3-dihydroxypropyl)glycidylether, Diglycidylether, Ethylenglykoldiglycidylether, Diethylenglykoldiglycidylether, Propylenglykoldiglycidylether, Dipropylenglykoldiglycidylether, 1,4-Butandioldiglycidylether, 1,4-Cyclohexandimethanoldiglycidylether, Neopentylglykoldiglycidylether, Polypropylenglykol(400)diglycidylether, 1,6-Hexandioldiglycidylether, Bisphenol-A-diglycidylether, Bisphenol-A-propoxylat-diglycidylether, Polyethylenglykoldiglycidylether, Glyceroldiglycidylether, Resorcinoldiglycidylether, Trimethylolethantriglycidylether, Trimethylolpropantriglycidylether, Triphenylolmethantriglycidylether, Tris(2,3-epoxypropyl)isocyanurat, Tris(4-hydroxyphenyl)methan-triglycidylether, 1,1,1-Tris(4-hydroxyphenyl)ethantriglycidylether, Glyceroltriglycidylether, Glycerolpropoxylattriglycidylether, N,N-Diglycidyl-4-glycidyloxyanilin, Pentaerythritoltetraglycidylether, Dipentaerythritoltetraglycidylether, Tetraglycidylbenzylethan, Sorbitoltetraglycidylether, Tetraglycidyldiaminophenylmethan, Tetraglycidylbisaminomethylcyclohexan zum Einsatz kommen.

In dem Epoxythiol-(Meth)acrylat-Hybridsystem kann als wenigstens ein Thiol-Monomer wenigstens eines der in "I.1 Erfindungsgemäß einzusetzendes Fluid auf Basis von Thiol-En-(Meth)acrylat-Hybridsystemen", nachstehend "I.1 Thiol-En-(Meth)acrylat-Hybridsystem", aufgeführten Thiol-Monomere Verwendung finden.

In dem Epoxythiol-(Meth)acrylat-Hybridsystem kann als wenigstens ein (Meth)acrylat-Monomer oder als wenigstens ein Thio(meth)acrylat-Monomer wenigstens eines der in Abschnitt "I.1 Thiol-En-(Meth)Acrylat-Hybridsystem" aufgeführten (Meth)acrylat-Monomere oder Thio(meth)acrylat-Monomere Verwendung finden.

Der Vorteil eines Epoxythiol-(Meth)acrylat-Hybridsystems gegenüber einem (Meth)acrylat-System besteht dabei in der Möglichkeit, die Reaktivität über unterschiedliche Polymerisationsmechanismen teilweise oder vollständig zwischen Volumenelementen übertragen zu können. Ebenso lassen sich die mechanischen und thermischen Eigenschaften des gebildeten Polymers gezielter einstellen als bei einem (Meth)acrylat-System.

I.3 Nicht erfindungsgemäß einzusetzendes Fluid auf Basis von Epoxy-(Meth)acrylat-Hybridsystemen

Epoxy-(Meth)acrylat-Hybridsysteme sind eine Kombination aus wenigstens einem Epoxid-System und wenigstens einem (Meth)acrylat-System. Das wenigstens eine (Meth)acrylat-System ist bevorzugt UV-polymerisierbar. Das wenigstens eine Epoxid-System umfasst wenigstens ein Epoxid-Monomer. Bevorzugt wird als wenigstens ein Epoxid-Monomer ein wenigstens difunktionales Epoxid-Monomer eingesetzt. Bevorzugt umfasst das wenigstens eine Epoxid-System weiterhin ein wenigstens difunktionales Polyol oder ein wenigstens difunktionales Amin, besonders bevorzugt ein wenigstes difunktionales Polyol.

Das wenigstens eine (Meth)acrylat-System umfasst wenigstens ein (Meth)acrylat-Monomer und/oder ein Thio(meth)acrylat-Monomer. Als wenigstens ein (Meth)acrylat-Monomer kann wenigstens ein monofunktionales (Meth)acrylat-Monomer, wenigstens ein difunktionales (Meth)acrylat-Monomer, wenigstens ein trifunktionales (Meth)acrylat-Monomer, wenigstens ein tetrafunktionales (Meth)acrylat-Monomer, wenigstens ein pentafunktionales (Meth)acrylat-Monomer und/oder wenigstens ein hexafunktionales (Meth)acrylat-Monomer in dem wenigstens einen (Meth)acrylat-System vorliegen. Bevorzugt umfasst das wenigstens eine (Meth)acrylat-System wenigstens ein difunktionales (Meth)acrylat-Monomer, wenigstens ein wenigstens ein trifunktionales (Meth)acrylat-Monomer, wenigstens ein tetrafunktionales (Meth)acrylat-Monomer, wenigstens ein pentafunktionales (Meth)acrylat-Monomer und/oder wenigstens ein hexafunktionales (Meth)acrylat-Monomer. Umfasst das wenigstens eine (Meth)acrylat-Monomer wenigstens zwei funktionale Gruppen erleichtert dies den Aufbau eines eng vernetzten Polymernetzwerks. Als wenigstens ein Thio(meth)acrylat-Monomer kann wenigstens ein monofunktionales Thio(meth)acrylat-Monomer, wenigstens ein difunktionales Thio(meth)acrylat-Monomer, wenigstens ein trifunktionales Thio(meth)acrylat-Monomer, wenigstens ein tetrafunktionales Thio(meth)acrylat-Monomer, wenigstens ein pentafunktionales Thio(meth)acrylat-Monomer und/oder wenigstens ein hexafunktionales Thio(meth)acrylat-Monomer in dem wenigstens einen (Meth)acrylat-System vorliegen. Bevorzugt umfasst das wenigstens eine (Meth)acrylat-System wenigstens ein difunktionales Thio(meth)acrylat-Monomer, wenigstens ein trifunktionales Thio(meth)acrylat-Monomer, wenigstens ein tetrafunktionales Thio(meth)acrylat-Monomer, wenigstens ein pentafunktionales Thio(meth)acrylat-Monomer und/oder wenigstens ein hexafunktionales Thio(meth)acrylat-Monomer. Umfasst das wenigstens eine Thio(meth)acrylat-Monomer wenigstens zwei funktionale Gruppen erleichtert auch dies den Aufbau eines eng vernetzten Polymernetzwerks. Umfasst das Epoxy-(Meth)acrylat-Hybridsystem wenigstens zwei voneinander verschiedene Epoxid-Monomere können diese in jedem beliebigen Gewichtsverhältnis zueinander vorliegen.

Umfasst das Epoxy-(Meth)acrylat-Hybridsystem wenigstens zwei voneinander verschiedene (Meth)acrylat-Monomere können diese in jedem beliebigen Gewichtsverhältnis zueinander vorliegen. Umfasst das Epoxidsystem neben wenigstens einem Epoxid-Monomer wenigstens ein Polyol, liegt das molare Verhältnis des wenigstens einen Epoxid-Monomers zu dem wenigstens einen Polyol bevorzugt in einem Bereich von 1,2 : 1 bis 10 : 1.

Umfasst das Epoxidsystem neben wenigstens einem Epoxid-Monomer wenigstens ein Polyol, liegt der Anteil des wenigstens einen Epoxid-Monomers bevorzugt in einem Bereich von 65 Gew.-% bis 99 Gew.-%, weiter bevorzugt in einem Bereich von 70 Gew.-% bis 98 Gew.-%, besonders bevorzugt in einem Bereich von 75 Gew.-% bis 94 Gew.-% und ganz besonders bevorzugt in einem Bereich von 80 Gew.-% bis 92 Gew.-%, jeweils bezogen auf das Gesamtgewicht des Epoxidsystems. Der Anteil des wenigstens einen Polyols liegt bevorzugt in einem Bereich von 1 Gew.-% bis 35 Gew.-%, weiter bevorzugt in einem Bereich von 2 Gew.-% bis 30 Gew.-%, besonders bevorzugt in einem Bereich von 6 Gew.-% bis 25 Gew.-% und ganz besonders bevorzugt in einem Bereich von 8 Gew.-% bis 20 Gew.-%, jeweils bezogen auf das Gesamtgewicht des Epoxidsystems.

In dem Epoxy-(Meth)acrylat-Hybridsystem liegt der Anteil des Epoxidsystems bevorzugt in einem Bereich von 15 Gew.-% bis 85 Gew.-%, weiter bevorzugt in einem Bereich von 20 Gew.-% bis 80 Gew.-%, besonders bevorzugt in

einem Bereich von 30 Gew.-% bis 50 Gew.-% und ganz besonders bevorzugt in einem Bereich von 40 Gew.-% bis 60 Gew.-%, jeweils bezogen auf das Gesamtgewicht des Epoxy-(Meth)acrylat-Hybridsystems.

In dem Epoxy-(Meth)acrylat-Hybridsystem liegt der Anteil des (Meth)acrylatsystems bevorzugt in einem Bereich von 15 Gew.-% bis 85 Gew.-%, weiter bevorzugt in einem Bereich von 20 Gew.-% bis 80 Gew.-%, besonders bevorzugt in einem Bereich von 30 Gew.-% bis 50 Gew.-% und ganz besonders bevorzugt in einem Bereich von 40 Gew.-% bis 60 Gew.-%, jeweils bezogen auf das Gesamtgewicht des Epoxy-(Meth)acrylat-Hybridsystems.

Als wenigstens ein Epoxid-Monomer kann das Epoxy-(Meth)acrylatsystem beispielsweise wenigstens eines der in Abschnitt "I.2. Erfindungsgemäß einzusetzendes Fluid auf Basis von Epoxythiol-(Meth)acrylat-Hybridsystemen", nachfolgend "I.2 Epoxythiol-(Meth)acrylat-Hybridsystem" genannt, aufgeführten Epoxid-Monomere umfassen.

Als wenigstens ein (Meth)acrylat-Monomer kann das Epoxy-(Meth)acrylatsystem beispielsweise wenigstens eines der in Abschnitt "I.1 Thiol-En-(Meth)acrylat-Hybridsystem" aufgeführten (Meth)acrylat-Monomere und/oder Thio(meth)acrylat-Monomere umfassen.

Als wenigstens ein Polyol kann das Epoxy-(Meth)acrylatsystem wenigstens ein di-, tri-, tetra-, penta- oder hexafunktionales Polyol oder ein oligomeres Polyol enthalten. Als aliphatische Polyole können beispielsweise Ethylenglykol, Cyclohexandimethanol, Triethylenglykol, 1,2-Propylenglykol, 1,4-Butylglykol, 1,5-Pentandiol, 1,2,3- Propantriol, 1,2,6-Hexantriol, Pentaerythrol, 2,2-bis(4-Hydroxycyclohexyl)propan eingesetzt werden. Ein oligomeres Polyol kann beispielsweise aus der Gruppe der Polyester- oder Polyetherpolyole kommen.

Der Vorteil eines Epoxy-(Meth)acrylat-Hybridsystems gegenüber einem (Meth)acrylat-System besteht dabei in der Möglichkeit, die Reaktivität über unterschiedliche Polymerisationsmechanismen auf teilweise oder vollständig zwischen Volumenelementen übertragen zu können. Ebenso lassen sich die mechanischen und thermischen Eigenschaften des gebildeten Polymers gezielter einstellen als bei einem (Meth)acrylat-System.

## II Nicht erfindungsgemäß einzusetzendes Fluid auf Basis von Systemen umfassend wenigstens einen photolatenten Katalysator

Die gezielte Aktivierung der jeweiligen Reaktion innerhalb wenigstens eines Volumenelements, innerhalb wenigstens eines Volumenverbunds, innerhalb wenigstens eines homogenen Volumenverbunds, zwischen benachbart aufgebrachten und/oder aneinander angrenzenden Volumenelementen und/oder zwischen benachbart aufgebrachten und/oder aneinander angrenzenden Volumenverbunden und/oder zwischen benachbart aufgebrachten und/oder aneinander angrenzenden homogenen Volumenverbunden wird bevorzugt mittels wenigstens eines photolatenten Katalysators erreicht. Das Wirkprinzip eines photolatenten Katalysators beruht auf der gezielten Freisetzung des aktiven Katalysators durch Belichtung einer nicht wirksamen oder einer deutlich weniger wirksamen Vorstufe des Katalysators im UV- und/oder VIS-Bereich. Die gezielte Freisetzung des wenigstens einen aktiven Katalysators bietet den Vorteil, dass eine mit diesem wenigstens einen aktiven Katalysator katalysierbare Reaktion nur zu dem gewünschten Zeitpunkt beginnt. Dies wiederum bewirkt, dass die Verarbeitungszeit eines die nicht wirksame oder deutlich weniger wirksame Vorstufe des wenigstens einen Katalysators umfassenden Materials deutlich erhöht ist. Die Unterschiede in der Katalysatorstärke einer photolatenten Base beispielsweise können dabei bis zu 4 Größenordnungen betragen. Bevorzugt liegt die Verarbeitungszeit eines die nicht wirksame oder deutlich weniger wirksame Vorstufe des wenigstens einen Katalysators umfassenden Materials bei ≥ 10 Minuten, besonders bevorzugt bei ≥ 1 Stunde und ganz besonders bevorzugt mehr als 1 Tag. Weiterhin kann ein die nicht wirksame oder deutlich weniger wirksame Vorstufe des wenigstens einen Katalysators umfassendes Material zusätzlich zur Vorstufe des Katalysators wenigstens einen Photosensibilisator umfassen. Ein wenigstens einen photolatenten Katalysator umfassendes Fluid kann auch eine Dunkelhärtung oder Schattenhärtung in Bereichen, welche nicht direkt belichtet wurden, zeigen.

Als wenigstens ein photolatenter Katalysator kann wenigstens eine photolatente Base (PLB) und/oder wenigstens eine photolatente Säure eingesetzt werden. Bevorzugt wird als wenigstens ein photolatenter Katalysator wenigstens eine photolatente Base eingesetzt.

Als wenigstens eine photolatente Säure wird bevorzugt wenigstens ein Diaryliodonium-Salz ($Ar_2I^+$) oder wenigstens ein Triarylsulfonium-Salz ($Ar_3S^+$) verwendet.

Das einzusetzende Fluid umfasst die wenigstens eine photolatente Säure in einem Gesamtanteil bevorzugt aus einem Bereich von 0,001 Gew.-% bis 2 Gew.-%, weiter bevorzugt aus einem Bereich von 0,1 Gew.-% bis 1,0 Gew.-% und besonders bevorzugt aus einem Bereich von 0,2 Gew.-% bis 0,5 Gew.-%, jeweils bezogen auf das Gesamtgewicht des erfindungsgemäß einzusetzenden Fluids. Vorstehend genannte Bereiche gelten sowohl für den Einsatz einer einzigen Art an photolatenter Säure als auch für Gemische voneinander verschiedener photolatenter Säuren. Als wenigstens eine photolatente Base wird bevorzugt wenigstens eine der photolatenten Basenverbindungen gemäß WO 03/033500 A1 oder gemäß WO 2008/119688 A1 eingesetzt. Weiter bevorzugt wird als wenigstens eine photolatente Base wenigstens eine der photolatenten Basenverbindungen gemäß WO 03/033500 A1, Anspruch 1, oder gemäß WO 2008/119688 A1, Anspruch 1, eingesetzt. Besonders bevorzugt wird als wenigstens eine photolatente Base wenigstens eine photolatente Base gemäß WO 03/033500 A1, Anspruch 1, oder gemäß WO 03/033500 A1, Beispiel 1, 5-Benzyl-1,5-diazabicyclo[4.3.0]nonan, eingesetzt.

Das einzusetzende Fluid umfasst die wenigstens eine photolatente Base in einem Gesamtanteil bevorzugt aus einem Bereich von 0,001 Gew.-% bis 5,0 Gew.-%, weiter bevorzugt aus einem Bereich von 0,1 Gew.-% bis 2,0 Gew.-% und besonders bevorzugt aus einem Bereich von 0,2 Gew.-% bis 1 Gew.-%, jeweils bezogen auf das Gesamtgewicht des erfindungsgemäß einzusetzenden Fluids. Fluids umfassend wenigstens eine photolatente Base haben einen besonders günstigen Polymeraufbau, da sowohl bei Schattenhärtung als auch bei Belichtung die jeweiligen Härtungsmechanismen greifen und somit derselbe Polymerverbund entsteht. Vorstehend genannte Bereiche gelten sowohl für den Einsatz einer einzigen Art an photolatenter Base als auch für Gemische voneinander verschiedener photolatenter Basen.

II.1 Nicht erfindungsgemäß einzusetzendes Fluids auf Basis eines Epoxy-Polyol-Systems umfassend wenigstens eine photolatente Säure

Photolatente Säuren werden beispielsweise in wenigstens ein Epoxid-Monomer umfassenden Formulierungen eingesetzt. Typische Vertreter einer photolatenten Säure sind beispielsweise Diaryliodonium-Salze ($Ar_2I^+$) oder die thermisch sehr stabilen Triarylsulfonium-Salze ($Ar_3S^+$). Photolatente Säuren umfassende Formulierungen zeigen in der Regel keine Sauerstoffinhibierung und weisen in der Regel eine Dunkelhärtung oder Schattenhärtung in Bereichen, die nicht belichtet wurden, auf. Als Beispiel einer wenigstens ein Epoxid-Monomer umfassenden Formulierung sei nachstehende Formulierung genannt, welche nach Belichtung unter Freisetzung des Triarylsulfoniumsalzes kationisch gehärtet werden kann:

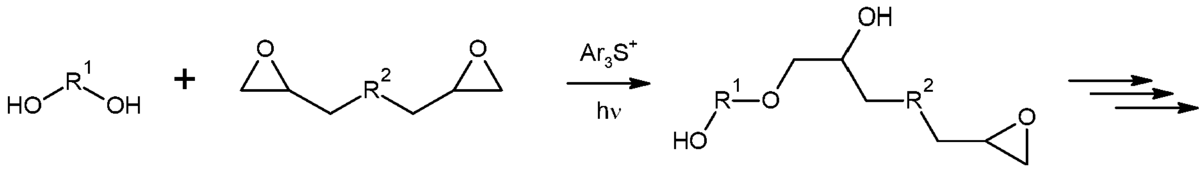


Die Reaktionsgeschwindigkeit der unkatalysierten Reaktion zwischen dem Polyol und dem Epoxid-Monomer ist so langsam, dass keine nennenswerte Dunkelreaktion oder Schattenreaktion abläuft. Die Härtungsreaktion kann beispielsweise durch die Konzentration des Triarylsulfoniumsalzes, durch die Wahl der Belichtungswellenlänge, die Intensität der Strahlungsquelle und die Belichtungsdauer sowie die Temperatur beeinflusst werden.

Das Epoxy-Polyol-System umfasst die wenigstens eine photolatente Säure in einem Gesamtanteil bevorzugt aus einem Bereich von 0,001 Gew.-% bis 2 Gew.-%, weiter bevorzugt aus einem Bereich von 0,1 Gew.-% bis 1,0 Gew.-% und besonders bevorzugt aus einem Bereich von 0,2 Gew.-% bis 0,5 Gew.-%, jeweils bezogen auf das Gesamtgewicht des Epoxy-Polyol-Systems. Vorstehend genannte Bereiche gelten sowohl für den Einsatz einer einzigen Art an photolatenter Säure als auch für Gemische voneinander verschiedener photolatenter Säuren.

II.2 Nicht erfindungsgemäß einzusetzendes Fluids auf Basis eines Epoxythiol-Systems umfassend wenigstens eine photolatente Base

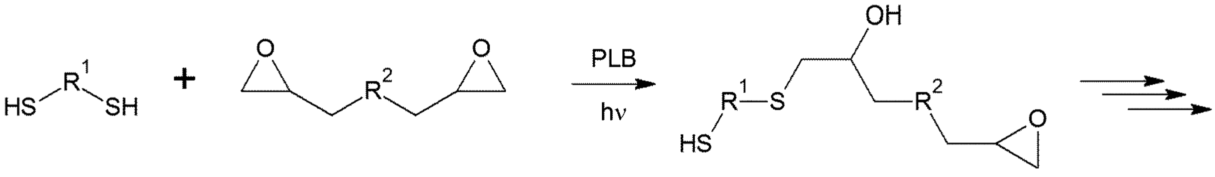


Das Epoxythiol-System umfasst wenigstens ein Epoxid-Monomer und wenigstens ein Thiol-Monomer und/oder ein Thiol-Oligomer. Bevorzugt umfasst das Epoxythiol-System als wenigstens ein EpoxidMonomer ein wenigstens difunktionales Epoxid-Monomer. Bevorzugt umfasst das Epoxythiol-System als wenigstens ein Thiol-Monomer ein wenigstens difunktionales Thiol-Monomer.

Das Epoxythiol-System kann beispielsweise wenigstens eines der in Abschnitt "I.2 Epoxythiol-(Meth)acrylat-Hybridsystem" aufgeführten Epoxid-Monomere umfassen.

Das Epoxythiol-System kann beispielsweise wenigstens eines der in Abschnitt "I.1 Thiol-En-(Meth)acrylat-Hybridsystem", aufgeführten Thiol-Monomere umfassen.

In dem Epoxythiol-System liegen das wenigstens eine Epoxid-Monomer und das wenigstens eine Thiol-Monomer bevorzugt stöchiometrisch zueinander vor.

Als wenigstens eine photolatente Base wird bevorzugt wenigstens eine der photolatenten Basenverbindungen gemäß WO 03/033500 A1, Anspruch 1, oder gemäß WO 2008/119688 A1, Anspruch 1, eingesetzt. Besonders bevorzugt wird als wenigstens eine photolatente Base wenigstens eine photolatente Base gemäß WO 03/033500 A1, Anspruch 1, oder gemäß WO 03/033500 A1, Beispiel 1, 5-Benzyl-1,5-diazabicyclo[4.3.0]nonan, eingesetzt.

Das Epoxythiol-System umfasst die wenigstens eine photolatente Base in einem Gesamtanteil bevorzugt aus einem Bereich von 0,001 Gew.-% bis 5,0 Gew.-%, weiter bevorzugt aus einem Bereich von 0,1 Gew.-% bis 2,0 Gew.-% und besonders bevorzugt aus einem Bereich von 0,2 Gew.-% bis 1 Gew.-%, jeweils bezogen auf das Gesamtgewicht des Epoxythiol-Systems. Vorstehend genannte Bereiche gelten sowohl für den Einsatz einer einzigen Art an photolatenter Base als auch für Gemische voneinander verschiedener photolatenter Basen.

Das Epoxy-Thiol-System wird bevorzugt unmittelbar vor dem Verdrucken gemischt. Sobald das Epoxy-Thiol-System belichtet wird, beschleunigt sich die Polymerisationsreaktion sehr stark. Allerdings sind die Reaktionsgeschwindigkeiten im Vergleich zu den (Meth)acrylatsystemen deutlich niedriger, sodass benachbarte Volumenelemente ohne Weiteres einen homogenen Volumenverbund bilden können. Vor allem kommt es durch die simultane Erzeugung der Base im Volumen zu einer homogeneren Vernetzung. Durch die Unempfindlichkeit gegenüber Sauerstoff kommt es auch nicht zu einer ausgeprägten Oberflächenschicht. Durch die spezielle Form der photolatenten Base ist eine Härtung zudem auch ohne Belichtung oder unter inhomogener Strahlungsverteilung möglich, d.h. auch eine Schattenhärtung ist möglich, es bildet sich überall dasselbe Polymer aus.

Durch den Einsatz wenigstens eines Thiol-Monomers resultiert ein hoher Brechungsindex, wobei sowohl der Brechungsindex einstellbar als auch die Dispersion veränderbar sind ($n_e$ (23°C) = 1,52 bis 1,65). Zudem kann die Reaktivität durch die Konzentration der photolatenten Base, durch die Wahl der Belichtungswellenlänge, die Intensität der Strahlungsquelle und die Belichtungsdauer sowie die Temperatur beeinflusst werden.

## III Nicht erfindungsgemäß einzusetzendes Fluid auf Basis von Hybridsystemen umfassend wenigstens einen photolatenten Katalysator

### III.1 Nicht erfindungsgemäß einzusetzendes Fluid auf Basis von Epoxythiol-Thiol-En-hybridsystemen umfassend wenigstens eine photolatente Base

Das Epoxythiol-Thiol-/En-Hybridsystem umfasst eine Kombination aus wenigstens einem Epoxythiol-System und wenigstens einem Thiol-/En-System. Zur Herstellung des Epoxythiol-Systems werden wenigstens ein Epoxid-Monomer und wenigstens ein Thiol-Monomer benötigt. Bevorzugt umfasst das wenigstens eine Epoxid-Monomer hierbei ein wenigstens difunktionales Epoxid-Monomer. Weiterhin bevorzugt umfasst das wenigstens eine, in dem Epoxythiol-System einsetzbare Thiol-Monomer ein wenigstens difunktionales Thiol-Monomer. Zur Herstellung des Thiol-/En-Systems werden wenigstens ein Thiol-Monomer und wenigstens ein En-Monomer benötigt. Bevorzugt umfasst das wenigstens eine, zur Herstellung des Thiol-/En-Systems einsetzbare Thiol-Monomer ein wenigstens difunktionales Thiol-Monomer. Weiterhin bevorzugt umfasst das wenigstens eine, zur Herstellung des Thiol-/En-Systems einsetzbare En-Monomer ein wenigstens difunktionales En-Monomer. Das in dem Epoxythiol-System einsetzbare wenigstens eine Thiol-Monomer kann gleich wie das oder verschieden zu dem wenigstens einen, in dem Thiol-/En-System einsetzbaren Thiol-Monomer sein. Bevorzugt ist das in dem Epoxythiol-System einsetzbare wenigstens eine Thio-Monomer gleich dem wenigstens einen, in dem Thiol-/En-System einsetzbaren Thiol-Monomer.

Zur Herstellung des Epoxythiol-Thiol-/En-Hybridsystems kann als wenigstens ein Epoxid-Monomer beispielsweise wenigstens eines der in Abschnitt "I.2 Epoxythiol-(Meth)acrylat-Hybridsystem" genannten Epoxid-Monomere eingesetzt werden.

Zur Herstellung des Epoxythiol-Thiol-/En-Hybridsystems kann als wenigstens ein Thiol-Monomer beispielsweise wenigstens eines der in Abschnitt "I.1 Thiol-En-(Meth)acrylat-Hybridsystem" genannten Thiol-Monomere eingesetzt werden.

Zur Herstellung des Epoxythiol-Thiol-/En-Hybridsystems wird als En-Monomer bevorzugt wenigstens eine wenigstens monofunktionale Vinylverbindung und/oder wenigstens eine wenigstens monofunktionale Allylverbindung eingesetzt. Beispielsweise können als wenigstens ein En-Monomer wenigstens eine der in Abschnitt "I.1 Thiol-En-(Meth)acrylat-Hybridsystem" genannten Vinylverbindungen und/oder Allylverbindungen eingesetzt werden.

In dem Epoxythiol-Thiol-/En-Hybridsystem liegen das Epoxythiol-System und das Thiol-/En-Hybridsystem bevorzugt jeweils in einem stöchiometrischen Verhältnis vor.

In dem Epoxythiol-Thiol-/En-Hybridsystem liegt der Anteil des Epoxythiol-Systems bevorzugt in einem Bereich von 15 Gew.-% bis 55 Gew.-%, weiter bevorzugt in einem Bereich 20 Gew.-% bis 50 Gew.-%, besonders bevorzugt in einem Bereich von 35 Gew.-% bis 45 Gew.-% und ganz besonders bevorzugt in einem Bereich von 30 Gew.-% bis 40 Gew.-%, jeweils bezogen auf das Gesamtgewicht des Epoxythiol-Thiol-/En-Hybridsystems.

In dem Epoxythiol-Thiol-/En-Hybridsystem liegt der Anteil des Thiol-/En-Systems bevorzugt in einem Bereich

von 2 Gew.-% bis 25 Gew.-%, weiter bevorzugt in einem Bereich von 3 Gew.-% bis 22 Gew.-%, besonders bevorzugt in einem Bereich von 5 Gew.-% bis 20 Gew.-% und ganz besonders bevorzugt in einem Bereich von 8 Gew.-% bis 15 Gew.-%, jeweils bezogen auf das Gesamtgewicht des Epoxythiol-Thiol-/En-Hybridsystems.

Werden zur Herstellung des Epoxythiol-Thiol-/En-Hybridsystems wenigstens zwei voneinander verschiedene Epoxid-Monomere eingesetzt, können diese in jedem beliebigen Gewichtsverhältnis zueinander vorliegen.

Werden zur Herstellung des Epoxythiol-Thiol-/En-Hybridsystems wenigstens zwei voneinander verschiedene Thiol-Monomere eingesetzt, können diese in jedem beliebigen Gewichtsverhältnis zueinander vorliegen.

Werden zur Herstellung des Epoxythiol-Thiol-/En-Hybridsystems wenigstens zwei voneinander verschiedene En-Monomere eingesetzt, können diese in jedem beliebigen Gewichtsverhältnis zueinander vorliegen.

Zur Herstellung des Epoxythiol-Thiol-/En-Hybridsystems wird wenigstens eine photolatente Base eingesetzt. Als photolatente Base wird bevorzugt wenigstens eine der photolatenten Basenverbindungen gemäß WO 03/033500 A1, Anspruch 1, oder gemäß WO 2008/119688 A1, Anspruch 1, eingesetzt. Besonders bevorzugt wird als wenigstens eine photolatente Base wenigstens eine photolatente Base gemäß WO 03/033500 A1, Anspruch 1, oder gemäß WO 03/033500 A1, Beispiel 1, 5-Benzyl-1,5-diazabicyclo[4.3.0]nonan, eingesetzt.

Zur Herstellung des Epoxythiol-Thiol-/En-Hybridsystems wird die wenigstens eine photolatente Base in einem Gesamtanteil bevorzugt aus einem Bereich von 0,01 Gew.-% bis 5,0 Gew.-%, besonders bevorzugt aus einem Bereich von 0,1 Gew.-% bis 3,0 Gew.-% und ganz besonders bevorzugt aus einem Bereich von 0,5 Gew.-% bis 2,0 Gew.-%, jeweils bezogen auf das Gesamtgewicht des Epoxythiol-Thiol-/En-Hybridsystems, eingesetzt. Vorstehend genannte Bereiche für den Gesamtanteil gelten sowohl für den Einsatz nur einer einzigen Art einer photolatenten Base als auch für den Einsatz von wenigstens zwei voneinander verschiedenen photolatenten Basen.

Zur Herstellung des Epoxythiol-Thiol-/En-Hybridsystems wird weiterhin bevorzugt wenigstens ein Photoinitiator in einem Gesamtanteil bevorzugt aus einem Bereich von 0,01 Gew.-% bis 2,0 Gew.-%, weiter bevorzugt aus einem Bereich von 0,1 Gew.-% bis 1,5 Gew.-% und besonders bevorzugt aus einem Bereich von 0,2 Gew.-% bis 1,0 Gew.-%, jeweils bezogen auf das Gesamtgewicht des Epoxythiol-Thiol-/En-Hybridsystems, eingesetzt. Vorstehend genannte Bereiche für den Gesamtanteil gelten sowohl für den Einsatz nur einer einzigen Art eines Photoinitiators als auch für den Einsatz von wenigstens zwei, voneinander verschiedenen Photoinitiatoren. Der wenigstens eine Photoinitiator kann beispielsweise 2-Hydroxy-2-methyl-1-phenylpropan-2-on (Omnicure 1173, IGM Resins B.V.) sein.

Die Aktivierung erfolgt bevorzugt in einem Bereich von 200 nm bis 450 nm, weiter bevorzugt von 280 nm bis 420 nm und ganz besonders bevorzugt in einem Bereich von 365 nm bis 405 nm. Weiterhin bevorzugt erfolgt die Aktivierung mit einer Bestrahlungsdosis bevorzugt aus einem Bereich von 0,1 $J/cm^2$ bis 20 $J/cm^2$, weiter bevorzugt aus einem Bereich von 0,2 $J/cm^2$ bis 5 $J/cm^2$, besonders bevorzugt aus einem Bereich von 0,5 $J/cm^2$ bis 2 $J/cm^2$. In dem Inkjet-Verfahren kann die Aktivierung nach Aufbringung von wenigstens zwei benachbart aufgebrachten und/oder aneinander angrenzenden Volumenelementen erfolgen, nach Aufbringung wenigstens einer Lage von Volumenelementen, nach Ausbildung wenigstens eines Volumenverbunds und/oder nach Ausbildung wenigstens eines homogenen Volumenverbunds erfolgen. Bevorzugt erfolgt eine abschließende Aktivierung zur Überführung eines homogenen Volumenverbunds in einem finalen Volumenverbund. Die abschließende Aktivierung kann in einem anderen Wellenlängenbereich und/oder mit einer anderen Bestrahlungsdosis erfolgen. Zur abschließenden Aktivierung kann optional zusätzlich eine thermische Behandlung erfolgen. Optional kann ein finaler Volumenverbund abschließend thermisch behandelt werden.

Der Vorteil eines Epoxythiol-Thiol-/En-Hybridsystems gegenüber einem (Meth)acrylat-System besteht dabei in der Möglichkeit, die Reaktivität über unterschiedliche Polymerisationsmechanismen auf teilweise oder vollständig zwischen Volumenelementen übertragen zu können. Ebenso lassen sich die mechanischen und thermischen Eigenschaften des gebildeten Polymers gezielter einstellen als bei einem (Meth)acrylat-System.

### III.2 Nicht erfindungsgemäß einzusetzendes Fluid auf Basis von Epoxythiol-(Meth)acrylat-hybridsystemen umfassend wenigstens eine photolatente Base

Epoxythiol-(Meth)acrylat-Hybridsysteme sind eine Kombination aus wenigstens einem Epoxythiol-System und wenigstens einem (Meth)acrylat-System, wie bereits in Abschnitt "I.2 Epoxythiol-(Meth)acrylat-Hybridsystem" beschrieben. In dem Epoxythiol-System wird das wenigstens eine Epoxid-Monomer bevorzugt stöchiometrisch zu dem wenigstens einen Thiol-Monomer eingesetzt. Werden in dem Epoxythiol-System voneinander verschiedene Epoxid-Monomere und/oder voneinander verschiedene Thiol-Monomere eingesetzt, können die voneinander verschiedenen Epoxid-Monomere und/oder die voneinander verschiedenen Thiol-Monomere jeweils in jedem beliebigen Gewichtsverhältnis zueinander eingesetzt werden.

In dem Epoxythiol-(Meth)Acrylat-Hybridsystem liegt der Anteil des Epoxythiol-Systems bevorzugt in einem Bereich von 20 Gew.-% bis 80 Gew.-%, weiter bevorzugt in einem Bereich von 22 Gew.-% bis 70 Gew.-%, besonders bevorzugt in einem Bereich von 25 Gew.-% bis 60 Gew.-% und ganz besonders bevorzugt in einem Bereich von 30 Gew.-% bis 50 Gew.-%, jeweils bezogen auf das Gesamtgewicht des Epoxythiol-(Meth)Acrylat-Hybridsystems.

In dem Epoxythiol-(Meth)Acrylat-Hybridsystem liegt der Anteil des (Meth)Acrylatsystems bevorzugt in einem

Bereich von 10 Gew.-% bis 60 Gew.-%, weiter bevorzugt in einem Bereich von 13 Gew.-% bis 55 Gew.-%, besonders bevorzugt in einem Bereich von 15 Gew.-% bis 50 Gew.-% und ganz besonders bevorzugt in einem Bereich von 20 Gew.-% bis 40 Gew.-%, jeweils bezogen auf das Gesamtgewicht des Epoxythiol-(Meth)Acrylat-Hybridsystems.

Der Anteil der wenigstens einen photolatenten Base in dem Epoxythiol-(Meth)Acrylat-Hybridsystem liegt bevorzugt in einem Bereich von 0,001 Gew.-% bis 5,0 Gew.-%, weiter bevorzugt aus einem Bereich von 0,1 Gew.-% bis 2,0 Gew.-% und besonders bevorzugt aus einem Bereich von 0,2 Gew.-% bis 1 Gew.-%, jeweils bezogen auf das Gesamtgewicht des Epoxythiol-(Meth)Acrylat-Hybridsystems. Vorstehend genannte Bereiche gelten sowohl für den Einsatz einer einzigen Art an photolatenter Base als auch für Gemische voneinander verschiedener photolatenter Basen.

In Bezug auf die in dem Epoxythiol-(Meth)Acrylat-Hybridsystem bevorzugt einzusetzenden Monomere wird auf die Ausführungen in Abschnitt "I.2 Epoxythiol-(Meth)acrylat-Hybridsystem" verwiesen. In Bezug auf die in dem Epoxythiol-(Meth)Acrylat-Hybridsystem bevorzugt einzusetzende photolatente Base wird auf die Ausführungen in Abschnitt "II Erfindungsgemäß einzusetzendes Material auf Basis von Systemen umfassend wenigstens einen photolatenten Katalysator" verwiesen.

Der Vorteil eines Epoxythiol-(Meth)Acrylat-Hybridsystems gegenüber einem (Meth)acrylat-System besteht dabei in der Möglichkeit, die Reaktivität über unterschiedliche Polymerisationsmechanismen auf teilweise oder vollständig zwischen Volumenelementen übertragen zu können. Ebenso lassen sich die mechanischen und thermischen Eigenschaften des gebildeten Polymers gezielter einstellen als bei einem (Meth)acrylat-System.

**IV Nicht erfindungsgemäß einzusetzendes Fluid auf Basis eines Thiol-En-Systems**

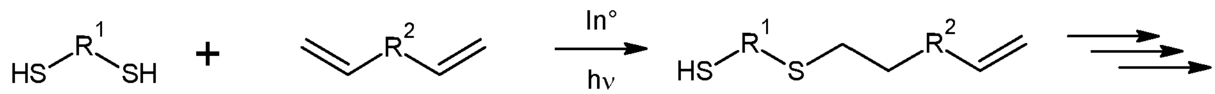


Das Thiol-En-System nutzt die Thiol-En-Reaktion als Härtungsmechanismus. Diese durch einen Radikalinitiator gestartete Reaktion erfährt keine Sauerstoffinhibierung. Durch einen relativ hohen Anteil von schwefelhaltigen Monomeren wird wiederum ein hoher Brechungsindex ermöglicht, wobei Brechungsindex und Dispersion einstellbar sind ($n_e$ (23 °C) 1,50 - 1,65). Zudem kann die Härtungsreaktion durch die Konzentration des Radikalinitiators, durch die Wahl der Belichtungswellenlänge, die Intensität der Strahlungsquelle und die Belichtungsdauer sowie die Temperatur beeinflusst werden.

Die vorstehend in den Abschnitten "I Nicht erfindungsgemäß einzusetzendes Fluid auf Basis von Hybridsystemen", "II Nicht erfindungsgemäß einzusetzendes Material auf Basis von Systemen umfassend wenigstens einen photolatenten Katalysator", "III Nicht erfindungsgemäß einzusetzendes Fluid auf Basis von Hybridsystemen umfassend wenigstens einen photolatenten Katalysator" und "IV Nicht erfindungsgemäß einzusetzendes Fluid auf Basis eines Thiol-En-Systems" einzusetzenden Fluide können optional wenigstens ein Additiv umfassen, welches beispielsweise der Verbesserung der Haftvermittlung des Fluids auf einem zu bedruckenden Substrat, der Verbesserung der Verdruckbarkeit des Fluids, der Verbesserung des Fließverhaltens des Fluids, der Verbesserung der Benetzbarkeit des Substrats, der Erhöhung der Verarbeitungszeit, der Optimierung der Tropfenbildung und/oder der Vermeidung von Schaum dient. Alternativ oder zusätzlich kann das einzusetzende Fluid optional wenigstens ein Additiv ausgewählt aus UV-Absorbern, Lichtschutzmitteln, Stabilisatoren, Bioziden, Farbstoffen, enthalten.

Das nicht erfindungsgemäß einzusetzende Fluid kann auf unterschiedlichste Substrate aufgebracht werden. Nach Applikation auf ein Substrat und anschließender Härtung des erfindungsgemäß einzusetzenden Fluids kann das aus dem erfindungsgemäß einzusetzenden Fluid erhaltene Brillenglas mit dem Substrat verbunden bleiben und zusammen mit dem Substrat das fertige Brillenglas ausbilden. Alternativ kann das erfindungsgemäß einzusetzende Fluid nach Applikation auf ein Substrat und anschließender Härtung von dem Substrat abgetrennt werden und ohne das Substrat das fertige Brillenglas ausbilden. Das Substrat dient in letzterem Fall als wieder zu entfernendes Stützmaterial und/oder als Form.

Bildet das Substrat zusammen mit wenigstens einem ausgehärteten Volumenelement und/oder mit wenigstens einem finalen Volumenverbund das fertige Brillenglas aus, kann das Substrat wenigstens ein polymeres Material und/oder wenigstens ein mineralisches Glas umfassen. Das polymere Material oder das mineralische Glas kann hierbei jeweils als Linsenrohling, d.h. als vorgeformtes Materialstück zur Herstellung einer Linse in irgendeinem Zustand vor der Beendigung der Oberflächenbearbeitung gemäß DIN EN ISO 13666:2013-10, Absatz 8.4.1, als Brillenglas-Halbfertigprodukt, d.h. als Linsenrohling mit nur einer optisch fertig bearbeiteten Fläche gemäß DIN EN ISO 13666:2013-10, Absatz 8.4.2, oder als fertiges Brillenglas, d.h. als Brillenglas mit zwei fertig bearbeiteten optischen Flächen vor oder nach der Randbearbeitung gemäß DIN EN ISO 13666:2013-10, Absatz 8.4.6, vorliegen. Die Brillenglas-Halbfertigprodukte können als Einstärken-Brillenglas-Halbfertigprodukte, Mehrstärken-Brillenglas-Halbfertigprodukte oder Gleitsicht-Brillenglas-Halbfertigprodukte gemäß DIN EN ISO 13666:2013-10, Absätze 8.4.3, 8.4.4 und 8.4.5, vorliegen. Bei den fertigen Brillengläsern kann es sich um Einstärken-Brillengläser, Mehrstärken-Brillengläser, Zweistärken-Brillengläser, Dreistärken-Brillengläser, Gleitsicht-Brillengläser oder degressive Brillengläser gemäß DIN EN ISO 13666:2013-10, Absätze 8.3.1, 8.3.2, 8.3.3, 8.3.4, 8.3.5 und 8.3.6 handeln. Die als Substrat einsetzbaren Linsenrohlinge, Brillenglas-Halbfertigprodukte bzw. fertigen Brillengläser können beispielsweise auf den in nachstehender Tabelle 1 genannten Grundmaterialien basieren.

Tabelle 1: Beispiele für Grundmaterialien für Linsenrohlinge, Brillenglas-Halbfertigprodukte bzw. fertige Brillengläser

| Handelsname | Grundmaterial | Mittlerer Brechungsindex $n_D$ | AbbeZahl $v_D$ |
|---|---|---|---|
| CR-39, CR-330, CR-607, CR-630, RAV 700, RAV 7NG, RAV 7AT, RAV 710, RAV 713, RAV 720 | Poly (allyldiglycolcarbonat), (PADC) | 1,500 | 56 |
| RAVolution | Polyharnstoff / Polyurethan | 1,500 | 54 |
| Trivex | Polyharnstoff / Polyurethan | 1,530 | 45 |
| Panlite, Lexan, Makrolon | Polycarbonat (PC) | 1,586 | 29 |
| MR-6 | Polythiourethan | 1,598 | |
| MR-8 | Polythiourethan | 1,598 | 41 |
| MR-7 | Polythiourethan | 1,664 | 32 |
| MR-10 | Polythiourethan | 1,666 | 32 |
| MR-174 | Polyepisulfid | 1,738 | 32 |
| MGC 1.76 | Polyepisulfid | 1,76 | 30 |
| | Mineral 1.5 | 1,525 | 58 |
| | Mineral 1.6 | 1,604 | 44 |
| | Mineral 1.7 | 1,701 | 39,2 |
| | Mineral 1.8 | 1,802 | 34,4 |
| | Mineral 1.9 | 1,885 | 30 |
| Bezogen auf die Natrium D-Linie | | | |

Bei der Verwendung eines Linsenrohlings als Substrat kann entweder nur eine oder können beide der Flächen mit wenigstens einem Volumenelement belegt werden. Wird nur eine der beiden Flächen mit wenigstens einem Volumenelement belegt, wird die gegenüberliegende Fläche vorzugsweise durch mechanische Bearbeitung, wie beispielsweise Fräsen und/oder Schleifen und/oder Drehen und/oder Polieren, in eine optisch fertig bearbeitete Fläche überführt.

Bei der Verwendung eines Brillenglas-Halbfertigprodukts als Substrat kann entweder die optisch fertig bearbeitete Fläche oder die dieser gegenüberliegende Fläche mit wenigstens einem Volumenelement belegt werden. Wird die optisch fertig bearbeitete Fläche mit wenigstens einem Volumenelement belegt, wird die gegenüberliegende Fläche vorzugsweise durch mechanische Bearbeitung, wie beispielsweise Fräsen und/oder Schleifen und/oder Drehen und/oder Polieren, in eine optisch fertig bearbeitete Fläche überführt.

Bei der Verwendung eines fertigen Brillenglases als Substrat kann entweder nur eine oder beide der fertig bearbeiteten optischen Flächen mit wenigstens einem Volumenelement belegt werden. Bevorzugt wird nur eine der fertig bearbeiteten optischen Flächen mit wenigstens einem Volumenelement belegt.

Besonders bevorzugt wird ein fertiges Brillenglas als Substrat verwendet.

Ganz besonders bevorzugt wird als Substrat wenigstens ein Dünnglas verwendet. Die Oberflächentopographie des Dünnglases kann beispielsweise sphärisch, asphärisch, torisch, atorisch, plan oder progressiv sein. Ein Dünnglas mit einer planen Oberflächentopographie kann mittels einer konvex oder konkav ausgeformten Formschale, welche die Negativform und die Negativoberflächentopographie des herzustellenden Dünnglases aufweist, umgeformt werden. Unter einem Dünnglas mit einer planen Oberflächentopographie ist ein Dünnglas ohne makroskopische sichtbare Biegung oder Krümmung zu verstehen. Bevorzugt wird wenigstens ein Volumenelement oder wenigstens ein finaler Volumenverbund auf die Rückfläche des Dünnglases aufgebracht. Die Rückfläche des Dünnglases ist diejenige Fläche, welche nach Fertigstellung des Brillenglases in einer Brillenfassung dem Auge zugewandt ist, die Vorderfläche des Dünnglases ist diejenige Fläche, welche nach Fertigstellung des Brillenglases in einer Brillenfassung dem Auge abgewandt ist.

Das wenigstens eine Dünnglas kann auf diversen Glaskompositionen, wie beispielsweise Borosilikatglas, Aluminium-Borosilikatglas oder alkalifreiem Borosilikatglas, basieren. Bevorzugt basiert das wenigstens eine Dünnglas auf einem Borosilikatglas oder einem Aluminium-Borosilikatglas.

Das wenigstens eine Dünnglas weist bevorzugt eine mittlere Dicke aus einem Bereich von 10 μm bis 1000 μm, weiter bevorzugt aus einem Bereich von 20 μm bis 800 μm, weiter bevorzugt aus einem Bereich von 30 μm bis 500 μm, besonders bevorzugt aus einem Bereich von 40 μm bis 300 μm und ganz besonders bevorzugt aus einem Bereich von 50 μm bis 3000 μm auf. Insbesondere bevorzugt weist das wenigstens eine Dünnglas eine mittlere Dicke aus einem Bereich von 100 μm bis 250 μm auf. Unter der mittleren Dicke des wenigstens einen Dünnglases wird das arithmetische Mittel verstanden. Unterhalb einer mittleren Dicke von 10 μm ist das wenigstens eine Dünnglas mechanisch zu instabil, um in einem Inkjet-Verfahren als Substrat genutzt werden zu können, ohne dass das wenigstens eine Dünnglas zerbricht. Oberhalb einer mittleren Dicke von 1000 μm kann das wenigstens eine Dünnglas zu Brillengläsern führen, welche eine zu große Randdicke oder eine zu große Mittendicke aufweisen würden. Die mittlere Dicke des wenigstens einen Dünnglases wird bevorzugt mit einem chromatisch-konfokalen Sensor, wie beispielsweise dem Sensor ConfocalDT IFS2405 der Firma Micro-Epsilon Messtechnik GmbH & Co. KG, oder einem interferometrischen Sensor, wie beispielsweise dem Sensor CHRocodile 2 IT der Firma Precitec GmbH & Co. KG, bestimmt. Die mittlere Dicke des wenigstens einen Dünnglases wird bevorzugt anhand des wenigstens einen Dünnglases vor dem Aufbringen wenigstens eines Volumenelements bestimmt. Das wenigstens eine Dünnglas weist bevorzugt eine Oberflächenrauigkeit Ra von < 10 nm auf. Weiter bevorzugt liegt die Oberflächenrauigkeit Ra des wenigstens einen Dünnglases in einem Bereich von 0,1 nm bis 0,8 nm, besonders bevorzugt in einem Bereich von 0,3 nm bis 0,7 nm und ganz besonders bevorzugt in einem Bereich von 0,4 nm bis 0,6 nm. Vorstehend genannte Werte für die Oberflächenrauigkeit Ra beziehen sich jeweils auf die Vorderfläche und die Rückfläche des wenigstens einen nicht umgeformten, planen Dünnglases. Nach einer Umformung gelten vorstehend genannte Werte jeweils nur für diejenige Oberfläche des wenigstens einen Dünnglases, welche nicht mit dem zur Umformung verwendeten Formkörper in Kontakt gebracht wurde. In Abhängigkeit vom zur Umformung eingesetzten Formkörper können vorstehend genannte Werte auch für die Oberfläche des wenigstens einen Dünnglases gelten, welche mit dem zur Umformung eingesetzten Formkörper in Kontakt war. Die Oberflächenrauigkeit Ra des wenigstens einen Dünnglases wird bevorzugt mittels Weißlichtinterferometrie, bevorzugt mit dem Gerät NewView 7100 (Firma Zygo Corporation), bestimmt. Weist das wenigstens eine Dünnglas weitere oberflächliche Unebenheiten auf, so kann die flächenmäßige Analyse der jeweiligen Oberfläche weiterhin durch phasenmessende Deflektometrie, bevorzugt mit dem Gerät SpecGage (Firma 3D-Shape GmbH), bestimmt werden.

Das wenigstens eine Dünnglas kann wenigstens ein Farbmittel oder kein Farbmittel umfassen. Bevorzugt umfasst das wenigstens eine Dünnglas kein Farbmittel.

Weiterhin bevorzugt liegt die Transmission des wenigstens einen Dünnglases ohne Farbmittel im Wellenlängenbereich von 400 nm bis 800 nm bei ≥ 90%, besonders bevorzugt bei ≥ 92%. Die Transmission des wenigstens einen Dünnglases ohne Farbmittel wird bevorzugt mittels eines UV/VIS Spektralphotometers, bevorzugt mit dem Messgerät LAMBDA 950 UV/Vis/NIR Spectrophotometer (Firma Perkin Elmer Inc.), bestimmt.

Das wenigstens eine Dünnglas weist bevorzugt einen Brechungsindex aus einem Bereich von n = 1,490 bis n = 1,950, weiter bevorzugt aus einem Bereich von n = 1,501 bis n = 1,799, besonders bevorzugt aus einem Bereich von n = 1,510 bis n = 1,755 und ganz besonders bevorzugt aus einem Bereich von n = 1,521 bis n= 1,747 auf, wobei der Brechungsindex bei einer Temperatur von 21 °C für die Wellenlänge der Natrium-D-Linie angeben ist.

Dünngläser sind beispielsweise kommerziell erhältlich unter den Bezeichnungen D 263® T eco, D 263® LA eco, D 263® M, AF 32® eco, SCHOTT AS 87 eco, B 270® i, jeweils Fa. Schott AG, Corning Willow Glass oder Corning Gorilla Glass, jeweils Fa. Corning Inc.

Das Substrat kann keine optische Korrektionswirkung aufweisen. Alternativ kann das Substrat mit einer optischen Korrektionswirkung und/oder einer Bildfehlerkorrektion für das blickende Auge ausgestattet sein. Unter optischer Korrektionswirkung wird die sphärische Korrektion, die astigmatische Korrektion und die Korrektion der Achslage sowie optional die Korrektion durch ein Prisma mit Basislage verstanden. Diese optische Korrektionswirkung ist herkömmlicherweise für die Ferne oder für die Nähe in Einstärken-Brillengläsern verwirklicht. Bei Mehrstärken-Brillengläsern, Zweistärken-Brillengläsern, Dreistärken-Brillengläsern, Gleitsicht-Brillengläsern oder degressiven Brillengläsern kann die optische Korrektionswirkung für die Ferne und/oder für die Nähe jeweils eine sphärische Korrektion, eine astigmatische Korrektion, eine Korrektion der Achslage sowie optional eine Korrektion durch ein Prisma mit Basislage beinhalten. Die Bildfehlerkorrektion für das blickende Auge wird, unabhängig davon, ob es sich um eine Bildfehlerkorrektion für die Ferne oder für die Nähe handelt, bevorzugt analog zu Werner Köppen "Konzeption und Entwicklung von Gleitsichtgläsern", Deutsche Optiker Zeitschrift DOZ, Oktober 1995, Seite 42 - 45, berechnet. Hierzu werden die Flächeneigenschaften

mindestens einer Substratoberfläche in einem Optimierungsprozess durch Iteration so lange verändert bis eine gewünschte Bildfehlerverteilung für das blickende Auge innerhalb einer vorgegebenen Toleranz erreicht ist, d.h. bis die Merit-Funktion einen vorgegeben Wert unterschritten hat.

Sofern das zu beschichtende Substrat bereits mit einer optischen Korrektionswirkung und/oder einer Bildfehlerkorrektion für das blickende Auge ausgestattet ist, kann das aufzubringende wenigstens eine Volumenelement dazu dienen, die optische Korrektionswirkung und/oder die Bildfehlerkorrektion für das blickende Auge zu verändern.

Umfasst das Substrat sowohl wenigstens ein polymeres Material als auch wenigstens ein mineralisches Glas, ist das mineralische Glas bevorzugt als Dünnglas und das polymere Material bevorzugt als Brillenglas-Halbfertigprodukt oder als fertiges Brillenglas oder als wenigstens eine Kunststofffolie ausgebildet.

Umfasst das Substrat wenigstens ein Dünnglas und wenigstens eine Kunststofffolie als polymeres Material, ist die wenigstens eine Kunststofffolie bevorzugt zwischen wenigstens zwei Dünngläsern angebracht. Die wenigstens eine Kunststofffolie basiert bevorzugt auf Polyethylen, Polypropylen, Polyethylenterephthalat, Polyethylennaphthalat, Polycarbonat, Polymethylmethacrylat, Polyvinylchlorid, Polyvinylacetat, Polyvinylbutyrat und/oder Mischungen hiervon. Die wenigstens eine Kunststofffolie kann beispielsweise mit Cellulosetriacetat stabilisiert werden. Die wenigstens eine Kunststofffolie kann eingefärbt oder nicht eingefärbt sein. Soll das wenigstens eine Kunststofffolie und wenigstens ein Dünnglas umfassende Substrat eingefärbt sein, ist bevorzugt die wenigstens eine Kunststofffolie eingefärbt. Die wenigstens eine Kunststofffolie weist bevorzugt eine mittlere Dicke aus einem Bereich von 10 $\mu$m bis 600 $\mu$m, besonders bevorzugt aus einem Bereich von 50 $\mu$m bis 400 $\mu$m auf und ganz besonders bevorzug aus einem Bereich von 80 $\mu$m bis 250 $\mu$m auf.

Umfasst bei dieser Ausführungsform das zu beschichtende Substrat wenigstens ein Dünnglas und wenigstens ein fertiges Brillenglas als polymeres Material, kann sich wenigstens ein Dünnglas auf der Vorderfläche und/oder auf der Rückfläche des fertigen Brillenglases befinden. Bevorzugt befindet sich wenigstens ein Dünnglas auf der Vorderfläche des fertigen Brillenglases und wenigstens ein Volumenelement wird auf die Rückfläche des fertigen Brillenglases aufgebracht.

Umfasst bei dieser Ausführungsform das zu beschichtende Substrat wenigstens ein Dünnglas und wenigstens ein Brillenglas-Halbfertigprodukt als polymeres Material wird bevorzugt zunächst die optisch nicht fertig bearbeitete Fläche bearbeitet und dann die Vorderfläche und/oder die Rückfläche des so erhaltenen fertigen Brillenglases mit wenigstens einem Dünnglas verbunden. Alternativ wird bei der Verwendung eines Brillenglas-Halbfertigprodukts als polymeres Material das wenigstens eine Dünnglas mit der bereits fertig bearbeiteten optischen Fläche verbunden, die optisch nicht fertig bearbeitete Fläche bearbeitet und diese bearbeitete Fläche optional anschließend mit wenigstens einem weiteren Dünnglas verbunden. Die Verbindung mit wenigstens einem weiteren Dünnglas ist hierbei bevorzugt. Bevorzugt handelt es sich bei der fertig bearbeiteten optischen Fläche des Brillenglas-Halbfertigprodukts um dessen Vorderfläche und bei der optisch nicht fertig bearbeiteten Fläche um dessen Rückfläche. Alternativ zu der Überführung der optisch nicht fertig bearbeiteten Fläche in eine zweite optisch fertig bearbeitete Fläche und deren Verbindung mit wenigstens einem Dünnglas kann diese zweite Fläche vor oder nach Überführung in eine zweite optisch fertig bearbeitete Fläche mit wenigstens einem Volumenelement oder wenigstens einer Beschichtung versehen werden. Diese Beschichtung wird bevorzugt aus der Gruppe bestehend aus wenigstens einer Hartlackschicht, wenigstens einer Entspiegelungsschicht, wenigstens einer Antibeschlagschicht, wenigstens einer elektrisch leitfähigen oder elektrisch halbleitenden Schicht und wenigstens einer Clean-Coat-Schicht ausgewählt. Besonders bevorzugt sind wenigstens eine Hartlackschicht, wenigstens eine Entspiegelungsschicht und wenigstens eine Clean-Coat-Schicht als Beschichtung, wobei die wenigstens eine Hartlackschicht die dem Substrat am nächsten liegende Schicht und die wenigstens eine Clean-Coat-Schicht die am weitesten vom Substrat entfernt liegende Schicht ist.

Sofern die mit wenigstens einem Volumenelement belegte Oberfläche des Substrats mit wenigstens einer Beschichtung belegt werden soll, kann diese wenigstens eine Beschichtung aus der Gruppe bestehend aus wenigstens einer Hartlackschicht, wenigstens einer Entspiegelungsschicht, wenigstens einer Antibeschlagschicht, wenigstens einer elektrisch leitfähigen oder elektrisch halbleitenden Schicht, wenigstens einer photochromen Schicht, wenigstens einer farbgebenden Schicht und wenigstens einer Clean-Coat-Schicht ausgewählt werden.

Das wenigstens eine, mit der Vorderfläche des fertigen Brillenglases verbundene Dünnglas kann identisch oder verschieden, beispielsweise in Bezug auf die Glaskomposition, die mittlere Dicke und/oder die Form, zu dem wenigstens einen, mit der Rückfläche des fertigen Brillenglases verbundenen Dünnglas sein. Gleiches gilt auch bei der Verwendung wenigstens eines Brillenglas-Halbfertigprodukts oder wenigstens einer Kunststofffolie als polymeres Material. Bei Verwendung eines Brillenglas-Halbfertigprodukts wird hierbei die optisch nicht fertig bearbeitete Fläche vor der Verbindung mit wenigstens einem Dünnglas in eine optisch fertig bearbeitete Fläche überführt.

Die Verbindung des wenigstens einen Dünnglases mit der optisch fertig bearbeiteten Fläche, bevorzugt der Vorderfläche, des Brillenglas-Halbfertigprodukts bzw. mit einer der fertig bearbeiteten optischen Flächen, bevorzugt der Vorderfläche, des fertigen Brillenglases erfolgt bevorzugt stoffschlüssig und formschlüssig. Die Rückfläche des wenigstens einen Dünnglases und/oder die optisch fertig bearbeitete Vorderfläche des Brillenglas-Halbfertigprodukts bzw. des fertigen Brillenglases kann mit wenigstens einer Beschichtung versehen sein. Diese wenigstens eine Beschichtung kann

wenigstens eine farbgebende Schicht, wenigstens eine photochrome Schicht und/oder wenigstens eine polarisierende Schicht umfassen.

Die optionale, bevorzugte Verbindung der zweiten fertig bearbeiteten optischen Fläche des Brillenglas-Halbfertigprodukts bzw. des fertigen Brillenglases mit wenigstens einem weiteren Dünnglas erfolgt bevorzugt ebenfalls stoffschlüssig und formschlüssig.

Die Beschichtung der Vorderfläche und/oder der Rückfläche des wenigstens einen Dünnglases kann jeweils mittels eines PVD-Verfahrens und/oder eines Nassbeschichtungsprozesses wie der Tauch- oder der Schleuderbeschichtung erfolgen. Die anschließende Aushärtung der mit Nassbeschichtungsverfahren erhaltenen Beschichtung kann entweder thermisch oder strahlungshärtend erfolgen. Bevorzugt erfolgt die Aushärtung dieser Beschichtung strahlungshärtend.

Die Verbindung der jeweils optisch fertig bearbeiteten Fläche des Brillenglas-Halbfertigprodukts bzw. der wenigstens einen fertig bearbeiteten optischen Fläche des fertigen Brillenglases bzw. der wenigstens einen Kunststofffolie jeweils mit dem wenigstens einen Dünnglas erfolgt bevorzugt mittels eines Klebemittels. Das Klebemittel kann hierbei beispielsweise als Primer oder Ausgleichsmaterial für die unterschiedliche Wärmeausdehnung der einzelnen Komponenten dienen. Weiterhin kann über die Auswahl des Klebemittels eine Angleichung eines gegebenenfalls vorhandenen Brechungsindexunterschieds $\Delta n_e$ der einzelnen Komponenten zueinander erzielt werden.

Vorzugsweise erfolgt hierbei nicht nur die Angleichung des Brechungsindex $n_e$, sondern auch die Angleichung der Dispersion, so dass die Änderung des Brechungsindex der einzelnen Komponenten über das sichtbare Spektrum hinweg gleich ist. Einsetzbare Klebemittel sind beispielsweise in der DE 10 2012 210 185 A1, der WO 2009/056196 A1 oder der WO 2015/121341 A1 beschrieben. Bevorzugt werden die einzelnen Komponenten mittels eines Klebemittels basierend auf einer aminkatalysierten Thiolhärtung von Epoxidharzen analog WO 2015/121341 A1, insbesondere analog Anspruch 1 der WO 2015/121341 A1, bei einer Temperatur aus einem Bereich von 20°C bis 80°C, bevorzugt aus einem Bereich von 40°C bis 70°C und besonders bevorzugt aus einem Bereich von 45°C bis 65°C, miteinander verbunden.

Zwischen der, der fertig bearbeiteten optischen Fläche des Brillenglas-Halbfertigprodukts bzw. des fertigen Brillenglases zugewandten Oberfläche des wenigstens einen Dünnglases und der fertig bearbeiteten optischen Fläche kann wenigstens eine Schicht vorhanden sein. Diese wenigstens eine Schicht weist bevorzugt die gleiche Oberflächentopographie wie die jeweils darunter liegende Oberfläche, auf die diese wenigstens eine Schicht aufgebracht wurde, auf. Geringfügige Abweichungen in der Oberflächentopographie der beiden zusammenzufügenden Oberflächen können beispielsweise mittels eines Klebemittels verfüllt werden. Für eine formschlüssige Verbindung der jeweiligen Oberflächen ist es bevorzugt, dass die Krümmungsradien der jeweils miteinander zu verbindenden Komponenten bevorzugt weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander abweichen. Bevorzugt weisen das wenigstens eine Dünnglas sowie das Brillenglas-Halbfertigprodukt bzw. das fertige Brillenglas vor dem Zusammenfügen mittels eines Klebemittels einen identischen Durchmesser und einen identischen Krümmungsradius auf. Bevorzugt weist die wenigstens eine Kunststofffolie einen Durchmesser auf, welcher ausreichend groß ist, dass die wenigstens eine Kunststofffolie die Vorderfläche des augenseitigen Dünnglases und die Rückfläche des objektseitigen Dünnglases komplett bedeckt. Etwaig überstehende Kunststofffolie wird bevorzugt abgeschnitten. Für den Fall, dass die wenigstens eine Kunststofffolie bereits den gleichen Krümmungsradius wie das hiermit zu verbindende Dünnglas aufweist, weist die wenigstens eine Kunststofffolie bevorzugt den identischen Durchmesser wie das Dünnglas auf.

Soll ein finaler Volumenverbund wieder von dem Substrat abgetrennt werden, kann vor dem Aufbringen des wenigstens einen Volumenelements auf das Substrat dieses mit wenigstens einer Haftschicht oder wenigstens einer Trennschicht, beispielsweise mit einer Schicht eines organischmodifizierten Silans bzw. Siloxans, versehen werden. Das Substrat kann auch mit der gewünschten Beschichtung des Brillenglases belegt sein, welche dann mitsamt dem finalen Volumenverbund von dem Substrat getrennt wird.

Unabhängig davon, ob nach der Applikation eines der vorstehend beschriebenen Fluide auf ein Substrat ein erhaltener finaler Volumenverbund wieder vom Substrat entfernt wird oder nicht, ist es bevorzugt, dass der erhaltene finale Volumenverbund wenigstens auf der dem Substrat abgewandten Oberfläche keiner mechanischen Bearbeitung, wie beispielsweise Fräsen und/oder Schleifen und/oder Drehen und/oder Polieren, unterzogen wird.

## Beispiele

### **I Herstellung eines** nicht erfindungsgemäßen **Fluids**

Beispiel 1: Herstellung eines Fluids auf Basis eines Thiol-En-(Meth)acrylat-Hybridsystems

| **Teil A** | | Gew.-% |
|---|---|---|
| Pentaerythritoltetrakis(3-mercaptopropionat) | PETMP | 52,63 |
| **Teil B** | | |
| 1,3,5- Triallyl-1,3,5-triazin-2,4,6-(1H,3H,5H)trion | TTT | 36,26 |
| 1,6-Hexandioldiacrylat | HDDA | 9,07 |
| 2,6-Di-tert-butyl-4-methylphenol | BHT | 0,45 |
| 2-Hydroxy-2-methyl-1-phenylpropan-1-on | Omnicure 1173 | 1,36 |
| Nichtionisches Fluortensid | Zonyl FSN | 0,23 |

Die Bestandteile des Teils B wurden bei Raumtemperatur vorgemischt. Die erhaltenen Teile wurden unter Rühren in einem Mischungsverhältnis von 50 Vol-% Teil A zu 50 Vol-% Teil B bzw. 52,63 Gew-% Teil A zu 47,37 Gew% Teil B verrührt.

Beispiel 2: Herstellung eines Fluids auf Basis eines Thiol-En-(Meth)acrylat-Hybridsystems

| | | Gew.-% |
|---|---|---|
| Trimethylolpropantrimercaptopropionat | TPMP | 12,59 |
| 1,4-Butandioldivinylether | BDDVE | 6,78 |
| Dipropyleng lycoldiacrylat | DPGDA | 77,48 |
| 2,6-Di-tert-butyl-4-methylphenol | BHT | 0,97 |
| 2-(2H-Benzotriazol-2-yl)-4-(1,1,3,3-tetramethylbutyl)phenol | Tinuvin 329 | 0,24 |
| 2-Hydroxy-2-methyl-1-phenylpropan-1-on | Omnicure 1173 | 0,48 |
| 2,4,6-Trimethylbenzoyldiphenylphosphinoxid | Omnirad TPO | 1,45 |

Die Hauptkomponenten des Fluids wurden gemischt und die Additive anschließend unter Rühren hinzugegeben.

Beispiel 3: Herstellung eines Fluids auf Basis eines Thiol-En-(Meth)acrylat-Hybridsystems

| | | Gew.-% |
|---|---|---|
| Dimercaptodiethylsulfid | DMDS | 8,48 |
| Trivinylcyclohexan | TVCH | 5,98 |
| Bis(2-methacryloylthioethyl)sulfid | S-2EG | 81,93 |
| 2,6-Di-tert-butyl-4-methylphenol | BHT | 0,96 |
| 2-(2H-Benzotriazol-2-yl)-4-(1,1,3,3-tetramethylbutyl)phenol | Tinuvin 329 | 0,24 |
| 2-Hydroxy-2-methyl-1-phenylpropan-1-on | Omnicure 1173 | 0,96 |
| 2,4,6-Trimethylbenzoyldiphenylphosphinoxid | Omnirad TPO | 1,45 |

Die Hauptkomponenten des Fluids wurden gemischt und die Additive anschließend unter Rühren hinzugegeben.

Beispiel 4: Herstellung eines Fluids auf Basis eines Epoxythiol-(Meth)acrylat-Hybridsystems

| **Teil A** | | Gew.-% |
|---|---|---|
| Bisphenol-F-diglycidylether | Rütapox 0158 | 19,10 |
| Bisphenol-A-diglycidylether | Rütapox 0162 | 19,10 |
| 3-Glycidyloxypropyltrimethoxysilan | GPTS | 1,15 |
| Dipropylenglcoldiacrylat | DPGDA | 30,56 |
| 2,6-Di-tert-butyl-4-methylphenol | BHT | 0,38 |
| 2-Hydroxy-2-methyl-1-phenylpropan-1-on | Omnicure 1173 | 1,14 |
| **Teil B** | | |
| Pentaerythritoltetrakis(3-mercaptopropionat) | PETMP | 28,53 |
| 1,4-Diazabicyclo[2.2.2]octan | DABCO | 0,04 |

Die Bestandteile des Teil A und des Teils B wurden jeweils bei Raumtemperatur unter Rühren gemischt. Die erhaltenen Teile wurden unter Rühren in einem Mischungsverhältnis 71,43 Gew-% Teil A zu 28,57 Gew% Teil B verrührt.

Beispiel 5: Herstellung eines Epoxy(meth)acrylat-Hybridsystems

| **Teil A** | | Gew.-% |
|---|---|---|
| 3,4-Epoxycyclohexylmethyl-3,4-epoxycyclohexancarboxylat | Celloxide 2021P | 20,00 |
| Bis((3,4-epoxycyclohexyl)methyl)adipat | ERL 4299 | 20,00 |
| 2-Ethylhexan-1,3-diol | EHD | 8,00 |
| 3-Glycidyloxypropyltrimethoxysilan | GPTS | 0,40 |
| Triarylsulfonium-Hexafluoroantimonat, ca. 50% in Propylencarbonat | Cyracure 6976 | 1,60 |
| **Teil B** | | |
| Tripropylenglcoldiacrylat | TPGDA | 48,78 |
| 2,6-Di-tert-butyl-4-methylphenol | BHT | 0,24 |
| 2-Hydroxy-2-methyl-1-phenylpropan-1-on | Omnicure 1173 | 0,98 |

Die Bestandteile des Teil A und des Teils B wurden jeweils bei Raumtemperatur unter Rühren gemischt. Die erhaltenen Teile wurden unter Rühren in einem Mischungsverhältnis 50,0 Gew-% Teil A zu 50,0 Gew% Teil B verrührt, wobei der Anteil an Teil B (Acrylat-Anteil) aufgrund der Unabhängigkeit der beiden Reaktionssysteme variiert werden kann.

Beispiel 6: Herstellung eines Epoxythiol-Thiol-/En-Hybridsystems umfassend eine photolatente Base

| **Teil A** | | Gew.-% |
|---|---|---|
| Bisphenol-F-diglycidylether | Rütapox 0158 | 23,98 |
| Bisphenol-A-diglycidylether | Rütapox 0162 | 15,99 |
| 3-Glycidyloxypropyltrimethoxysilan | | 1,20 |

(fortgesetzt)

| Teil A | | Gew.-% |
|---|---|---|
| 1,3,5-Triallyl-1,3,5-triazin-2,4,6-(1H,3H,5H)trion | TTT | 11,99 |
| 2-Hydroxy-2-methyl-1-phenylpropan-1-on | Omnicure 1173 | 2,40 |
| **Teil B** | | |
| Präpolymer GST/XDI (100 Teile 4-Mercaptomethyl-3,6-dithia-1,8-octandithiol (GST) + 16 Teile 1,3-Xylylendiisocyanat (XDI) | | 42,73 |
| 1-Benzyloctahydropyrrolo[1,2-a]pyrimidin | CGI 90 | 1,71 |

Die Bestandteile des Teil A und des Teils B wurden jeweils bei Raumtemperatur unter Rühren gemischt. Die erhaltenen Teile wurden unter Rühren in einem Mischungsverhältnis 55,56 Gew-% Teil A zu 44,44 Gew% Teil B verrührt.

Beispiel 7: Herstellung eines Epoxythiol-Thiol-/En-Hybridsystems umfassend eine photolatente Base

| Teil A | | Gew.-% |
|---|---|---|
| Bisphenol-F-diglycidylether | Rütapox 0158 | 23,48 |
| Bisphenol-A-diglycidylether | Rütapox 0162 | 15,65 |
| 3-Glycidyloxypropyltrimethoxysilan | GPTS | 1,17 |
| 1,3,5-Triallyl-1,3,5-triazin-2,4,6-(1H,3H,5H)trion | TTT | 13,70 |
| 2-Hydroxy-2-methyl-1-phenylpropan-1-on | Omnicure 1173 | 3,13 |
| **Teil B** | | |
| Pentaerythritoltetrakis(3-mercaptopropionat) | PETMP | 40,82 |
| 1-Benzyloctahydropyrrolo[1,2-a]pyrimidin | CGI 90 | 2,04 |

Die Bestandteile des Teil A und des Teils B wurden jeweils bei Raumtemperatur unter Rühren gemischt. Die erhaltenen Teile wurden unter Rühren in einem Mischungsverhältnis 57,14 Gew-% Teil A zu 42,86 Gew% Teil B verrührt.

Beispiel 8: Herstellung eines Epoxythiol-(Meth)acrylat-Hybridsystems umfassend eine photolatente Base

| Teil A | | Gew.-% |
|---|---|---|
| Bisphenol-F-diglycidylether | Rütapox 0158 | 20,13 |
| Bisphenol-A-diglycidylether | Rütapox 0162 | 20,13 |
| 3-Glycidyloxypropyltrimethoxysilan | GPTS | 1,21 |
| Dipropylenglycoldiacrylat | DPGDA | 24,15 |
| 2,6-Di-tert-butyl-4-methylphenol | BHT | 0,40 |
| 2-Hydroxy-2-methyl-1-phenylpropan-1-on | Omnicure 1173 | 2,01 |
| **Teil B** | | |
| Pentaerythritoltetrakis(3-mercaptopropionat) | PETMP | 30,45 |
| 1-Benzyloctahydropyrrolo[1,2-a]pyrimidin | CGI 90 | 1,52 |

Die Bestandteile des Teil A und des Teils B wurden jeweils bei Raumtemperatur unter Rühren gemischt. Die

erhaltenen Teile wurden unter Rühren in einem Mischungsverhältnis 68,03 Gew-% Teil A zu 31,97 Gew% Teil B verrührt.

**II Polymerisation der Fluide**

Zur Polymerisation der nicht erfindungsgemäßen Fluide wurde jeweils ein dünner Film des Fluids unter den in der Tabelle 2 aufgeführten Parametern an Luft belichtet.

Tabelle 2: Parameter zur Polymerisation der nicht erfindungsgemäßen Fluide

| Beispiel | UV-LED, Wellenlänge, nm | UV-LED, Leistung, $mW/cm^2$ | Belichtungsdauer,s | Aushärtung des Epoxid-Anteils |
|---|---|---|---|---|
| 1 | 365 | 80 | 90 | - |
| 2 | 365 | 200 | 60 | - |
| 3 | 365 | 400 | 90 | - |
| 4 | 365 | 100 | 60 | Thermische Epoxid-Härtung: 15 h bei 25°C / 1 h bei 80°C |
| 5 | 365 | 100 | 60 | simultane kationische Epoxid-Härtung |
| 6 | 365 | 200 | 60 | Photoaktivierung der aminkatalysierten Expoxid-Härtung |
| 7 | 365 | 200 | 60 | Photoaktivierung der aminkatalysierten Expoxid-Härtung |
| 8 | 365 | 100 | 60 | Photoaktivierung der aminkatalysierten Expoxid-Härtung |

**III Charakterisierung der Fluide**

IIIa Bestimmung der Stabilität der nicht erfindungsgemäßen Fluide bei Raumtemperatur Zur Bestimmung der Stabilität der Fluide aus den Beispielen 1 wurden diese in geschlossenen Behältern unter Luftatmosphäre in Dunkelheit bei Raumtemperatur gelagert und in regelmäßigen Abständen das Fließverhalten bewertet.

IIIb Bestimmung der Viskosität der nicht erfindungsgemäßen Fluide Die Viskosität der Fluide wurde mit der Hilfe des Rotationsviskosimeters C-VOR der Firma Bohlin Instruments in Kegel-Platte Anordnung (1°-Geometrie) bei einer Scherrate von 100 $s^{-1}$ bestimmt.

IIIe Bestimmung der Brechungsindices der nicht erfindungsgemäßen Fluide

Eine Bestimmung der Brechungsindizes sowie der Dispersion wurde mit Hilfe des Abberefraktometers Abbe 60/ED der Firmal Bellingham & Stanley sowie unterschiedlichen Spektrallampen (Na, Hg, Cd, He) durchgeführt.

Tabelle 3: Eigenschaften der nicht erfindungsgemäßen Fluide

| Beispiel | Viskosität, 25°C mPas | Brechungsindex $n_e^{21}$, Fluid | Brechungsindex $n_e^{21}$, Polymer | Lagerstabilität (25°C, Dunkelheit), Monate |
|---|---|---|---|---|
| 2 | 21 | 1,4632 | 1,5066 | >6 |
| 3 | 12 | 1,5666 | 1,6274 | >6 |
| 6 | nicht bestimmt | nicht bestimmt | 1,628 | nicht bestimmt |

**Patentansprüche**

**1.** Inkjet-Verfahren zur Hestellung eines Brillenglases, welches wenigstens

a) das Bereitstellen wenigstens eines Fluids,

b) das Bereitstellen eines zu bedruckenden Substrats oder eines wieder zu entfernenden Stützmaterials,
c) das Aufbringen wenigstens eines Volumenelements des Fluids aus Schritt a) auf das Substrat oder das Stützmaterial aus Schritt b),
d) die Aktivierung der Reaktion innerhalb des wenigstens einen Volumenelements aus Schritt c),
e) das Aufbringen wenigstens eines weiteren Volumenelements aus Schritt a) benachbart und/oder angrenzend an das wenigstens eine Volumenelement aus Schritt c),
f) das Zusammenfließen, die Verbindung, die Benetzung und/oder den Kontakt der wenigstens zwei benachbart und/oder aneinander angrenzend aufgebrachten Volumenelemente aus Schritt e),
g) die Wiederholung der Schritte e) und f),
h) den Abschluss der Reaktion umfasst und
das Inkjet-Verfahren **dadurch gekennzeichnet ist, dass**

- das Zusammenfließen, die Verbindung, die Benetzung und/oder der Kontakt aus Schritt f) unter Übertragung der Reaktivität zwischen den benachbart und/oder aneinander angrenzend aufgebrachten Volumenelementen erfolgt,
- das Fluid aus Schritt a) wenigstens einen photolatenten Katalysator umfasst.

**2.** Inkjet-Verfahren nach Anspruch 1, **dadurch gekennzeichnet, dass** der photolatente Katalysator wenigstens eine photolatente Säure oder wenigstens eine photolatente Base ist.

**3.** Inkjet-Verfahren nach Anspruch 2, **dadurch gekennzeichnet, dass** das Fluid

- die wenigstens eine photolatente Säure in einem Gesamtanteil aus einem Bereich von 0,001 Gew,-% bis 2 Gew.-%, bezogen auf das Gesamtgewicht des Fluids, oder
- die wenigstens eine photolatente Base in einem Gesamtanteil aus einem Bereich von 0,001 Gew.-% bis 5,0 Gew.-%, bezogen auf das Gesamtgewicht des Fluids,

umfasst.

**4.** Inkjet-Verfahren nach einem der vorstehenden Ansprüche, **dadurch gekennzeichnet, dass** das Substrat ein fertiges Brillenglas oder ein Dünnglas ist.

**5.** Inkjet-Verfahren nach einem der vorstehenden Ansprüche, **dadurch gekennzeichnet, dass** die Aktivierung mittels aktinischer Strahlung oder mittels thermischer Energie erfolgt.

**6.** Verfahren nach einem der vorstehenden Ansprüche, **dadurch gekennzeichnet, dass** die Übertragung der Reaktivität

a) in x/y-Richtung und/oder in z-Richtung oder
b) unabhängig von der x/y-Richtung und unabhängig von der z-Richtung erfolgt.

**7.** Inkjet-Verfahren nach einem der vorstehenden Ansprüche, **dadurch gekennzeichnet, dass** das Zusammenfließen, die Verbindung, die Benetzung, und/oder der Kontakt der wenigstens zwei benachbart aufgebrachten und/oder aneinander angrenzenden Volumenelemente

a) lateral zwischen in x/y-Richtung benachbart aufgebrachten und/oder aneinander angrenzenden Volumenelementen,
b) in z-Richtung zwischen benachbart aufgebrachten und/oder aneinander angrenzenden Volumenelementen, oder
c) unabhängig von der x/y-Richtung und unabhängig von der z-Richtung erfolgt.

**8.** Inkjet-Verfahren nach einem der vorstehenden Ansprüche, welches wenigstens

(i) das Aufbringen von wenigstens zwei benachbart aufgebrachten und/oder aneinander angrenzenden Volumenelementen umfassend das Fluid aus Schritt a) auf das Substrat oder das Stützmaterial aus Schritt b),
(ii) das Zusammenfließen, die Verbindung, die Benetzung und/oder den Kontakt der wenigstens zwei benachbart aufgebrachten und/oder aneinander angrenzenden Volumenelemente aus Schritt i) unter Überführung derselben in wenigstens einen Volumenverbund,

(iii) die Aktivierung der Reaktion des Fluids innerhalb des wenigstens einen Volumenverbunds aus Schritt ii) und Beginn der Reaktion unter Überführung des wenigstens einen Volumenverbunds in wenigstens einen homogenen Volumenverbund, in welchem die Reaktion noch nicht vollständig abgeschlossen ist,
(iv) das Aufbringen wenigstens eines weiteren Volumenelements umfassend das Fluid aus Schritt a) benachbart und/oder angrenzend an den homogenen Volumenverbund aus Schritt iii),
(v) das Zusammenfließen, die Verbindung, die Benetzung und/oder den Kontakt des wenigstens einen weiteren benachbart aufgebrachten und/oder aneinander angrenzenden Volumenelements aus Schritt iv) mit dem homogenen Volumenverbund aus Schritt iii) unter Erweiterung desselben,
(vi) Wiederholung der Schritte iv) und v),
(vii) Abschluss der Reaktion umfasst und
das Inkjet-Verfahren **dadurch gekennzeichnet ist, dass**
das Zusammenfließen, die Verbindung, die Benetzung und/oder der Kontakt aus Schritt v) unter Übertragung der Reaktivität zwischen den benachbart und/oder aneinander angrenzend aufgebrachten Volumenelementen und unter Überführung des wenigstens einen homogenen Volumenverbunds in wenigstens einen finalen Volumenverbund erfolgt.

**9.** Inkjet-Verfahren nach Anspruch 8, **dadurch gekennzeichnet, dass** die Übertragung der Reaktivität ohne erneute Aktivierung erfolgt.

**10.** Inkjet-Verfahren nach einem der vorstehenden Ansprüche 8 oder 9, **dadurch gekennzeichnet, dass** die Überführung der wenigstens zwei benachbart aufgebrachten und/oder aneinander angrenzenden Volumenelemente in einen Volumenverbund

a) lateral zwischen in x/y-Richtung benachbart aufgebrachten und/oder aneinander angrenzenden Volumenelementen erfolgt und der in x/y-Richtung entstandene Volumenverbund durch in z-Richtung aufgebrachte Volumenelemente erweitert wird oder
b) in z-Richtung zwischen benachbart aufgebrachten und/oder aneinander angrenzenden Volumenelementen erfolgt und der in z-Richtung entstandene Volumenverbund durch in x/y-Richtung aufgebrachte Volumenelemente erweitert wird oder
c) unabhängig von der x/y-Richtung und unabhängig von der z-Richtung erfolgt.

**11.** Inkjet-Verfahren nach einem der vorstehenden Ansprüche 8 bis 10, **dadurch gekennzeichnet, dass** die Erweiterung eines in x/y-Richtung vorhandenen Volumenverbunds V oder eines in x/y-Richtung vorhandenen homogenen Volumenverbunds $V_h$

a) die Integration von in z-Richtung aufgebrachten Volumenelementen in einen in x/y-Richtung vorhandenen Volumenverbund V oder in einen in x/y-Richtung vorhandenen homogenen Volumenverbund $V_h$ oder
b) die laterale Überführung in x/y-Richtung von in z-Richtung auf einen bereits in x/y-Richtung vorhandenen Volumenverbund V oder auf einen bereits in x/y-Richtung vorhandenen homogenen Volumenverbund $V_h$ aufgebrachten Volumenelementen in einen weiteren Volumenverbund V1 oder in einen weiteren homogenen Volumenverbund $V_h1$ und dessen anschließende Integration in inen bereits in x/y-Richtung vorhandenen Volumenverbund V oder in einen bereits in x/y-Richtung vorhandenen homogenen Volumenverbund $V_h$ oder
c) die Integration von in z-Richtung aufgebrachten Volumenelementen in einen in x/y-Richtung vorhandenen Volumenverbund V oder in einen in x/y-Richtung vorhandenen Volumenverbund $V_h$ und die gelichzeitige Überführung von in z-Richtung aufgebrachten Volumenelementen in einen Volumenverbund V1 oder in einen homogenen Volumenverbund $V_h1$
oder
dass die Erweiterung eines in z-Richtung entstandenen Volumenverbunds V oder eines in z-Richtung entstandenen homogenen Volumenverbunds $V_h$
d) die Integration von in x,y-Richtung aufgebrachten Volumenelementen in einen in z-Richtung vorhandenen Volumenverbund V oder in einen in z-Richtung vorhandenen homogenen Volumenverbund $V_h$ oder
e) die Überführung in z-Richtung von in x,y-Richtung auf einen bereits in z-Richtung vorhandenen Volumenverbund V oder auf einen bereits in z-Richtung vorhandenen homogenen Volumenverbund $V_h$ aufgebrachten Volumenelementen in einen weiteren Volumenverbund V1 oder in einen weiteren homogenen Volumenverbund $V_h1$ und dessen anschließende Integration in einen bereits in z-Richtung vorhandenen Volumenverbund V oder in einen bereits in z-Richtung vorhandenen homogenen Volumenverbund $V_h$ oder
f) die Integration von in x,y-Richtung aufgebrachten Volumenelementen in einen in z-Richtung vorhandenen Volumenverbund V oder in einen in z-Richtung vorhandenen Volumenverbund $V_h$ und die gleichzeitige Über-

führung von in x,y-Richtung aufgebrachten Volumenelementen in einen Volumenverbund V1 oder in einen homogenen Volumenverbund $V_h$1 umfasst.

**12.** Inkjet-Verfahren nach einem der vorstehenden Ansprüche 8 bis 12, **dadurch gekennzeichnet, dass** ein homogener Volumenverbund entsteht, wenn die Reaktion

a) innerhalb wenigstens eines Volumenelements und zwischen benachbart aufgebrachten und/oder aneinander angrenzenden Volumenelementen, oder
b) innerhalb wenigstens eines Volumenverbunds und die Reaktion zwischen diesem wenigstens einen Volumenverbund und wenigstens einem Volumenelement sowie die Reaktion innerhalb des wenigstens einen Volumenelements, oder
c) innerhalb aneinander angrenzender und/oder benachbart aufgebrachter Volumenverbunde und zwischen aneinander angrenzenden und/oder benachbart aufgebrachten Volumenverbunden

jeweils nicht vollständig abgeschlossen ist.

**13.** Inkjet-Verfahren nach einem der vorstehenden Ansprüche 8 bis 13, **dadurch gekennzeichnet, dass** ein finaler Volumenverbund entsteht, wenn die Reaktion

a) innerhalb eines Volumenelements zunächst nicht vollständig abgeschlossen ist, die Reaktion zwischen benachbart aufgebrachten und/oder zwischen aneinander angrenzenden Volumenelementen nicht vollständig abgeschlossen ist und die Reaktivität zwischen benachbart aufgebrachten und/oder zwischen aneinander angrenzenden Volumenelementen übertragen wird, oder
b) innerhalb wenigstens eines homogenen Volumenverbunds zunächst nicht vollständig abgeschlossen ist, die Reaktion zwischen benachbart aufgebrachten und/oder zwischen aneinander angrenzenden homogenen Volumenverbunden zunächst nicht vollständig abgeschlossen ist und die Reaktivität zwischen benachbart aufgebrachten und/oder zwischen aneinander angrenzenden homogenen Volumenverbunden übertragen wird, oder
c) innerhalb wenigstens eines homogenen Volumenverbunds zunächst nicht vollständig abgeschlossen ist, die Reaktion zwischen wenigstens einem homogenen Volumenverbund und wenigstens einem benachbart aufgebrachten und/oder angrenzenden Volumenverbund zunächst nicht vollständig abgeschlossen ist, die Reaktivität zwischen dem homogenen Volumenverbund und dem benachbart aufgebrachten und/oder angrenzenden Volumenverbund übertragen wird, oder
d) innerhalb eines Volumenelements zunächst nicht vollständig abgeschlossen ist, die Reaktion zwischen diesem einen Volumenelement und einem benachbart aufgebrachten und/oder an dieses eine Volumenelement angrenzenden Volumenverbund zunächst nicht vollständig abgeschlossen ist, die Reaktivität von diesem einen Volumenelement auf den benachbart aufgebrachten und/oder auf den angrenzenden Volumenverbund übertragen wird, oder
e) innerhalb wenigstens eines homogenen Volumenverbunds zunächst nicht vollständig abgeschlossen ist, die Reaktion zwischen diesem wenigstens einen homogenen Volumenverbund und wenigstens einem benachbart aufgebrachten und/oder angrenzenden wenigstens einen Volumenelement zunächst nicht vollständig abgeschlossen ist und die Reaktivität von diesem einen homogenen Volumenverbund auf das wenigstens eine benachbart aufgebrachte und/oder angrenzende Volumenelement übertragen wird, oder
f) innerhalb wenigstens eines homogenen Volumenverbunds und innerhalb wenigstens eines Volumenelements jeweils zunächst nicht vollständig abgeschlossen ist, die Reaktion zwischen diesem wenigstens einen homogenen Volumenverbund und wenigstens einem benachbart aufgebrachten und/oder angrenzenden wenigstens einen Volumenelement zunächst nicht vollständig abgeschlossen ist und die Reaktivität zwischen diesem wenigstens einen homogenen Volumenverbund und dem wenigstens einen benachbart aufgebrachten und/oder angrenzenden Volumenelement übertragen wird

und die Reaktion jeweils nach Übertragung der Reaktivität abgeschlossen wird.

**14.** Verfahren nach einem der vorstehenden Ansprüche, **dadurch gekennzeichnet, dass** das Substrat nach Ausbildung des finalen Volumenverbunds in Schritt vii) mit dem finalen Volumenverbund verbunden bleibt oder von dem finalen Volumenverbund abgetrennt wird.

**15.** Verfahren nach einem der vorstehenden Ansprüche, **dadurch gekennzeichnet, dass** die Volumenelemente wenigstens ein Fluid umfassen, welches ausgewählt ist aus der Gruppe bestehend aus

- einem Epoxythiol-Thiol-/En-Hybridsystem umfassend wenigstens eine photolatente Base,
- einem Epoxythiol-(Meth)Acrylat-Hybridsystem umfassend wenigstens eine photolatente Base,
- einem Epoxy-Polyol-System umfassend wenigstens eine photolatente Säure,
- einem Epoxythiol-System umfassend wenigstens eine photolatente Base.

## Claims

**1.** Inkjet method of producing a spectacle lens, comprising at least

a)the providing of at least one fluid,
b)the providing of a substrate to be printed or of a support material to be removed again,
c)the applying of at least one volume element of the fluid from step a) to the substrate or the support material from step b),
d)the activating of the reaction within the at least one volume element from step c),
e)the applying of at least one further volume element from step a) adjacent to and/or adjoining the at least one volume element from step c),
f)the coalescence, bonding, wetting and/or contact of the at least two adjacently and/or mutually adjoiningly applied volume elements from step e),
g)the repetition of steps e) and f),
h)the conclusion of the reaction, and
the inkjet method is **characterized in that**

- the coalescence, bonding, wetting and/or contact from step f) is effected with transmission of the reactivity between the adjacently and/or mutually adjoiningly applied volume elements,
- the fluid from step a) comprises at least one photolatent catalyst.

**2.** Inkjet method according to Claim 1, **characterized in that** the photolatent catalyst is at least one photolatent acid or at least one photolatent base.

**3.** Inkjet method according to Claim 2, **characterized in that** the fluid comprises

- the at least one photolatent acid in a total proportion from a range from 0.001% by weight to 2% by weight, based on the total weight of the fluid, or
- the at least one photolatent base in a total proportion from a range from 0.001% by weight to 5.0% by weight, based on the total weight of the fluid.

**4.** Inkjet method according to any of the preceding claims, **characterized in that** the substrate is a finished spectacle lens or a thin lens.

**5.** Inkjet method according to any of the preceding claims, **characterized in that** the activation is effected by means of actinic radiation or by means of thermal energy.

**6.** Method according to any of the preceding claims, **characterized in that** the reactivity is transmitted

a) in x/y direction and/or in z direction
b)independently of x/y direction and independently of z direction.

**7.** Inkjet method according to any of the preceding claims, **characterized in that** the coalescence, bonding, wetting and/or contact of the at least two adjacently applied and/or mutually adjoining volume elements is effected

a)laterally between volume elements adjacently applied and/or mutually adjoining in x/y direction,
b)in z direction between volume elements adjacently applied and/or mutually adjoining, or
c) independently of x/y direction and independently of z direction.

**8.** Inkjet method according to any of the preceding claims, comprising at least

(i) the applying of at least two adjacently applied and/or mutually adjoining volume elements comprising the

fluid from step a) to the substrate or the support material from step b),
(ii) the coalescence, bonding, wetting and/or contact of the at least two adjacently applied and/or mutually adjoining volume elements from step i) with transformation thereof to at least one volume composite,
(iii) the activating of the reaction of the fluid within the at least one volume composite from step ii) and commencement of the reaction with transformation of the at least one volume composite to at least one homogeneous volume composite in which the reaction is still incomplete,
(iv) the applying of at least one further volume element comprising the fluid from step a) adjacent to and/or adjoining the homogeneous volume composite from step iii),
(v) the coalescence, bonding, wetting and/or contact of the at least one further adjacently applied and/or mutually adjoining volume element from step iv) with the homogeneous volume composite from step iii) to extend the latter,
(vi) repetition of steps iv) and v),
(vii) conclusion of the reaction, and
the inkjet method is **characterized in that** the coalescence, bonding, wetting and/or contact from step v) is effected with transmission of the reactivity between the adjacently and/or mutually adjoiningly applied volume elements and with transformation of the at least one homogeneous volume composite to at least one final volume composite.

**9.** Inkjet method according to Claim 8, **characterized in that** the reactivity is transmitted without reactivation.

**10.** Inkjet method according to either of the preceding Claims 8 and 9, **characterized in that** the at least two adjacently applied and/or mutually adjoining volume elements are converted to a volume composite

a)laterally between volume elements adjacently applied and/or mutually adjoining in x/y direction and the volume composite formed in x/y direction is extended by volume elements applied in z direction or
b)in z direction between volume elements adjacently applied and/or mutually adjoining and the volume composite formed in z direction is extended by volume elements applied in x/y direction or
c)independently of x/y direction and independently of z direction.

**11.** Inkjet method according to any of the preceding Claims 8 to 10, **characterized in that** the extension of a volume composite V present in x/y direction or of a homogeneous volume composite $V_h$ present in x/y direction comprises

a)integration of volume elements applied in z direction into a volume composite V present in x/y direction or into a homogeneous volume composite $V_h$ present in x/y direction or
b)lateral transformation in x/y direction of volume elements applied in z direction to a volume composite V already present in x/y direction or to a homogeneous volume composite $V_h$ already present in x/y direction to a further volume composite V1 or to a further homogeneous volume composite $V_h1$ and subsequent integration thereof into a volume composite V already present in x/y direction or into a homogeneous volume composite $V_h$ already present in x/y direction or
c) integration of volume elements applied in z direction into a volume composite V present in x/y direction or into a volume composite $V_h$ present in x/y direction and simultaneous transformation of volume elements applied in z direction to a volume composite V1 or to a homogeneous volume composite $V_h1$
or
**in that** the extension of a volume composite V formed in z direction or of a homogeneous volume composite $V_h$ formed in z direction comprises
d) integration of volume elements applied in x,y direction into a volume composite V present in z direction or into a homogeneous volume composite $V_h$ present in z direction or
e) transformation in z direction of volume elements applied in x,y direction to a volume composite V already present in z direction or to a homogeneous volume composite $V_h$ already present in z direction to a further volume composite V1 or to a further homogeneous volume composite $V_h1$ and subsequent integration thereof into a volume composite V already present in z direction or into a homogeneous volume composite $V_h$ already present in z direction or
f)integration of volume elements applied in x,y direction into a volume composite V present in z direction or into a volume composite $V_h$ present in z direction and simultaneous conversion of volume elements applied in x,y direction to a volume composite V1 or to a homogeneous volume composite $V_h1$.

**12.** Inkjet method according to any of the preceding Claims 8 to 12, **characterized in that** a homogeneous volume composite is formed when the reaction

a) within at least one volume element and between adjacently applied and/or mutually adjoining volume elements, or
b)within at least one volume composite and the reaction between this at least one volume composite and at least one volume element, and the reaction within the at least one volume element, or
c)within mutually adjoining and/or adjacently applied volume composites and between mutually adjoining and/or adjacently applied volume composites has in each case not fully concluded.

**13.** Inkjet method according to any of the preceding Claims 8 to 13, **characterized in that** a final volume composite is formed when the reaction

a)within a volume element is at first not fully concluded, the reaction between adjacently applied and/or between mutually adjoining volume elements is not fully concluded and the reactivity is transmitted between adjacently applied and/or between mutually adjoining volume elements, or
b)within at least one homogeneous volume composite is at first not fully concluded, the reaction between adjacently applied and/or between mutually adjoining homogeneous volume composites is at first not fully concluded and the reactivity is transmitted between adjacently applied and/or between mutually adjoining homogeneous volume composites, or
c)within at least one homogeneous volume composite is at first not fully concluded, the reaction between at least one homogeneous volume composite and at least one adjacently applied and/or adjoining volume composite is at first not fully concluded, the reactivity is transmitted between the homogeneous volume composite and the adjacently applied and/or adjoining volume composite, or
d)within a volume element is at first not fully concluded, the reaction between this one volume element and an adjacently applied volume composite and/or one adjoining said one volume element is at first not fully concluded, the reactivity is transmitted from this one volume element to the adjacently applied and/or to the adjoining volume composite, or
e)within at least one homogeneous volume composite is at first not fully concluded, the reaction between this at least one homogeneous volume composite and at least one adjacently applied and/or adjoining at least one volume element is at first not fully concluded, and the reactivity is transmitted from this one homogeneous volume composite to the at least one adjacently applied and/or adjoining volume element, or
f)within at least one homogeneous volume composite and within at least one volume element is in each case at first not fully concluded, the reaction between this at least one homogeneous volume composite and at least one adjacently applied and/or adjoining at least one volume element is at first not fully concluded, and the reactivity is transmitted between this at least one homogeneous volume composite and the at least one adjacently applied and/or adjoining volume element,

and the reaction in each case is concluded after transmission of the reactivity.

**14.** Method according to any of the preceding claims, **characterized in that** the substrate, after formation of the final volume composite in step vii), remains bonded to the final volume composite or is divided from the final volume composite.

**15.** Method according to any of the preceding claims, **characterized in that** the volume elements comprise at least one fluid which is selected from the group consisting of

- an epoxythiol-thiol/ene hybrid system comprising at least one photolatent base,
- an epoxythiol-(meth)acrylate hybrid system comprising at least one photolatent base,
- an epoxy-polyol system comprising at least one photolatent acid,
- an epoxythiol system comprising at least one photolatent base.

## Revendications

**1.** Procédé au jet d'encre de fabrication d'un verre de lunettes, qui comprend au moins

a) la fourniture d'au moins un fluide,
b) la fourniture d'un substrat à imprimer ou d'un matériau à rééliminer,
c) l'application d'au moins un élément de volume du fluide de l'étape a) sur le substrat ou le matériau support de l'étape b),

d) l'activation de la réaction à l'intérieur de l'au moins un élément de volume de l'étape c),
e) l'application d'au moins un autre élément de volume de l'étape a), au voisinage et/ou adjacent à l'au moins un élément de volume de l'étape c),
f) la réunion, l'assemblage, le mouillage et/ou la mise en contact des au moins deux éléments de volume appliqués voisins et/ou adjacents l'un à l'autre de l'étape e),
g) la répétition des étapes e) et f),
h) l'achèvement de la réaction, et
le procédé au jet d'encre étant **caractérisé en ce que**

- la réunion, l'assemblage, le mouillage et/ou la mise en contact de l'étape f) s'effectuent par transfert de la réactivité entre les éléments de volume appliqués voisins et/ou adjacents l'un à l'autre,
- le fluide de l'étape a) comprend au moins un catalyseur photolatent.

**2.** Procédé au jet d'encre selon la revendication 1, **caractérisé en ce que** le catalyseur photolatent est au moins un acide photolatent ou au moins une base photolatente.

**3.** Procédé au jet d'encre selon la revendication 2, **caractérisé en ce que** le fluide comprend

- l'au moins un acide photolatent selon une proportion totale dans la plage de 0,001 % en poids à 2 % en poids par rapport au poids total du fluide, ou
- l'au moins une base photolatente selon une proportion totale dans la plage de 0,001 % en poids à 5,0% en poids par rapport au poids total du fluide.

**4.** Procédé au jet d'encre selon l'une des revendications précédentes, **caractérisé en ce que** le substrat est un verre de lunettes fini ou un verre mince.

**5.** Procédé au jet d'encre selon l'une des revendications précédentes, **caractérisé en ce que** l'activation a lieu à l'aide d'un rayonnement actinique ou d'une énergie thermique.

**6.** Procédé selon l'une des revendications précédentes, **caractérisé en ce que** le transfert de la réactivité a lieu

a) dans la direction x/y et/ou dans la direction z, ou
b) indépendamment de la direction x/y et indépendamment de la direction z.

**7.** Procédé au jet d'encre selon l'une des revendications précédentes, **caractérisé en ce que** la réunion, l'assemblage, le mouillage et/ou la mise en contact des au moins deux éléments de volume appliqués voisins et/ou adjacents l'un à l'autre, a lieu

a) latéralement entre des éléments de volume appliqués voisins dans la direction x/y et/ou adjacents l'un à l'autre,
b) dans la direction z, entre des éléments de volume appliqués voisins et/ou adjacents l'un à l'autre, ou
c) indépendamment de la direction x/y et indépendamment de la direction z.

**8.** Procédé au jet d'encre selon l'une des revendications précédentes, qui comprend au moins

(i) l'application d'au moins deux éléments de volume appliqués voisins et/ou adjacents l'un à l'autre, comprenant le fluide de l'étape a), sur le substrat ou le matériau support de l'étape b),
(ii) la réunion, l'assemblage, le mouillage et/ou la mise en contact des au moins deux éléments de volume appliqués voisins et/ou adjacents l'un à l'autre de l'étape i), avec transfert de ces éléments en au moins un volume composite,
(iii) l'activation de la réaction du fluide à l'intérieur de l'au moins un volume composite de l'étape ii) et début de la réaction, avec transformation de l'au moins un volume composite en au moins un volume composite homogène, dans lequel la réaction n'est pas encore complètement achevée,
(iv) l'application d'au moins un autre élément de volume comprenant le fluide de l'étape a) au voisinage et/ou adjacent au volume composite homogène de l'étape iii),
(v) la réunion, l'assemblage, le mouillage et/ou la mise en contact de l'au moins un autre élément de volume appliqué voisins et/ou adjacents l'un à l'autre de l'étape iv) avec le volume composite homogène de l'étape iii), avec élargissement de ce dernier,
(vi) répétition des étapes iv) et v),

(vii) achèvement de la réaction, et

le procédé au jet d'encre étant **caractérisé en ce que** la réunion, l'assemblage, le mouillage et/ou la mise en contact de l'étape v) s'effectuent avec transfert de la réactivité entre les éléments de volume appliqués voisins et/ou adjacents l'un à l'autre, et avec transformation de l'au moins un volume composite homogène en au moins un volume composite final.

**9.** Procédé au jet d'encre selon la revendication 8, **caractérisé en ce que** le transfert de la réactivité s'effectue sans nouvelle activation.

**10.** Procédé au jet d'encre selon l'une des revendications précédentes 8 ou 9, **caractérisé en ce que** la transformation des au moins deux éléments de volume appliqués voisins et/ou adjacents l'un à l'autre en un volume composite a lieu

a) latéralement entre des éléments de volume appliqués voisins dans la direction x/y et/ou adjacents l'un à l'autre, et le volume composite créé dans la direction x/y est élargi par des éléments de volume appliqués dans la direction z, ou
b) a lieu dans la direction z, entre des éléments de volume appliqués voisins et/ou adjacents l'un à l'autre, et le volume composite créé dans la direction z est élargi par des éléments de volume appliqués dans la direction x/y, ou
c) a lieu indépendamment de la direction x/y et indépendamment de la direction z.

**11.** Procédé au jet d'encre selon l'une des revendications précédentes 8 à 10, **caractérisé en ce que** l'élargissement d'un volume composite V présent dans la direction x/y ou d'un volume composite homogène $V_h$ présent dans la direction x/y comprend

a) l'intégration d'éléments de volume appliqués dans la direction z en un volume composite V présent dans la direction x/y ou en un volume composite homogène $V_h$ présent dans la direction x/y, ou
b) la transformation latérale dans la direction x/y d'éléments de volume appliqués dans la direction z sur un volume composite V déjà présent dans la direction x/y ou sur un volume composite homogène $V_h$ déjà présent dans la direction x/y, en un autre volume composite V1 ou en un autre volume composite homogène $V_h1$ puis son intégration en un volume composite homogène $V_h$ déjà présent dans la direction x/y ou en un volume composite homogène $V_h$ déjà présent dans la direction x/y, ou
c) l'intégration d'éléments de volume appliqués dans la direction z en un volume composite V présent dans la direction x/y ou en un volume composite $V_h$ présent dans la direction x/y, et la transformation simultanée d'éléments de volume appliqués dans la direction z en un volume composite V1 ou en un volume composite homogène $V_h1$
ou
**en ce que** l'élargissement d'un volume composite V créé dans la direction z ou d'un volume composite homogène $V_h$ créé dans la direction z comprend
d) l'intégration d'éléments de volume appliqués dans la direction x,y en un volume composite V présent dans la direction z ou en un volume composite homogène $V_h$ présent dans la direction z ou
e) la transformation dans la direction z d'éléments de volume appliqués dans la direction z sur un volume composite V déjà présent dans la direction z ou sur un volume composite homogène $V_h$ déjà présent dans la direction z, en un autre volume composite V1 ou en un autre volume composite homogène $V_h1$, puis son intégration en un volume composite V déjà présent dans la direction z ou en un volume composite homogène $V_h$ déjà présent dans la direction z, ou
f) l'intégration d'éléments de volume appliqués dans la direction x,y en un volume composite V présent dans la direction z ou en un volume composite $V_h$ présent dans la direction z, et la transformation simultanée d'éléments de volume appliqués dans la direction x,y en un volume composite V1 ou en un volume composite homogène $V_h1$.

**12.** Procédé au jet d'encre selon l'une des revendications précédentes 8 à 12, **caractérisé en ce qu'**il se crée un volume composite homogène, si la réaction

a) entre au moins un élément de volume et entre des éléments de volume appliqués voisins et/ou adjacents l'un à l'autre, ou
b) à l'intérieur d'au moins un volume composite, et la réaction entre cet au moins un volume composite et cet au moins un élément de volume, ou la réaction à l'intérieur de l'au moins un élément de volume, ou

c) à l'intérieur de composites en volume adjacents l'un à l'autre et/ou appliqués voisins, et entre des composites en volume adjacents l'un à l'autre et/ou appliqués voisins,

n'est, dans chaque cas, pas complètement achevée.

**13.** Procédé au jet d'encre selon l'une des revendications précédentes 8 à 13, **caractérisé en ce qu'**il se crée un volume composite final si la réaction

a) à l'intérieur d'un élément de volume n'est d'abord pas entièrement achevée, si la réaction entre des éléments de volume appliqués voisins et/ou adjacents l'un à l'autre n'est pas entièrement achevée, et si la réactivité entre des éléments de volume appliqués voisins et/ou adjacents l'un à l'autre est transférée, ou
b) à l'intérieur d'au moins un volume composite homogène, n'est d'abord pas entièrement achevée, si la réaction entre des composites en volume homogènes appliqués voisins et/ou adjacents l'un à l'autre n'est d'abord pas entièrement achevée, et si la réactivité entre des composites en volume homogènes appliqués voisins et/ou adjacents l'un à l'autre, est transmise, ou
c) à l'intérieur d'au moins un volume composite homogène, d'abord n'est pas entièrement achevée, si la réaction entre au moins un volume composite homogène et au moins un volume composite appliqués voisins, et/ou adjacents, n'est d'abord pas entièrement achevée, si la réactivité entre le volume composite homogène et le volume composite appliqués voisins et/ou adjacents est transférée, ou
d) à l'intérieur d'un élément de volume, d'abord n'est pas entièrement achevée, si la réaction entre cet un élément de volume et un volume composite appliqué voisin et/ou adjacent à cet élément de volume, n'est d'abord pas entièrement achevée, si la réactivité de cet élément de volume est transférée au volume composite appliqué voisin et/ou adjacent, ou
e) à l'intérieur d'au moins un volume composite homogène, d'abord n'est pas entièrement achevée, si la réaction entre cet au moins un volume composite homogène et au moins un élément de volume appliqués voisins et/ou adjacents, n'est d'abord pas entièrement achevée, et si la réactivité de ce volume composite homogène est transférée sur l'au moins un élément de volume appliqué voisin et/ou adjacent, ou
f) à l'intérieur d'au moins un volume composite homogène et à l'intérieur d'au moins un élément de volume, n'est d'abord dans chaque cas pas entièrement achevée, si la réaction entre cet au moins un volume composite homogène et au moins un élément de volume appliqués voisins et/ou adjacents, n'est d'abord pas entièrement achevée, et si la réactivité entre cet au moins un volume composite homogène et l'au moins un élément de volume appliqués voisins et/ou adjacents, est transférée,

et la réaction, dans chaque cas, est achevée après transfert de la réactivité.

**14.** Procédé selon l'une des revendications précédentes, **caractérisé en ce que** le substrat, après formation du volume composite final dans l'étape vii), reste assemblé au volume composite final ou est séparé du volume composite final.

**15.** Procédé selon l'une des revendications précédentes, **caractérisé en ce que** les éléments de volume comprennent au moins un fluide qui est choisi dans le groupe consistant en

- un système hybride époxythiol-thiol-/ène comprenant au moins une base photolatente,
- un système hybride époxythiol-(méth)acrylate comprenant au moins une base photolatente,
- un système époxy-polyol comprenant au moins un acide photolatent,
- un système époxythiol comprenant au moins une base photolatente.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1674243 A2
- EP 1847377 A2
- EP 2846983 A1
- US 20160167323 A1
- US 20040008319 A1
- US 20050046957 A1
- US 2018354249 A1
- EP 2093269 A1
- WO 2005017482 A1
- WO 03033500 A1
- WO 2008119688 A1
- DE 102012210185 A1
- WO 2009056196 A1
- WO 2015121341 A1

### In der Beschreibung aufgeführte Nicht-Patentliteratur

- *CHEMICAL ABSTRACTS,* 68609-96-1
- *CHEMICAL ABSTRACTS,* 68609-97-2